(19)

**Europäisches Patentamt**
**European Patent Office**
**Office européen des brevets**

(11) **EP 4 539 362 A1**

(12) **EUROPEAN PATENT APPLICATION**
published in accordance with Art. 153(4) EPC

(43) Date of publication:
**16.04.2025 Bulletin 2025/16**

(21) Application number: **23834882.5**

(22) Date of filing: **05.07.2023**

(51) International Patent Classification (IPC):
**H04B 17/382** (2015.01)     **H04L 25/49** (2006.01)

(52) Cooperative Patent Classification (CPC):
**H04B 1/04; H04B 17/382; H04L 25/49**

(86) International application number:
**PCT/CN2023/105859**

(87) International publication number:
**WO 2024/008115 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.07.2022   CN 202210789946
11.11.2022   CN 202211415670
29.11.2022   CN 202211510585**

(71) Applicant: **Huawei Technologies Co., Ltd.
Shenzhen, Guangdong 518129 (CN)**

(72) Inventors:
• **PENG, Xiaohui**
**Shenzhen, Guangdong 518129 (CN)**
• **QIAN, Bin**
**Shenzhen, Guangdong 518129 (CN)**
• **YANG, Xun**
**Shenzhen, Guangdong 518129 (CN)**
• **DONG, Mingjie**
**Shenzhen, Guangdong 518129 (CN)**
• **YAN, Min**
**Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD, COMMUNICATION APPARATUS, AND COMPUTER-READABLE STORAGE MEDIUM**

(57)    This application discloses a communication method, a communication apparatus, and a computer-readable storage medium. This application is applied to a wireless local area network system supporting 802.11 series protocols such as a next-generation Wi-Fi protocol of IEEE 802.11ax like 802.11be, 802.15.4z, 802.15.4ab, Wi-Fi 7, or EHT, and a next generation of 802.11be like Wi-Fi 8, and may be further applied to an ultra-wideband UWB-based wireless personal area network system and a sensing (sensing) system. The method includes: generating a transmit signal, where a peak value of a first sidelobe of the transmit signal falls within a first peak value range; and sending the transmit signal, where the transmit signal is used for ranging, angle measurement, or Doppler measurement. In embodiments of this application, the peak value of the first sidelobe of the transmit signal falls within the first peak value range, so that impact of a line of sight path of the transmit signal on a non-line of sight path of the transmit signal can be reduced.

FIG. 10

## Description

This application claims priorities to Chinese Patent Application No. 202210789946.5, filed with the China National Intellectual Property Administration on July 6, 2022 and entitled "COMMUNICATION METHOD, COMMUNICATION APPARATUS, AND COMPUTER-READABLE STORAGE MEDIUM", to Chinese Patent Application No. 202211415670.0, filed with the China National Intellectual Property Administration on November 11, 2022 and entitled "COMMUNICATION METHOD, COMMUNICATION APPARATUS, AND COMPUTER-READABLE STORAGE MEDIUM", and to Chinese Patent Application No. 202211510585.2, filed with the China National Intellectual Property Administration on November 29, 2022 and entitled "COMMUNICATION METHOD, COMMUNICATION APPARATUS, AND COMPUTER-READABLE STORAGE MEDIUM", all of which are incorporated herein by reference in their entireties.

## TECHNICAL FIELD

This application relates to the communication field, and in particular, to a communication method, a communication apparatus, and a computer-readable storage medium.

## BACKGROUND

An ultra-wideband (ultra-wideband, UWB) technology is a wireless carrier communication technology that uses a nanosecond-level non-sinusoidal wave narrow pulse to transmit data. Therefore, an ultra-wideband occupies a wide spectrum range. Due to a narrow pulse and an extremely low radiation spectral density of the ultra-wideband, a UWB system has advantages of a strong multipath resolution capability, low power consumption, high confidentiality, and the like.

The Institute of Electrical and Electronics Engineers (institute of electrical and electronics engineers, IEEE) has included the UWB technology into its IEEE 802 series wireless standards, and has released the UWB technology-based high-speed wireless personal area network (WPAN) standard IEEE 802.15.4a and an evolved version IEEE 802.15.4z of IEEE 802.15.4a. Currently, formulation of the next-generation UWB wireless personal area network (WPAN) standard 802.15.4ab is under discussion.

One of the key topics that 802.15.4ab focuses on is to use a UWB signal (or referred to as a UWB pulse) for sensing. In sensing application, information such as a distance, an angle, and a speed of a target is obtained by detecting an echo of a UWB signal on the target. A pulse shape of the UWB signal affects both ranging performance and sensing performance of the UWB signal. Therefore, a UWB signal with both strong ranging performance and strong sensing performance needs to be studied.

## SUMMARY

Embodiments of this application disclose a communication method, a communication apparatus, and a computer-readable storage medium. A pulse shape whose peak value of a first sidelobe falls within a first peak value range is used. Therefore, both ranging performance and sensing performance are strong.

According to a first aspect, an embodiment of this application provides a communication method. The method includes: generating a transmit signal, where a peak value of a first sidelobe of the transmit signal falls within a first peak value range, and the first peak value range is [0.15, 0.3); and sending the transmit signal.

In this embodiment of this application, the peak value of the first sidelobe of the transmit signal falls within the first peak value range, so that impact of a line of sight path of the transmit signal on a non-line of sight path of the transmit signal can be reduced, and not only ranging performance can be ensured, but also Doppler measurement performance, namely, sensing performance, can be ensured.

In a possible implementation, the transmit signal is a UWB signal (or namely, a UWB pulse).

In this implementation, the transmit signal is the UWB signal. Using the UWB signal for ranging, angle measurement, or Doppler measurement has advantages such as a strong multipath resolution capability, low power consumption, and high confidentiality.

In a possible implementation, a peak value of a second sidelobe of the transmit signal falls within a second peak value range, and the second peak value range is [0.15, 0.3).

In this implementation, the peak value of the second sidelobe of the transmit signal falls within the second peak value range, and the transmit signal is used for ranging, angle measurement, or Doppler measurement, so that measurement precision on a transmit path (or namely, a reflected signal) can be improved.

In a possible implementation, a width corresponding to a main lobe of the transmit signal is less than 2.25*Tp, where Tp=1/B, and B represents a bandwidth of a channel occupied by the transmit signal.

In this implementation, the width corresponding to the main lobe of the transmit signal is less than 2.25*Tp. In this way, a ranging resolution capability can be ensured, and a plurality of targets with close spatial distances can be distinguished.

In a possible implementation, an absolute value of a difference between a width corresponding to the first sidelobe and the width corresponding to the main lobe is less than a width threshold. The width threshold may be 5%, 8%, 10%, 15%, 20%, or the like of the width corresponding to the main lobe. This is not limited in this embodiment of this application.

In this implementation, the absolute value of the difference between the width corresponding to the first sidelobe and the width corresponding to the main lobe is less than the width threshold. In this way, sidelobe energy can be reduced, and sidelobe energy leakage can be reduced.

In a possible implementation, the generating a transmit signal includes: generating the transmit signal based on a time domain mask, where the time domain mask is used to limit the peak value of the first sidelobe of the transmit signal.

In this implementation, the transmit signal is generated based on the time domain mask, so that the peak value of the first sidelobe of the generated transmit signal meets a limitation (or a constraint) of the time domain mask.

In a possible implementation, the time domain mask is further used to limit the peak value of the second sidelobe of the transmit signal.

In this implementation, the time domain mask is further used to limit the peak value of the second sidelobe of the transmit signal, to ensure sensing performance of the generated transmit signal.

In a possible implementation, the method further includes: sending indication information, where the indication information indicates pulse shape information of the transmit signal.

In this implementation, the indication information is sent, so that a receive end performs interference cancellation based on a pulse shape of a UWB signal transmitted by the receive end, thereby improving ranging performance or sensing performance.

In a possible implementation, the indication information includes a first field, where the first field indicates a pulse shape set to which a pulse shape of the transmit signal belongs.

In this implementation, the indication information includes the first field, and the pulse shape set to which the transmit signal belongs may be accurately indicated by the first field.

In a possible implementation, the indication information includes a second field, where the second field indicates the pulse shape of the transmit signal.

In this implementation, the indication information includes the second field, and the pulse shape of the transmit signal may be accurately indicated by the second field.

In a possible implementation, the indication information includes a third field, where the third field indicates a generation manner of the transmit signal.

In this implementation, the third field indicates the generation manner of the transmit signal, so that the receive end further determines the pulse shape of the transmit signal, and performs interference cancellation based on the pulse shape of the transmit signal.

In a possible implementation, the first field indicates that a pulse shape of a UWB signal transmitted by a transmit end belongs to a first pulse shape set or a second pulse shape set, a PSLR of a pulse shape in the first pulse shape set is less than a reference threshold, a PSLR of a pulse shape in the second pulse shape set is greater than or equal to the reference threshold, and the reference threshold may be 25 dB, 28 dB, 30 dB, or the like.

In this implementation, the transmit end may correspondingly perform ranging, angle measurement, or Doppler measurement based on the pulse shape in the first pulse shape set or the pulse shape in the second pulse shape set based on an actual requirement, to meet requirements of different scenarios.

In a possible implementation, the first sidelobe is adjacent to the main lobe in the transmit signal and is located on a right side of the main lobe.

In this implementation, a peak value of a sidelobe adjacent to the right side of the main lobe falls within the first peak value range, so that impact of a line of sight path of the transmit signal on a non-line of sight path of the transmit signal can be reduced, and both ranging performance and Doppler measurement performance can be ensured.

In a possible implementation, the first sidelobe is a lowest trough, namely, a trough that is the lowest, in the pulse shape of the transmit signal, and the peak value of the first sidelobe is a smallest trough value corresponding to the pulse shape of the transmit signal.

In this implementation, an absolute value of the smallest trough value corresponding to the pulse shape of the transmit signal falls within the first peak value range, so that impact of a line of sight path of the transmit signal on a non-line of sight path of the transmit signal can be reduced, and both ranging performance and Doppler measurement performance can be ensured.

In a possible implementation, the second sidelobe is a sidelobe with a highest peak value on a right side of the first sidelobe.

In this implementation, a peak value of a sidelobe with a highest peak value on the right side of the first sidelobe falls within the first peak value range, so that impact of a line of sight path of the transmit signal on a non-line of sight path of the transmit signal can be reduced, and both ranging performance and Doppler measurement performance can be ensured.

In a possible implementation, any peak value (namely, a value of any peak) on the right side of the first sidelobe in the pulse shape of the transmit signal is less than or equal to a first value, and any trough value (namely, a value of any trough) on the right side of the first sidelobe is greater than or equal to a third value. In other words, an upper boundary of a pulse shape on the right side of the first sidelobe is the first value, and a lower boundary of the pulse shape on the right side of the first sidelobe is the third value.

In this implementation, impact of a line of sight path of the transmit signal on a non-line of sight path of the transmit signal can be reduced, and both ranging performance and Doppler measurement performance can be ensured.

According to a second aspect, an embodiment of this application provides another communication method. The method includes: receiving a transmit signal, where a peak value of a first sidelobe of the transmit signal falls with a first peak value range, and the first peak value range is [0.15, 0.3]; and performing signal processing based on the transmit signal.

In this embodiment of this application, the peak value of the first sidelobe of the transmit signal falls within the first peak value range, so that impact of a line of sight path of the transmit signal on a non-line of sight path of the transmit signal can be reduced, and both ranging performance and Doppler measurement performance can be ensured.

In a possible implementation, the transmit signal is a UWB signal (or namely, a UWB pulse).

In this implementation, the transmit signal is the UWB signal. Using the UWB signal for ranging, angle measurement, or Doppler measurement has advantages such as a strong multipath resolution capability, low power consumption, and high confidentiality.

In a possible implementation, a peak value of a second sidelobe of the transmit signal falls within a second peak value range, and the second peak value range is [0.15, 0.3).

In this implementation, the peak value of the second sidelobe of the transmit signal falls within the second peak value range, and the transmit signal is used for ranging, angle measurement, or Doppler measurement, so that measurement precision on a transmit path (or namely, a reflected signal) can be improved.

In a possible implementation, a width corresponding to a main lobe of the transmit signal is less than 2.25*Tp, where Tp=1/B, and B represents a bandwidth of a channel occupied by the transmit signal.

In this implementation, the width corresponding to the main lobe of the transmit signal is less than 2.25*Tp. In this way, a ranging resolution capability can be ensured, and a plurality of targets with close spatial distances can be distinguished.

In a possible implementation, an absolute value of a difference between a width corresponding to the first sidelobe and the width corresponding to the main lobe is less than a width threshold.

In this implementation, the absolute value of the difference between the width corresponding to the first sidelobe and the width corresponding to the main lobe is less than the width threshold. In this way, sidelobe energy can be effectively reduced, and sidelobe energy leakage can be reduced.

In a possible implementation, the transmit signal is generated based on a time domain mask, where the time domain mask is used to limit the peak value of the first sidelobe of the transmit signal.

In this implementation, the transmit signal is generated based on the time domain mask. This can ensure performance of ranging, angle measurement, or Doppler measurement of the transmit signal.

In a possible implementation, the time domain mask is further used to limit the peak value of the second sidelobe of the transmit signal.

In this implementation, the time domain mask is further used to limit the peak value of the second sidelobe of the transmit signal, to ensure sensing performance of the generated transmit signal.

In a possible implementation, the method further includes: receiving indication information, where the indication information indicates pulse shape information of the transmit signal.

In this implementation, the indication information is received, so that a pulse shape of a UWB signal transmitted by a transmit end can be obtained, and then interference cancellation is performed based on the pulse shape. This can ensure both ranging performance and Doppler measurement performance.

In a possible implementation, the indication information includes a first field, where the first field indicates a pulse shape set to which a pulse shape of the transmit signal belongs.

In this implementation, the indication information includes the first field, and the pulse shape set to which the transmit signal belongs may be accurately indicated by the first field.

In a possible implementation, the indication information includes a second field, where the second field indicates the pulse shape of the transmit signal.

In this implementation, the indication information includes the second field, and the pulse shape of the transmit signal may be accurately indicated by the second field.

In a possible implementation, the indication information includes a third field, where the third field indicates a generation manner of the transmit signal.

In this implementation, the third field indicates the generation manner of the transmit signal. In this way, a receive end determines the pulse shape of the transmit signal based on the third field, and performs interference cancellation based on the pulse shape of the transmit signal.

In a possible implementation, the first field indicates that the pulse shape of the UWB signal transmitted by the transmit end belongs to a first pulse shape set or a second pulse shape set, a PSLR of a pulse shape in the first pulse shape set is less than a reference threshold, and a PSLR of a pulse shape in the second pulse shape set is greater than or equal to the reference threshold.

In this implementation, the first field indicates that the pulse shape of the UWB signal transmitted by the transmit end belongs to the first pulse shape set or the second pulse shape set, so that the pulse shape of the transmit signal can be accurately determined.

In a possible implementation, the first sidelobe is a lowest trough, namely, a trough that is the lowest, in the pulse shape of the transmit signal, and the peak value of the first sidelobe is a smallest trough value corresponding to the pulse shape of the transmit signal.

In this implementation, an absolute value of the smallest trough value corresponding to the pulse shape of the transmit signal falls within the first peak value range, so that impact of a line of sight path of the transmit signal on a non-line of sight path of the transmit signal can be reduced, and both ranging performance and Doppler measurement performance can be ensured.

In a possible implementation, the second sidelobe is a sidelobe with a highest peak value on a right side of the first sidelobe.

In this implementation, a peak value of a sidelobe with a highest peak value on the right side of the first sidelobe falls within the first peak value range, so that impact of a line of sight path of the transmit signal on a non-line of sight path of the transmit signal can be reduced, and both ranging performance and Doppler measurement performance can be ensured.

In a possible implementation, any peak value (namely, a value of any peak) on the right side of the first sidelobe in the pulse shape of the transmit signal is less than or equal to a first value, and any trough value (namely, a value of any trough) on the right side of the first sidelobe is greater than or equal to a third value. In other words, an upper boundary of a pulse shape on the right side of the first sidelobe is the first value, and a lower boundary of the pulse shape on the right side of the first sidelobe is the third value.

In this implementation, impact of a line of sight path of the transmit signal on a non-line of sight path of the transmit signal can be reduced, and both ranging performance and Doppler measurement performance can be ensured.

In a possible implementation, the method further includes: obtaining channel impulse response information based on the transmit signal; and in a line of sight path LOS condition, sending the channel impulse response information by using an earliest arrival path as a reference, and/or in a non-line of sight path NLOS condition, sending the channel impulse response information by using a strongest path as a reference.

In this implementation, in the line of sight path LOS condition, the channel impulse response information is sent by using the earliest arrival path as a reference; and in the non-line of sight path NLOS condition, the channel impulse response information is sent by using the strongest path as a reference.

According to a third aspect, an embodiment of this application provides another communication method. The method includes: generating indication information; and sending the indication information, where the indication information indicates a pulse shape of a UWB signal transmitted by a transmit end.

In this embodiment of this application, the indication information is sent, and the indication information indicates the pulse shape of the UWB signal transmitted by the transmit end, so that a receive end performs interference cancellation based on the pulse shape of the UWB signal transmitted by the transmit end.

In a possible implementation, the indication information includes a first field, where the first field indicates a pulse shape set to which a pulse shape of the transmit signal belongs.

In this implementation, the indication information includes the first field, and the pulse shape set to which the transmit signal belongs may be accurately indicated by the first field.

In a possible implementation, the indication information includes a second field, where the second field indicates the pulse shape of the transmit signal.

In this implementation, the indication information includes the second field, and the pulse shape of the transmit signal may be accurately indicated by the second field.

In a possible implementation, the indication information includes a third field, where the third field indicates a generation manner of the transmit signal.

In this implementation, the third field indicates the generation manner of the transmit signal, so that the receive end further determines the pulse shape of the transmit signal, and performs interference cancellation based on the pulse shape of the transmit signal.

In a possible implementation, the first field indicates that the pulse shape of the UWB signal transmitted by the transmit end belongs to a first pulse shape set or a second pulse shape set, a PSLR of a pulse shape in the first pulse shape set is less than a reference threshold, and a PSLR of a pulse shape in the second pulse shape set is greater than or equal to the reference threshold.

In this implementation, the transmit end may correspondingly perform ranging, angle measurement, or Doppler measurement based on the pulse shape in the first pulse shape set or the pulse shape in the second pulse shape set based on an actual requirement, to meet requirements of different scenarios.

In a possible implementation, the method further includes: generating the transmit signal, where a peak value of a first sidelobe of the transmit signal falls within a first peak value range, the first peak value range is [0.15, 0.3), and the transmit signal belongs to the UWB signal transmitted by the transmit end; and sending the transmit signal, where the transmit signal is used for ranging, angle measurement, or Doppler measurement.

In this implementation, the peak value of the first sidelobe of the transmit signal falls within the first peak value range, so that impact of a line of sight path of the transmit signal on a non-line of sight path of the transmit signal can be reduced, and both ranging performance and Doppler measurement performance can be ensured.

In a possible implementation, the transmit signal is a UWB signal (or namely, a UWB pulse).

In this implementation, the transmit signal is the UWB signal. Using the UWB signal for ranging, angle measurement, or Doppler measurement has advantages such as a strong multipath resolution capability, low power consumption, and high confidentiality.

In a possible implementation, a peak value of a second sidelobe of the transmit signal falls within a second peak value range, and the second peak value range is [0.15, 0.3).

In this implementation, the peak value of the second sidelobe of the transmit signal falls within the second peak value range, and the transmit signal is used for ranging, angle measurement, or Doppler measurement, so that measurement precision on a transmit path (or namely, a reflected signal) can be improved.

In a possible implementation, a width corresponding to a main lobe of the transmit signal is less than $2.25*Tp$, where $Tp=1/B$, and B represents a bandwidth of a channel occupied by the transmit signal.

In this implementation, the width corresponding to the main lobe of the transmit signal is less than $2.25*Tp$. In this way, a ranging resolution capability can be ensured, and a plurality of targets with close spatial distances can be distinguished.

In a possible implementation, an absolute value of a difference between a width corresponding to the first sidelobe and the width corresponding to the main lobe is less than a width threshold.

In this implementation, the absolute value of the difference between the width corresponding to the first sidelobe and the width corresponding to the main lobe is less than the width threshold. In this way, sidelobe energy can be effectively reduced, and sidelobe energy leakage can be reduced.

In a possible implementation, the generating the transmit signal includes: generating the transmit signal based on a time domain mask, where the time domain mask is used to limit the peak value of the first sidelobe of the transmit signal.

In this implementation, the transmit signal is generated based on the time domain mask, so that the peak value of the first sidelobe of the generated transmit signal meets a limitation (or a constraint) of the time domain mask.

In a possible implementation, the time domain mask is further used to limit the peak value of the second sidelobe of the transmit signal.

In this implementation, the time domain mask is further used to limit the peak value of the second sidelobe of the transmit signal, to ensure sensing performance of the generated transmit signal.

According to a fourth aspect, an embodiment of this application provides another communication method. The method includes: receiving indication information, where the indication information indicates a pulse shape of a UWB signal transmitted by a transmit end; and performing interference cancellation based on the indication information.

In this embodiment of this application, the indication information is received, so that a receive end can better perform interference cancellation based on the pulse shape of the UWB signal transmitted by the transmit end.

In a possible implementation, the indication information includes a first field, where the first field indicates a pulse shape set to which a pulse shape of a transmit signal belongs.

In this implementation, the indication information includes the first field, and the pulse shape set to which the transmit signal belongs may be accurately indicated by the first field.

In a possible implementation, the indication information includes a second field, where the second field indicates the pulse shape of the transmit signal.

In this implementation, the indication information includes the second field, and the pulse shape of the transmit signal may be accurately indicated by the second field.

In a possible implementation, the indication information includes a third field, where the third field indicates a generation manner of the transmit signal.

In this implementation, the third field indicates the generation manner of the transmit signal. In this way, the receive end determines the pulse shape of the transmit signal based on the third field, and performs interference cancellation based on the pulse shape of the transmit signal.

In a possible implementation, the first field indicates that the pulse shape of the UWB signal transmitted by the transmit end belongs to a first pulse shape set or a second pulse shape set, a PSLR of a pulse shape in the first pulse shape set is less than a reference threshold, and a PSLR of a pulse shape in the second pulse shape set is greater than or equal to the reference threshold.

In this implementation, the first field indicates that the pulse shape of the UWB signal transmitted by the transmit end belongs to the first pulse shape set or the second pulse shape set, so that the pulse shape of the transmit signal can be accurately determined.

In a possible implementation, the method further includes: receiving the transmit signal, where a peak value of a first sidelobe of the transmit signal falls within a first peak value range, and the first peak value range is [0.15, 0.3); and performing ranging, angle measurement, or Doppler measurement based on the transmit signal.

In this implementation, the peak value of the first sidelobe of the transmit signal falls within the first peak value range, so that impact of a line of sight path of the transmit signal on a non-line of sight path of the transmit signal can be reduced, and both ranging performance and Doppler measurement performance can be ensured.

In a possible implementation, the transmit signal is a UWB signal (or namely, a UWB pulse).

In this implementation, the transmit signal is the UWB signal. Using the UWB signal for ranging, angle measurement, or Doppler measurement has advantages such as a strong multipath resolution capability, low power consumption, and high confidentiality.

In a possible implementation, a peak value of a second sidelobe of the transmit signal falls within a second peak value range, and the second peak value range is [0.15, 0.3).

In this implementation, the peak value of the second sidelobe of the transmit signal falls within the second peak value range, and the transmit signal is used for ranging, angle measurement, or Doppler measurement, so that measurement precision on a transmit path (or namely, a reflected signal) can be improved.

In a possible implementation, a width corresponding to a main lobe of the transmit signal is less than $2.25*Tp$, where $Tp=1/B$, and B represents a bandwidth of a channel occupied by the transmit signal.

In this implementation, the width corresponding to the main lobe of the transmit signal is less than $2.25*Tp$. In this way, a ranging resolution capability can be ensured, and a plurality of targets with close spatial distances can be distinguished.

In a possible implementation, an absolute value of a difference between a width corresponding to the first sidelobe and the width corresponding to the main lobe is less than a width threshold.

In this implementation, sidelobe energy can be effectively reduced, and sidelobe energy leakage can be reduced.

In a possible implementation, the transmit signal is generated based on a time domain mask, where the time domain mask is used to limit the peak value of the first sidelobe of the transmit signal.

In this implementation, the transmit signal is generated based on the time domain mask. This can ensure performance of ranging, angle measurement, or Doppler measurement of the transmit signal.

In a possible implementation, the time domain mask is further used to limit the peak value of the second sidelobe of the transmit signal.

In this implementation, the time domain mask is further used to limit the peak value of the second sidelobe of the transmit signal, to ensure sensing performance of the generated transmit signal.

According to a fifth aspect, an embodiment of this application provides another communication method. The method includes: generating a transmit signal, where a pulse shape of the transmit signal meets a constraint of a time domain mask, a value corresponding to an upper boundary of the time domain mask in a first time unit is 1, an upper boundary of the time domain mask in a second time unit corresponds to a first value, the first value is greater than or equal to 0.15 and less than 0.3, and the second time unit is later than the first time unit; and sending the transmit signal, where the first signal is used for ranging, angle measurement, or Doppler measurement. The first time unit corresponds to a width corresponding to a main lobe of the transmit signal, and the second time unit is a time corresponding to each of sidelobes on a right side of the main lobe of the transmit signal. The upper boundary of the time domain mask in the second time unit corresponds to a peak value of a second sidelobe of the transmit signal.

In this embodiment of this application, the pulse shape of the transmit signal meets the constraint of the time domain mask, and the upper boundary of the time domain mask in the second time unit corresponds to the first value, so that impact of a line of sight path of the transmit signal on a non-line of sight path of the transmit signal can be reduced, and both ranging performance and Doppler measurement performance can be ensured.

In a possible implementation, a lower boundary of the time domain mask in a third time unit corresponds to a second value, a part of the third time unit belongs to the first time unit, the other part of the third time unit belongs to the second time unit, the second value is less than or equal to -0.15 and greater than -0.3, and the lower boundary of the time domain mask in the third time unit corresponds to a peak value of a first sidelobe of the transmit signal.

In this implementation, the lower boundary of the time domain mask in the third time unit corresponds to the second value, so that impact of a line of sight path of the transmit signal on a non-line of sight path can be reduced, and both ranging performance and Doppler measurement performance can be ensured.

In a possible implementation, a lower boundary of the time domain mask in a fourth time unit corresponds to a third value, the fourth time unit is later than the third time unit, and the third value is less than or equal to -0.05 and greater than -0.3.

In this implementation, the lower boundary of the time domain mask in the fourth time unit corresponds to the third value, so that impact of a line of sight path of the transmit signal on a non-line of sight path can be reduced, and both ranging performance and Doppler measurement performance can be ensured.

In a possible implementation, the method further includes: sending indication information, where the indication information indicates pulse shape information of the transmit signal.

In this implementation, the indication information is sent, so that a receive end performs interference cancellation based on the pulse shape of the transmit signal.

In a possible implementation, the indication information includes a first field, where the first field indicates a pulse shape set to which the pulse shape of the transmit signal belongs.

In this implementation, the indication information includes the first field, and the pulse shape set to which the transmit signal belongs may be accurately indicated by the first field.

In a possible implementation, the indication information includes a second field, where the second field indicates the pulse shape of the transmit signal.

In this implementation, the indication information includes the second field, and the pulse shape of the transmit signal may be accurately indicated by the second field.

In a possible implementation, the indication information includes a third field, where the third field indicates a generation manner of the transmit signal.

In this implementation, the third field indicates the generation manner of the transmit signal, so that the receive end further determines the pulse shape of the transmit signal, and performs interference cancellation based on the pulse shape of the transmit signal.

In a possible implementation, the first field indicates that a pulse shape of a UWB signal transmitted by a transmit end belongs to a first pulse shape set or a second pulse shape set, a PSLR of a pulse shape in the first pulse shape set is less than a reference threshold, and a PSLR of a pulse shape in the second pulse shape set is greater than or equal to the reference threshold.

In this implementation, the transmit end may correspondingly perform ranging, angle measurement, or Doppler measurement based on the pulse shape in the first pulse shape set or the pulse shape in the second pulse shape set based on an actual requirement, to meet requirements of different scenarios.

According to a sixth aspect, an embodiment of this application provides another communication method. The method includes: receiving a transmit signal, where a pulse shape of the transmit signal meets a constraint of a time domain mask, a value corresponding to an upper boundary of the time domain mask in a first time unit is 1, an upper boundary of the time domain mask in a second time unit corresponds to a first value, the first value is greater than or equal to 0.15 and less than 0.3, and the second time unit is later than the first time unit; and performing ranging or Doppler measurement based on the transmit signal.

In this embodiment of this application, the pulse shape of the transmit signal meets the constraint of the time domain mask, the upper boundary of the time domain mask in the second time unit corresponds to the first value, and ranging, angle measurement, or Doppler measurement is performed based on the transmit signal, so that impact of a line of sight path of the transmit signal on a non-line of sight path of the transmit signal can be reduced, and both ranging performance and Doppler measurement performance can be ensured.

In a possible implementation, a lower boundary of the time domain mask in a third time unit corresponds to a second value, a part of the third time unit belongs to the first time unit, the other part of the third time unit belongs to the second time unit, the second value is less than or equal to -0.15 and greater than -0.3, and the lower boundary of the time domain mask in the third time unit corresponds to a peak value of a first sidelobe of the transmit signal.

In this implementation, the lower boundary of the time domain mask in the third time unit corresponds to the second value, so that impact of a line of sight path of the transmit signal on a non-line of sight path can be reduced, and both ranging performance and Doppler measurement performance can be ensured.

In a possible implementation, a lower boundary of the time domain mask in a fourth time unit corresponds to a third value, the fourth time unit is later than the third time unit, and the third value is less than or equal to -0.05 and greater than -0.3.

In this implementation, the lower boundary of the time domain mask in the fourth time unit corresponds to the third value, so that impact of a line of sight path of the transmit signal on a non-line of sight path can be reduced, and both ranging performance and Doppler measurement performance can be ensured.

In a possible implementation, the method further includes: receiving indication information, where the indication information indicates pulse shape information of the transmit signal.

In this implementation, the indication information is received, so that a pulse shape of a UWB signal transmitted by a transmit end can be obtained, and then interference cancellation is performed based on the pulse shape.

In a possible implementation, the indication information includes a first field, where the first field indicates a pulse shape set to which the pulse shape of the transmit signal belongs.

In this implementation, the indication information includes the first field, and the pulse shape set to which the transmit signal belongs may be accurately indicated by the first field.

In a possible implementation, the indication information includes a second field, where the second field indicates the pulse shape of the transmit signal.

In this implementation, the indication information includes the second field, and the pulse shape of the transmit signal may be accurately indicated by the second field.

In a possible implementation, the indication information includes a third field, where the third field indicates a generation manner of the transmit signal.

In this implementation, the third field indicates the generation manner of the transmit signal. In this way, a receive end determines the pulse shape of the transmit signal based on the third field, and performs interference cancellation based on the pulse shape of the transmit signal.

In a possible implementation, the first field indicates that the pulse shape of the UWB signal transmitted by the transmit end belongs to a first pulse shape set or a second pulse shape set, a PSLR of a pulse shape in the first pulse shape set is less than a reference threshold, and a PSLR of a pulse shape in the second pulse shape set is greater than or equal to the reference threshold.

In this implementation, the first field indicates that the pulse shape of the UWB signal transmitted by the transmit end belongs to the first pulse shape set or the second pulse shape set, so that the pulse shape of the transmit signal can be accurately determined.

According to a seventh aspect, an embodiment of this application provides a communication apparatus. The communication apparatus has a function of implementing behavior in the method embodiment in the first aspect. The communication apparatus may be a communication device, may be a component (for example, a processor, a chip, or a chip system) in a communication device, or may be a logical module or software that can implement all or some functions of a communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module; the processing module is configured to generate a transmit signal, where a peak value of a first sidelobe of the transmit signal falls within a first peak value range, and the first peak value range is [0.15, 0.3); and the transceiver module is configured to send the transmit signal, where the transmit signal is used for ranging, angle measurement, or Doppler measurement.

In a possible implementation, the processing module is specifically configured to generate the transmit signal based on a time domain mask, where the time domain mask is used to limit the peak value of the first sidelobe of the transmit signal.

In a possible implementation, the transceiver module is further configured to send indication information, where the indication information indicates a pulse shape of a UWB signal transmitted by a transmit end, and the transmit signal belongs to the UWB signal transmitted by the transmit end.

For possible implementations of the communication apparatus in the seventh aspect, refer to the possible implementations of the first aspect.

For technical effects brought by the possible implementations of the seventh aspect, refer to descriptions of the technical effects of the first aspect or the possible implementations of the first aspect.

According to an eighth aspect, an embodiment of this application provides a communication apparatus. The communication apparatus has a function of implementing behavior in the method embodiment in the second aspect. The communication apparatus may be a communication device, may be a component (for example, a processor, a chip, or a chip system) in a communication device, or may be a logical module or software that can implement all or some functions of a communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module; the transceiver module is configured to receive a transmit signal, where a peak value of a first sidelobe of the transmit signal falls within a first peak value range, and the first peak value range is [0.15, 0.3); and the processing module is configured to perform ranging, angle measurement, or Doppler measurement based on the transmit signal.

In a possible implementation, the transceiver module is further configured to receive indication information, where the indication information indicates a pulse shape of a UWB signal transmitted by a transmit end, and the transmit signal belongs to the UWB signal transmitted by the transmit end.

For possible implementations of the communication apparatus in the eighth aspect, refer to the possible implementations of the second aspect.

For technical effects brought by the possible implementations of the eighth aspect, refer to descriptions of the technical effects of the second aspect or the possible implementations of the second aspect.

According to a ninth aspect, an embodiment of this application provides another communication apparatus. The communication apparatus has a function of implementing behavior in the method embodiment in the third aspect. The communication apparatus may be a communication device, may be a component (for example, a processor, a chip, or a chip system) in a communication device, or may be a logical module or software that can implement all or some functions of a communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module; the processing module is configured to generate indication information; and the transceiver module is configured to send the indication information, where the indication information indicates a pulse shape of a UWB signal transmitted by a transmit end.

In a possible implementation, the processing module is further configured to generate a transmit signal, where a peak value of a first sidelobe of the transmit signal falls within a first peak value range, and the transmit signal belongs to the UWB signal transmitted by the transmit end; and the transceiver module is further configured to send the transmit signal, where the transmit signal is used for ranging, angle measurement, or Doppler measurement.

For possible implementations of the communication apparatus in the ninth aspect, refer to the possible implementations of the third aspect.

For technical effects brought by the possible implementations of the ninth aspect, refer to descriptions of the technical effects of the third aspect or the possible implementations of the third aspect.

According to a tenth aspect, an embodiment of this application provides another communication apparatus. The communication apparatus has a function of implementing behavior in the method embodiment in the fourth aspect. The communication apparatus may be a communication device, may be a component (for example, a processor, a chip, or a chip system) in a communication device, or may be a logical module or software that can implement all or some functions of a communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module; the transceiver module is configured to receive indication information, where the indication information indicates a pulse shape of a UWB signal transmitted by a transmit end; and the processing module is configured to perform interference cancellation based on the indication information.

In a possible implementation, the transceiver module is further configured to receive a transmit signal, where a peak value of a first sidelobe of the transmit signal falls within a first peak value range; and the processing module is further configured to perform ranging, angle measurement, or Doppler measurement based on the transmit signal.

For possible implementations of the communication apparatus in the tenth aspect, refer to the possible implementations of the fourth aspect.

For technical effects brought by the possible implementations of the tenth aspect, refer to descriptions of the technical effects of the fourth aspect or the possible implementations of the fourth aspect.

According to an eleventh aspect, an embodiment of this application provides another communication apparatus. The communication apparatus has a function of implementing behavior in the method embodiment in the fifth aspect. The communication apparatus may be a communication device, may be a component (for example, a processor, a chip, or a chip system) in a communication device, or may be a logical module or software that can implement all or some functions of a communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module; the processing module is configured to generate a transmit signal, where a pulse shape of the transmit signal meets a constraint of a time domain mask, a value corresponding to an upper boundary of the time domain mask in a first time unit is 1, an upper boundary of the time domain mask in a second time unit corresponds to a first value, the first value is greater than or equal to 0.15 and less than 0.3, and the second time unit is later than the first time unit; and the transceiver module is configured to send the transmit signal, where the first signal is used for ranging, angle measurement, or Doppler measurement.

In a possible implementation, the transceiver module is further configured to send indication information, where the indication information indicates a pulse shape of an ultra-wideband UWB signal transmitted by a transmit end, and the transmit signal belongs to the UWB signal transmitted by the transmit end.

For possible implementations of the communication apparatus in the eleventh aspect, refer to the possible implementations of the fifth aspect.

For technical effects brought by the possible implementations of the eleventh aspect, refer to descriptions of the technical effects of the fifth aspect or the possible implementations of the fifth aspect.

According to a twelfth aspect, an embodiment of this application provides another communication apparatus. The communication apparatus has a function of implementing behavior in the method embodiment in the sixth aspect. The communication apparatus may be a communication device, may be a component (for example, a processor, a chip, or a chip system) in a communication device, or may be a logical module or software that can implement all or some functions of a communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module; the transceiver module is configured to receive a transmit signal, where a pulse shape of the transmit signal meets a constraint of a time domain mask, a value corresponding to an upper boundary of the time domain mask in a first time unit is 1, an upper boundary of the time domain mask in a second time unit corresponds to a first value, the first value is greater than or equal to 0.15 and less than 0.3, and the second time unit is later than the first time unit; and the processing module is configured to perform ranging or Doppler measurement based on the transmit signal.

In a possible implementation, the transceiver module is further configured to receive indication information, where the indication information indicates a pulse shape of an ultra-wideband UWB signal transmitted by a transmit end, and the transmit signal belongs to the UWB signal transmitted by the transmit end.

For possible implementations of the communication apparatus in the twelfth aspect, refer to the possible implementations of the sixth aspect.

For technical effects brought by the possible implementations of the twelfth aspect, refer to descriptions of the technical effects of the sixth aspect or the possible implementations of the sixth aspect.

According to a thirteenth aspect, an embodiment of this application provides another communication apparatus. The communication apparatus includes a processor, the processor is coupled to a memory, the memory is configured to store a program or instructions, and when the program or the instructions are executed by the processor, the communication apparatus is enabled to perform the method according to any one of the first aspect to the sixth aspect.

In this embodiment of this application, in a process of performing the method, a process of sending information (or a signal) in the method may be understood as a process of outputting information based on instructions of the processor. When outputting the information, the processor outputs the information to a transceiver, so that the transceiver transmits the information. After the information is output by the processor, other processing may further need to be performed on the information, and then the information arrives at the transceiver. Similarly, when the processor receives input information, the transceiver receives the information, and inputs the information into the processor. Further, after the transceiver receives the information, other processing may need to be performed on the information, and then the information is input into the processor.

Unless otherwise specified, or if an operation like sending and/or receiving related to the processor does not conflict with an actual function or internal logic of the operation in related descriptions, the operation may be generally understood as outputting based on instructions of the processor.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method shown in the first aspect or any possible implementation of the first aspect.

In a possible implementation, the memory is located outside the communication apparatus. In a possible implementation, the memory is located in the communication apparatus.

In a possible implementation, the processor and the memory may be further integrated into one component, that is, the processor and the memory may be further integrated together.

In a possible implementation, the communication apparatus further includes the transceiver, and the transceiver is configured to receive a signal, send a signal, or the like.

According to a fourteenth aspect, this application provides another communication apparatus. The communication apparatus includes a processing circuit and an interface circuit, the interface circuit is configured to obtain data or output data, and the processing circuit is configured to perform the method according to any one of the first aspect to the sixth aspect.

According to a fifteenth aspect, this application provides a computer-readable storage medium. The computer-readable storage medium stores a computer program, the computer program includes program instructions, and when the program instructions are executed, a computer is enabled to perform the method according to any one of the first aspect to the sixth aspect.

According to a sixteenth aspect, this application provides a computer program product. The computer program product includes a computer program, the computer program includes program instructions, and when the program instructions are executed, a computer is enabled to perform the method according to any one of the first aspect to the sixth aspect.

According to a seventeenth aspect, this application provides a communication system, including the communication apparatus according to any one of the seventh aspect or the possible implementations of the seventh aspect and the communication apparatus according to any one of the eighth aspect or the possible implementations of the eighth aspect.

According to an eighteenth aspect, this application provides a communication system, including the communication apparatus according to any one of the ninth aspect or the possible implementations of the ninth aspect and the communication apparatus according to any one of the tenth aspect or the possible implementations of the tenth aspect.

According to a nineteenth aspect, this application provides a communication system, including the communication apparatus according to any one of the eleventh aspect or the possible implementations of the eleventh aspect and the communication apparatus according to any one of the twelfth aspect or the possible implementations of the twelfth aspect.

According to a twentieth aspect, this application provides a chip, including a processor and a communication interface. The processor reads, by using the communication interface, instructions stored in a memory, to perform the method according to any one of the first aspect to the sixth aspect.

According to a twenty-first aspect, an embodiment of this application provides a communication method. The method includes: generating a transmit signal based on a time domain mask, where the time domain mask is used to limit a pulse shape of the transmit signal, a lower boundary of the time domain mask corresponds to a first value, a value corresponding to at least a **part of** an upper boundary of the time domain mask in a first time domain is 1, an upper boundary of the time domain mask in a second time domain corresponds to a second value, a value range of the first value is [-0.2, -0.001], a value range of the second value is [0.001, 0.2], and the second time domain is outside the first time domain; and sending the transmit signal.

In this embodiment of this application, the pulse shape of the transmit signal meets a constraint of the time domain mask, so that impact of a line of sight path of the transmit signal on a non-line of sight path of the transmit signal can be reduced, and both ranging performance and Doppler measurement performance can be ensured.

In a possible implementation, a value corresponding to an upper boundary of the time domain mask in a first sub-domain in the first time domain is 1, a value corresponding to an upper boundary of the time domain mask in a second sub-domain in the first time domain is 0.3, the first sub-domain is [-1.25, 1], the second sub-domain is (1, third value], and a value range of the third value is (1.0, 2.0].

In a possible implementation, a value corresponding to the upper boundary of the time domain mask in the first time domain is 1, the first time domain is [-1.25, third value], and a value range of the third value is (1.0, 2.0].

In a possible implementation, coordinates of a junction point between the first time domain and the second time domain on the time domain mask are any one of the following: (1.50, 0.015), (1.55, 0.015), (1.60, 0.015), (1.65, 0.015), (1.70, 0.015), (1.75, 0.015), (1.80, 0.015), (1.85, 0.015), (2.0, 0.015), (1.87, 0.01), (1.92, 0.01), and (1.75, 0.02).

In a possible implementation, the first value is -0.015, and the second value is 0.015.

In a possible implementation, the pulse shape of the transmit signal is a Gaussian pulse shape or a Caesar pulse shape.

According to a twenty-second aspect, an embodiment of this application provides a communication method. The method includes: receiving a transmit signal, where the transmit signal is compliant with a time domain mask, a lower boundary of the time domain mask corresponds to a first value, a value corresponding to at least a part of an upper boundary of the time domain mask in a first time domain is 1, an upper boundary of the time domain mask in a second time domain corresponds to a second value, a value range of the first value is [-0.2, -0.001], a value range of the second value is [0.001, 0.2], and the second time domain is outside the first time domain; and performing signal processing based on the transmit signal.

In a possible implementation, a value corresponding to an upper boundary of the time domain mask in a first sub-domain in the first time domain is 1, a value corresponding to an upper boundary of the time domain mask in a second sub-domain in the first time domain is 0.3, the first sub-domain is [-1.25, 1], the second sub-domain is (1, third value], and a value range of the third value is (1.0, 2.0].

In a possible implementation, a value corresponding to the upper boundary of the time domain mask in the first time domain is 1, the first time domain is [-1.25, third value], and a value range of the third value is (1.0, 2.0].

In a possible implementation, coordinates of a junction point between the first time domain and the second time domain on the time domain mask are any one of the following: (1.50, 0.015), (1.55, 0.015), (1.60, 0.015), (1.65, 0.015), (1.70, 0.015), (1.75, 0.015), (1.80, 0.015), (1.85, 0.015), (2.0, 0.015), (1.87, 0.01), (1.92, 0.01), and (1.75, 0.02).

In a possible implementation, the first value is -0.015, and the second value is 0.015.

In a possible implementation, the pulse shape of the transmit signal is a Gaussian pulse shape or a Caesar pulse shape.

According to a twenty-third aspect, an embodiment of this application provides another communication apparatus. The communication apparatus has a function of implementing behavior in the method embodiment in the twenty-first aspect. The communication apparatus may be a communication device, may be a component (for example, a processor, a chip, or a chip system) in a communication device, or may be a logical module or software that can implement all or some functions of a communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module; the processing module is configured to generate a transmit signal based on a time domain mask, where the time domain mask is used to limit a pulse shape of the transmit signal, a lower boundary of the time domain mask corresponds to a first value, a value corresponding to at least a part of an upper boundary of the time domain mask in a first time domain is 1, an upper boundary of the time domain mask in a second time domain corresponds to a second value, a value range of the first value is [-0.2, -0.001], a value range of the second value is [0.001, 0.2], and the second time domain is outside the first time domain; and the transceiver module is configured to send the transmit signal.

According to a twenty-fourth aspect, an embodiment of this application provides another communication apparatus. The communication apparatus has a function of implementing behavior in the method embodiment in the twenty-second aspect. The communication apparatus may be a communication device, may be a component (for example, a processor, a chip, or a chip system) in a communication device, or may be a logical module or software that can implement all or some functions of a communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module; the transceiver module is configured to receive a transmit signal, where the transmit signal is compliant with a time domain mask, a lower boundary of the time domain mask corresponds to a first value, a value corresponding to at least a part of an upper boundary of the time domain mask in a first time domain is 1, an upper boundary of the time domain mask in a second time domain corresponds to a second value, a value range of the first value is [-0.2, -0.001], a value range of the second value is [0.001, 0.2], and the second time domain is outside the first time domain; and the processing module is configured to perform signal processing based on the transmit signal.

In this embodiment of this application, the pulse shape of the transmit signal meets a constraint of the time domain mask, so that impact of a line of sight path of the transmit signal on a non-line of sight path of the transmit signal can be reduced, and both ranging performance and Doppler measurement performance can be ensured.

According to a twenty-fifth aspect, this application provides another communication apparatus. The communication apparatus includes a processing circuit and an interface circuit, the interface circuit is configured to obtain data or output data, and the processing circuit is configured to perform the method according to the twenty-first aspect or the twenty-second aspect.

According to a twenty-sixth aspect, this application provides a computer-readable storage medium. The computer-readable storage medium stores a computer program, the computer program includes program instructions, and when the program instructions are executed, a computer is enabled to perform the method according to the twenty-first aspect or the twenty-second aspect.

According to a twenty-seventh aspect, this application provides a computer program product. The computer program product includes a computer program, the computer program includes program instructions, and when the program instructions are executed, a computer is enabled to perform the method according to the twenty-first aspect or the twenty-second aspect.

According to a twenty-eighth aspect, this application provides a communication system, including the communication apparatus according to any one of the twenty-third aspect or the possible implementations of the twenty-third aspect and the communication apparatus according to any one of the twenty-fourth aspect or the possible implementations of the twenty-fourth aspect.

According to a twenty-ninth aspect, an embodiment of this application provides a communication method. The method includes: generating a transmit signal based on a time domain mask, where the time domain mask is used to limit a pulse shape of the transmit signal, a lower boundary of the time domain mask corresponds to a first value, the time domain mask is an axisymmetric pattern in a first time domain, an upper boundary of the time domain mask in a second time domain outside the first time domain corresponds to a second value, the first time domain sequentially includes a third time domain, a fourth time domain, and a fifth time domain in a time sequence, an upper boundary of the time domain mask in the third time domain corresponds to a third value, a value corresponding to an upper boundary of the time domain mask in the fourth time domain is 1, an upper boundary of the time domain mask in the fifth time domain corresponds to the third value, a value range of the first value is [-0.2, -0.001], a value range of the second value is [0.001, 0.2], and the third value is less than 1; and sending the transmit signal.

In this embodiment of this application, the pulse shape of the transmit signal meets a constraint of the time domain mask, so that impact of a line of sight path of the transmit signal on a non-line of sight path of the transmit signal can be reduced, and both ranging performance and Doppler measurement performance can be ensured.

In a possible implementation, a value range of a length of the first time domain is [1.25, 1.75].

In a possible implementation, a value range of a length of the fourth time domain is [0.45, 1.2].

In a possible implementation, a value range of the third value is [0.1, 0.9], and the third value is greater than the second value.

In a possible implementation, coordinates of a junction point between the first time domain and the second time domain on the time domain mask are any one of the following: (1.37, 0.3), (1.4, 0.3), (1.42, 0.3), (1.45, 0.3), and (1.47, 0.3).

In a possible implementation, coordinates of a junction point between the fourth time domain and the fifth time domain on the time domain mask are any one of the following: (0.88, 0.3), (0.85, 0.3), (0.83, 0.3), (0.8, 0.3), and (0.78, 0.3).

In a possible implementation, the first value and the second value are opposite numbers of each other.

In a possible implementation, the pulse shape of the transmit signal is a Gaussian pulse shape or a Caesar pulse shape.

According to a thirtieth aspect, an embodiment of this application provides a communication method. The method includes: receiving a transmit signal, where the transmit signal is compliant with a time domain mask, a lower boundary of the time domain mask corresponds to a first value, the time domain mask is an axisymmetric pattern in a first time domain, an upper boundary of the time domain mask in a second time domain outside the first time domain corresponds to a second value, the first time domain sequentially includes a third time domain, a fourth time domain, and a fifth time domain in a time sequence, an upper boundary of the time domain mask in the third time domain corresponds to a third value, a value corresponding to an upper boundary of the time domain mask in the fourth time domain is 1, an upper boundary of the time domain mask in the fifth time domain corresponds to the third value, a value range of the first value is [-0.2, -0.001], a value range of the second value is [0.001, 0.2], and the third value is less than 1; and performing signal processing based on the transmit signal.

For possible implementations of the communication apparatus in the thirtieth aspect, refer to the possible implementations of the twenty-ninth aspect.

For technical effects brought by the possible implementations of the thirtieth aspect, refer to descriptions of the technical effects of the twenty-ninth aspect or the possible implementations of the twenty-ninth aspect.

According to a thirty-first aspect, an embodiment of this application provides another communication apparatus. The communication apparatus has a function of implementing behavior in the method embodiment in the twenty-ninth aspect. The communication apparatus may be a communication device, may be a component (for example, a processor, a chip, or a chip system) in a communication device, or may be a logical module or software that can implement all or some functions of a communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module; the processing module is configured to generate a transmit signal based on a time domain mask, where the time domain mask is used to limit a pulse shape of the transmit signal, a lower boundary of the time domain mask corresponds to a first value, the time domain mask is an axisymmetric pattern in a first time domain, an upper boundary of the time domain mask in a second time domain outside the first time domain corresponds to a second value, the first time domain sequentially includes a third time domain, a fourth time domain, and a fifth time domain in a time sequence, an upper boundary of the time domain mask in the third time domain corresponds to a third value, a value corresponding to an upper boundary of the time domain mask in the fourth time domain is 1, an upper boundary of the time domain mask in the fifth time domain corresponds to the third value, a value range of the first value is [-0.2, -0.001], a value range of the second value is [0.001, 0.2], and the third value is less than 1; and the transceiver module is configured to send the transmit signal.

According to a thirty-second aspect, an embodiment of this application provides another communication apparatus. The communication apparatus has a function of implementing behavior in the method embodiment in the thirtieth aspect. The communication apparatus may be a communication device, may be a component (for example, a processor, a chip, or a chip system) in a communication device, or may be a logical module or software that can implement all or some functions of a communication device. The function of the communication apparatus may be implemented by hardware, or may be implemented by hardware executing corresponding software. The hardware or the software includes one or more modules or units corresponding to the foregoing function. In a possible implementation, the communication apparatus includes a processing module and a transceiver module; the transceiver module is configured to receive a transmit signal, where the transmit signal is compliant with a time domain mask, a lower boundary of the time domain mask corresponds to a first value, the time domain mask is an axisymmetric pattern in a first time domain, an upper boundary of the time domain mask in a second time domain outside the first time domain corresponds to a second value, the first time domain sequentially includes a third time domain, a fourth time domain, and a fifth time domain in a time sequence, an upper boundary of the time domain mask in the third time domain corresponds to a third value, a value corresponding to an upper boundary of the time domain mask in the fourth time domain is 1, an upper boundary of the time domain mask in the fifth time domain corresponds to the third value, a value range of the first value is [-0.2, -0.001], a value range of the second value is [0.001, 0.2], and the third value is less than 1; and the processing module is configured to perform signal processing based on the transmit signal.

In this embodiment of this application, the pulse shape of the transmit signal meets a constraint of the time domain mask, so that impact of a line of sight path of the transmit signal on a non-line of sight path of the transmit signal can be reduced, and both ranging performance and Doppler measurement performance can be ensured.

According to a thirty-third aspect, this application provides another communication apparatus. The communication apparatus includes a processing circuit and an interface circuit, the interface circuit is configured to obtain data or output data, and the processing circuit is configured to perform the method according to the twenty-ninth aspect or the thirtieth aspect.

According to a thirty-fourth aspect, this application provides a computer-readable storage medium. The computer-readable storage medium stores a computer program, the computer program includes program instructions, and when the program instructions are executed, a computer is enabled to perform the method according to the twenty-ninth aspect or the thirtieth aspect.

According to a thirty-fifth aspect, this application provides a computer program product. The computer program product includes a computer program, the computer program includes program instructions, and when the program instructions are executed, a computer is enabled to perform the method according to the twenty-ninth aspect or the thirtieth aspect.

According to a thirty-sixth aspect, this application provides a communication system, including the communication apparatus according to any one of the thirty-first aspect or the possible implementations of the thirty-first aspect and the communication apparatus according to any one of the thirty-second aspect or the possible implementations of the thirty-second aspect.

BRIEF DESCRIPTION OF DRAWINGS

To describe technical solutions in embodiments of this application or in the background more clearly, the following describes accompanying drawings for describing embodiments of this application or the background.

FIG. 1 is an example of a compliant pulse (compliant pulse) in the conventional technology;
FIG. 2 is a transmit spectrum mask for a band 4 in the conventional technology;
FIG. 3 is a diagram of a time domain mask that a pulse shape of a UWB signal used for ranging needs to meet in the conventional technology;
FIG. 4A is an example of a pulse shape of a transmit signal according to an embodiment of this application;
FIG. 4B is an example of an autocorrelation function according to an embodiment of this application;
FIG. 4C is a diagram of a ranging resolution according to an embodiment of this application;
FIG. 4D is a diagram of a peak to sidelobe ratio according to an embodiment of this application;
FIG. 4E is a diagram of a signal power spectrum and a power spectrum mask according to an embodiment of this application;
FIG. 5 is an example of an application scenario according to this application;
FIG. 6A is a diagram of comparison between a pulse shape of a transmit signal on a LOS path and a pulse shape of a transmit signal on a reflected path according to an embodiment of this application;
FIG. 6B is a diagram of superposition of a pulse shape of a transmit signal on a LOS path and a pulse shape of a transmit signal on a reflected path according to an embodiment of this application;
FIG. 7A is a diagram of a mono-static sensing mode according to an embodiment of this application;
FIG. 7B is a diagram of a bi-static sensing mode according to an embodiment of this application;
FIG. 7C is a diagram of a multi-static sensing mode according to an embodiment of this application;
FIG. 8A is a diagram of a relationship between a ranging resolution and a PSLR according to an embodiment of this application;
FIG. 8B is a diagram of a relationship between a PSLR and a peak to sidelobe ratio according to an embodiment of this application;
FIG. 8C is a comparison diagram of optimal pulse shapes according to an embodiment of this application;
FIG. 9A is an example of a time domain mask according to an embodiment of this application;
FIG. 9B to FIG. 9P are examples of different pulse shapes according to embodiments of this application;
FIG. 10 is an interaction flowchart of a communication method according to an embodiment of this application;
FIG. 11 is an interaction flowchart of another communication method according to an embodiment of this application;
FIG. 12 is a diagram of a structure of a communication apparatus 1200 according to an embodiment of this application;
FIG. 13 is a diagram of a structure of another communication apparatus 130 according to an embodiment of this application;
FIG. 14 is a diagram of a structure of another communication apparatus 140 according to an embodiment of this application;
FIG. 15 is an example of a time domain mask according to an embodiment of this application;
FIG. 16A and FIG. 16B each are an example of a time domain mask according to an embodiment of this application;
FIG. 17A to FIG. 17Z each are an example of a time domain mask according to an embodiment of this application;
FIG. 18A to FIG. 18L each are an example of a time domain mask according to an embodiment of this application;

FIG. 19 is an example of a time domain mask 3 according to an embodiment of this application;

FIG. 20 is another example of a time domain mask 3 according to an embodiment of this application; and

FIG. 21Ato FIG. 21I each are an example of a time domain mask according to an embodiment of this application.

## DESCRIPTION OF EMBODIMENTS

The terms "first", "second", and the like in the specification, claims, and accompanying drawings of this application are merely used to distinguish between different objects, but are not used to describe a specific order. In addition, terms "include" and "have" and any other variations thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a specific feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

Terms used in the following embodiments of this application are merely intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) based only on (or according to) A, and B may alternatively be determined (or generated) based on (or according to) A and/or other information.

The following first describes terms and technical solutions in embodiments of this application.

1. Constraints that a transmit signal (for example, a UWB signal) needs to meet in time domain

IEEE 802.15.4z specifies an impulse response of a UWB baseband. It is assumed that a transmitted baseband pulse shape is p(t), and a reference signal r(t) is specified. In this case, a cross-correlation between the transmit signal p(t) and the reference signal r(t) may be denoted as:

$$\phi(\tau) = \frac{1}{\sqrt{E_r E_p}} Re \int_{-\infty}^{+\infty} r(t) p^*(t+\tau)\, dt \quad (1).$$

Er and Ep respectively represent energy of r(t) and energy of p(t), p*(t) represents a conjugate of p(t), Re represents taking a real number of the signal, r(t) is a root raised cosine pulse, and mathematically, r(t) is defined as follows:

$$r(t) = \frac{4\beta}{\pi\sqrt{T_p}} \frac{cos\big[(1+\beta)\pi t/T_p\big] + \frac{sin[(1-\beta)\pi t/T_p]}{4\beta(t/T_p)}}{1 - \left(\frac{4\beta}{T_p}\right)^2} \quad (2).$$

β = 0.5, Tp is a parameter related to a channel and is inversely proportional to a channel bandwidth, that is, Tp=1/B, and B represents a bandwidth of a channel occupied by the reference signal. Table 1-1 shows Tp corresponding to different channels. The third row in Table 1-1 is used as an example, Tp corresponding to a channel whose channel number is 7 is 0.92 ns.

Table 1-1

| Channel number | Tp (ns) |
|---|---|
| {0:3, 5:6, 8:10, 12:14} | 2.00 |

(continued)

| Channel number | Tp (ns) |
|---|---|
| 7 | 0.92 |
| {4, 11} | 0.75 |
| 15 | 0.74 |

The constraints that the transmit signal (UWB signal) needs to meet in time domain include: A peak value of a main lobe of $|\phi(\tau)|$ needs to be greater than 0.8, and a duration Tw for which the main lobe is greater than 0.8 cannot be less than values that are listed in Table 1-2 and that correspond to different channels; and a peak value of a sidelobe of $|\phi(\tau)|$ cannot be greater than 0.3. In embodiments of this application, a main lobe of a pulse shape is a peak or a trough with a largest amplitude in the pulse shape, and a sidelobe of the pulse shape is a peak or a trough with a non-largest amplitude in the pulse shape. The main lobe may be a peak or a trough. The sidelobe may be a peak or a trough.

Table 1-2 shows that durations for which the main lobe of the UWB signal transmitted through different channels needs to be greater than 0.8. Refer to Table 1-2. The first column represents a channel number (channel number), the second column represents a pulse duration (pulse duration) Tp corresponding to different channels, and the third column represents a constraint on a main lobe width (main lobe width) of a UWB signal, that is, a duration for which the main lobe needs to be greater than 0.8. The third row in Table 1-2 is used as an example. A pulse duration corresponding to a channel 7 is 0.92 ns, and a duration for which a main lobe of a UWB signal carried on the channel 7 needs to be greater than 0.8 is 0.2 ns. It should be understood that meanings of rows in Table 1-2 are similar. Details are not described herein again. In embodiments of this application, the UWB signal may be referred to as a UWB pulse (UWB pulse), and the transmit signal is the UWB signal.

Table 1-2

| Channel number (channel number) | Pulse duration (pulse duration), Tp (ns) | Main lobe width (main lobe width), Tw (ns) |
|---|---|---|
| {0:3, 5:6, 8:10, 12:14} | 2.00 | 0.5 |
| 7 | 0.92 | 0.2 |
| {4, 11} | 0.75 | 0.2 |
| 15 | 0.74 | 0.2 |

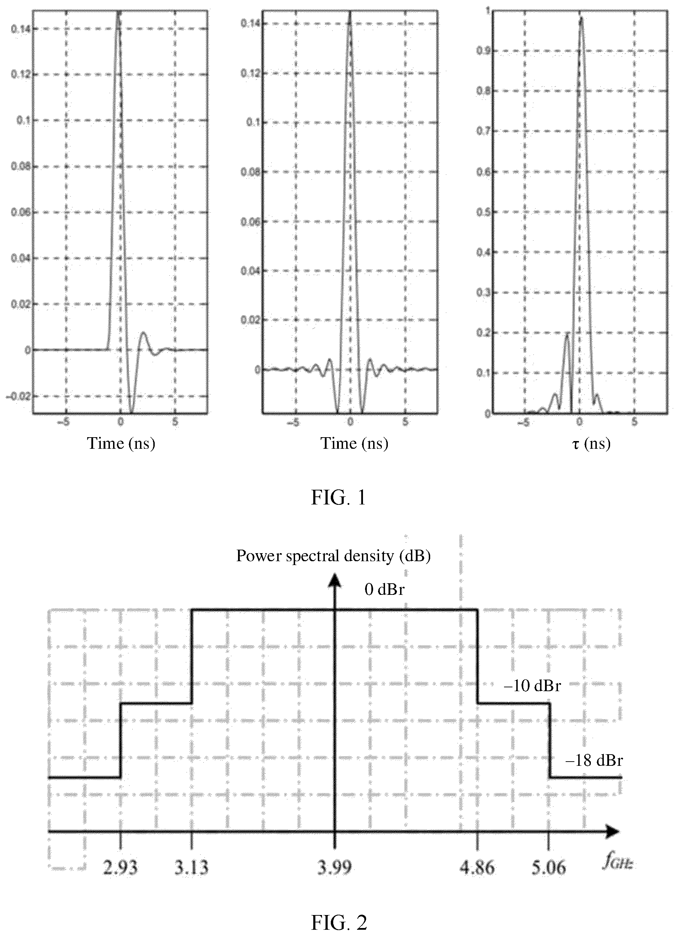

FIG. 1 is an example of a compliant pulse (compliant pulse) in the conventional technology. Refer to FIG. 1. A horizontal axis represents a time (time) in a unit of nanosecond (ns); a leftmost pulse shape represents an example of p(t) that meets a constraint in time domain, that is, a UWB pulse (UWB pulse); a middle pulse shape represents a reference signal r(t), that is, a UWB reference pulse (UWB reference pulse); and a rightmost pulse shape represents a pulse shape of the foregoing $|\phi(\tau)|$, that is, a cross-correlation magnitude (cross correlation magnitude).

2. Constraints on a power spectral density of a transmit signal (UWB signal)

The foregoing analyzes constraints that the transmit signal needs to meet in time domain. To ensure that signals in different frequency bands in frequency domain do not affect each other, the power spectral density of the transmit signal needs to be further constrained. The IEEE 802.15.4z standard limits the power spectral density of the transmit signal. Transmit power of the transmit signal needs to meet the following mask constraint (a band 4 is used as an example): Within a range of $0.65/T_p < |f - f_c| < 0.8/T_p$, the power spectral density of the transmit signal needs to be less than -10 of a peak power spectral density; and within a range of $|f - f_c| > 0.8/T_p$, the power spectral density of the transmit signal needs to be less than -18 of the peak power spectral density, where $f_c$ represents a center frequency of the transmit signal. FIG. 2 is a transmit spectrum mask for the band 4 (transmit spectrum mask for band 4) in the conventional technology. Refer to FIG. 2. A horizontal axis is a frequency in a unit of GHz, and a vertical axis is a power spectral density (power spectral density) in a unit of dB. The transmit spectrum mask for the band 4 shown in FIG. 2 may be considered as a boundary of a curve of a power spectral density of a transmit signal carried on the band 4.

3. Time domain mask that a pulse shape of a UWB signal needs to meet

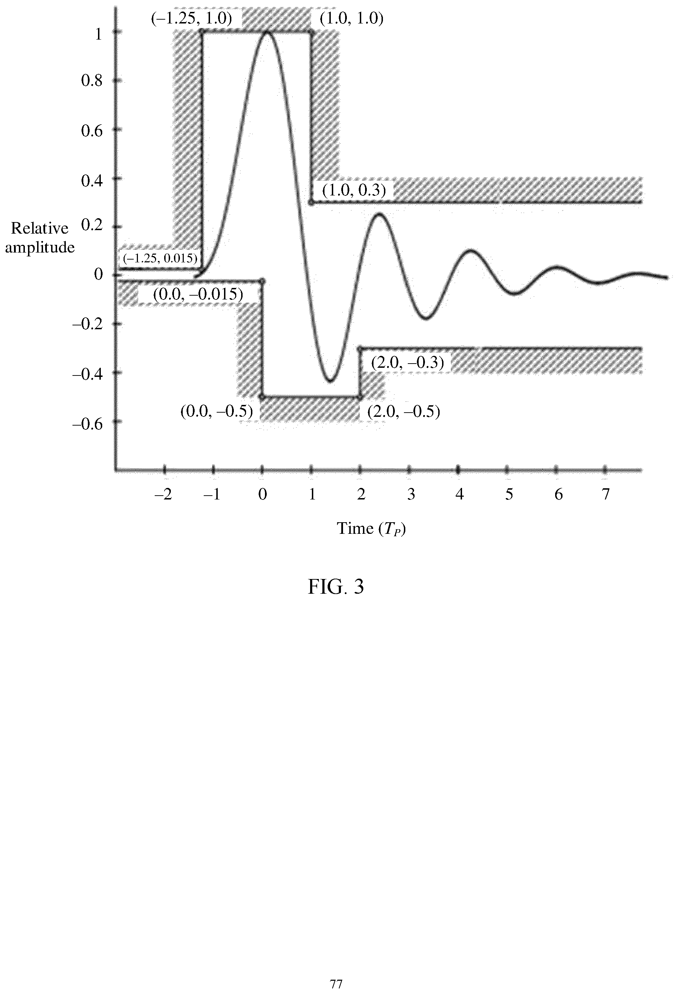

In a revised version of IEEE 802.15.4z, to further improve ranging performance, the pulse shape of the UWB signal is further constrained. To be specific, a pulse shape used for ranging needs to meet the time domain mask. FIG. 3 is a diagram of a time domain mask that a pulse shape of a UWB signal used for ranging needs to meet in the conventional technology. In FIG. 3, a horizontal axis is a time unit $T_p$, and a vertical axis is a relative amplitude (relative amplitude). FIG. 3 shows a pulse shape of a UWB signal that meets a time domain mask. In the pulse shape, a sidelobe on a left side of a main lobe is almost zero, and a sidelobe on a right side of the main lobe is high. The time domain mask is designed to reduce impact of a non-line of sight (non-line of sight, NLOS) path on a LOS path and improve detection precision on the LOS path.

4. Ranging resolution, peak to sidelobe ratio (peak to sidelobe level, PSLR), and spectral efficiency

Key technical indicators of a pulse shape of a signal include a ranging resolution, a PSLR, and spectral efficiency.

It is assumed that a transmitted baseband pulse shape is p(t), for example, a UWB signal transmitted by a transmit end. In this case, an autocorrelation function of the transmit signal p(t) may be denoted in the following form:

$$\phi(\tau) = \int_{-\infty}^{+\infty} p(t)p^*(t - \tau)\, dt \ \ (3).$$

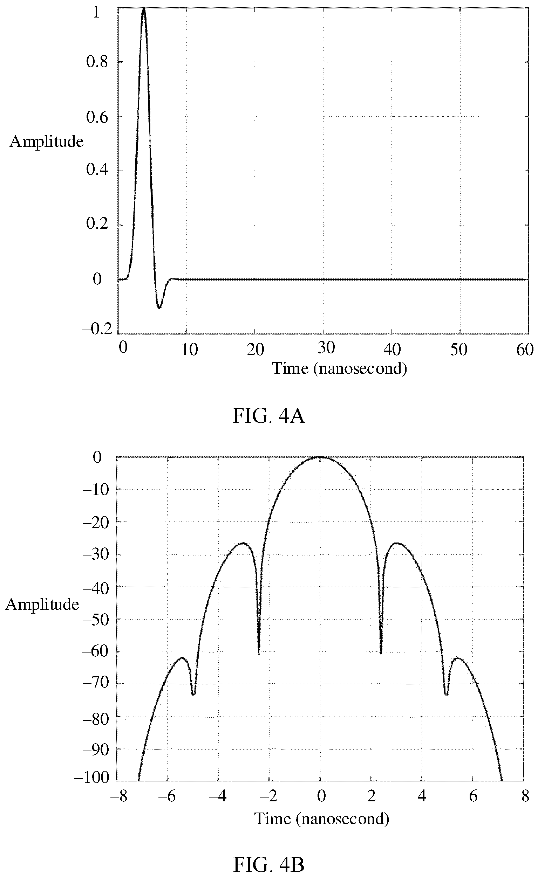

FIG. 4A is an example of a pulse shape of a transmit signal according to an embodiment of this application. Refer to FIG. 4A. A horizontal axis represents a time (unit: nanosecond), and a vertical axis represents an amplitude. FIG. 4B is an example of an autocorrelation function according to an embodiment of this application. Refer to FIG. 4B. A horizontal axis represents a time (unit: nanosecond), and a vertical axis represents an amplitude. The autocorrelation function in FIG. 4B is an autocorrelation function corresponding to the pulse shape in FIG. 4A.

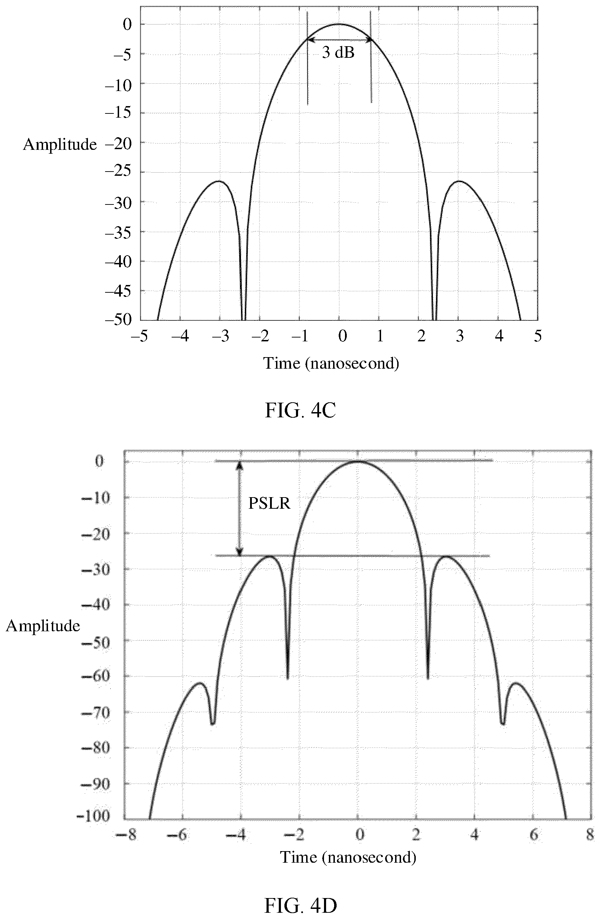

A ranging resolution is defined as a 3 dB width of a main beam of a signal autocorrelation function. The signal autocorrelation function is an autocorrelation function of a transmit signal (namely, a UWB signal). The width of the main beam is inversely proportional to a bandwidth, and a wider bandwidth indicates a narrower width of the main beam. FIG. 4C is a diagram of a ranging resolution according to an embodiment of this application. The ranging resolution shown in FIG. 4C is a ranging resolution corresponding to the autocorrelation function in FIG. 4B, that is, the 3 dB width of the main beam of the autocorrelation function. Refer to FIG. 4C. A horizontal axis represents a time (unit: nanosecond), and a vertical axis represents an amplitude.

PSLR: The peak to sidelobe ratio is defined as a ratio of a peak value of a main lobe of an autocorrelation function to a highest sidelobe, and a larger ratio indicates a smaller sidelobe fluctuation, and is more conducive to improving sensing performance. FIG. 4D is a diagram of a peak to sidelobe ratio according to an embodiment of this application. Refer to FIG. 4D. A horizontal axis represents a time (unit: nanosecond), a vertical axis represents amplitude, and arrows represent a PSLR.

Spectral efficiency is defined as a ratio of an in-band integral of a spectrum corresponding to a pulse shape of a transmit signal to an in-band integral of a spectrum mask. Higher spectral efficiency is more conducive to improving transmit power. Spectral efficiency $\eta$ may be expressed in the following form:

$$\eta = \frac{\int S_p(f)df}{\int S(f)df} \ \ (4).$$

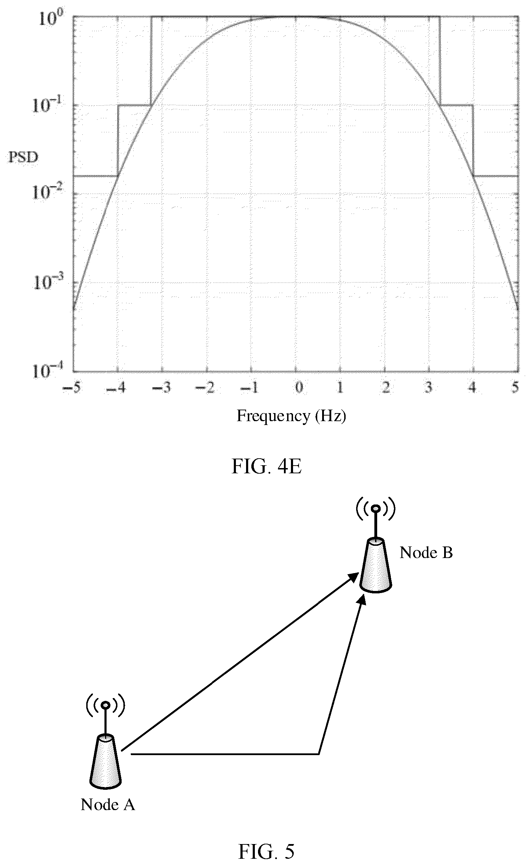

$S_p(f)$ represents a normalized power spectral density function corresponding to a transmit signal p(t), and S(f) represents a power spectral density function corresponding to a spectrum mask. FIG. 4E is a diagram of a signal power spectrum and a power spectrum mask according to an embodiment of this application. Refer to FIG. 4E. A curve represents $S_p(f)$, a stepped broken line represents S(f), a horizontal axis is a frequency (frequency) in a unit of Hz, and a vertical axis is a power spectral density (power spectral density, PSD).

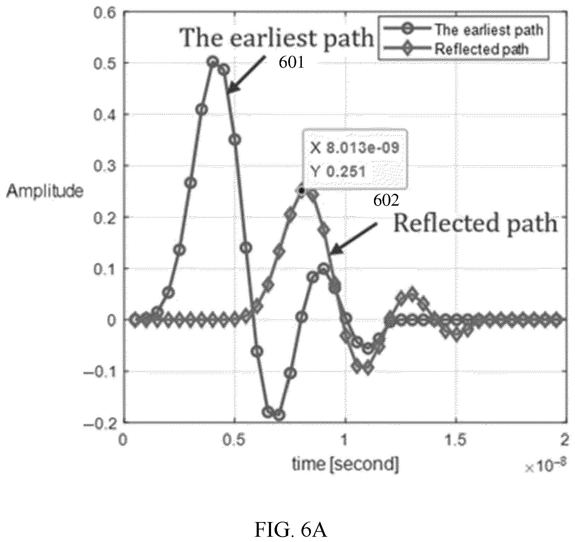

The foregoing constraints on the UWB signal are mainly for ranging application. In other words, the foregoing constraints on the pulse shape of the UWB signal mainly consider ranging performance of the UWB signal. The following describes, with reference to an example, a problem caused when the UWB signal that meets the foregoing constraints is used for sensing. FIG. 5 is an example of an application scenario according to this application. Refer to FIG. 5. A node A transmits a signal to a node B, a straight line arrow represents a LOS path, and a broken line arrow represents a reflected path. FIG. 6A is a diagram of comparison between a pulse shape of a transmit signal on a LOS path and a pulse shape of a transmit signal on a reflected path according to an embodiment of this application. In FIG. 6A, an 8-order Butterworth pulse shape (a pulse shape recommended in a standard) is used as a pulse shape of the transmit signal, 601 represents a pulse shape on the LOS path (the earliest path in FIG. 6A) (that is, the pulse shape of the transmit signal on the LOS path), and 602 represents a pulse shape on the reflected path (reflected path in FIG. 6A) (or a pulse shape of a reflected signal). It can be seen from FIG. 6A that a left sidelobe of a main lobe of the pulse shape on the LOS path is almost zero. Therefore, the signal on the reflected path hardly affects the signal on the LOS path. However, a sidelobe on a right side of the main lobe on the LOS path fluctuates greatly. In this case, the signal on the LOS path greatly affects the signal on the reflected path. FIG.

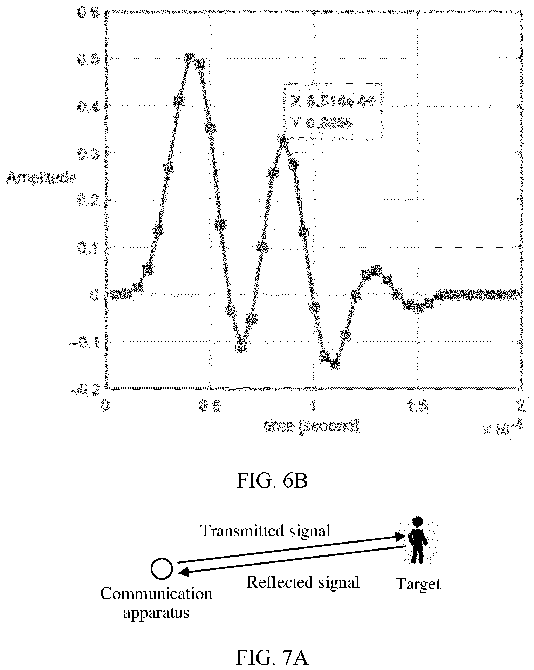

6B is a diagram of superposition of a pulse shape of a transmit signal on a LOS path and a pulse shape of a transmit signal on a reflected path according to an embodiment of this application. In FIG. 6A and FIG. 6B, a horizontal axis is a time (time) in a unit of second (second), and a vertical axis is an amplitude (amplitude). In FIG. 6A, coordinates of a peak of the signal on the reflected path are ($8.013e^{-9}$, 0.251), and in FIG. 6B, coordinates of a peak of the signal on the reflected path are ($8.514e^{-9}$, 0.3266). It can be seen from FIG. 6A and FIG. 6B that both a location and strength that are of the signal on the reflected path are affected by the LOS path.

In ranging application, measurement precision on a LOS path is mainly concerned. The pulse shape shown in FIG. 6A is conducive to ranging. However, for sensing application, a reflected signal is used to sense a target in an environment, and measurement precision on a reflected path is concerned. In this case, the pulse shape is not conducive to sensing application. Therefore, a pulse shape of a UWB signal with both strong ranging performance and strong sensing performance needs to be designed. In this application, ranging performance and sensing performance are comprehensively considered, and a new pulse shape is designed. Impact of a sidelobe of the pulse shape on the sensing performance can be reduced by using the pulse shape, thereby improving the sensing performance and meeting a requirement of ranging application. A main principle of this application is to further limit a time domain mask that the pulse shape of the UWB signal needs to meet. In other words, this application provides a new time domain mask, and the new time domain mask is a further limitation on the time domain mask shown in FIG. 3. It may be understood that a pulse shape that meets (or is constrained by) the new time domain mask provided in this application definitely meets the time domain mask shown in FIG. 3. In addition, this application further provides several criteria that the pulse shape of the UWB signal needs to meet, to guide pulse shape design and selection, and improve sensing performance.

Communication solutions provided in this application may work in a mono-static (mono-static) sensing mode, a bi-static (bi-static) sensing mode, and a multi-static (multi-static) sensing mode. The following briefly describes the three sensing modes.

FIG. 7A is a diagram of a mono-static sensing mode according to an embodiment of this application. Refer to FIG. 7A. A transmitter and a receiver are deployed at a same location, for example, deployed in a same communication apparatus. The transmitter (transmitter) transmits a signal, the transmitted signal is received by the receiver (receiver) after being reflected by a target (for example, a human body in FIG. 7A), and the transmit end may infer a distance between the target (human body) and the transmitter/receiver and speed information by analyzing a delay difference between a received signal and the transmitted signal and a phase difference between received signals at different moments. In FIG. 7A, the communication apparatus is both a transmit end and a receive end. In this application, a transmit end and a transmit end may be interchangeable.

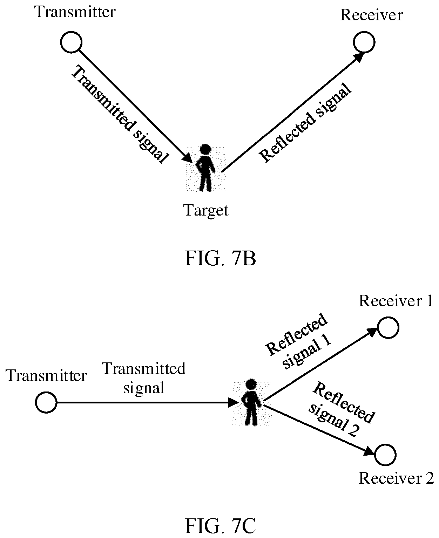

FIG. 7B is a diagram of a bi-static sensing mode according to an embodiment of this application. Refer to FIG. 7B. In the bi-static sensing mode, a transmitter and a receiver are separated in space, that is, the transmitter and the receiver are deployed at different locations. The transmitter transmits a signal, the transmitted signal (that is, a signal transmitted by a transmit end) is received by the receiver after being reflected by a target (for example, a human body in FIG. 7B), and the receiver may infer a length of a transmitter-target-receiver path and a variation of the length of the path with time by analyzing a delay difference between a received signal and the transmitted signal and a phase difference between received signals at different moments. In this case, the transmitter may be considered as a transmit end on which a transmitter is deployed, and the receiver may be considered as a receive end on which a receiver is deployed. Generally, a transmit end and a receive end (that is, a transmitter and a receiver) agree on a format of a transmitted signal. Therefore, the receiver knows the transmitted signal, and after receiving a reflected signal, the receiver obtains delay difference information by analyzing a difference between the reflected signal and the agreed transmitted signal.

FIG. 7C is a diagram of a multi-static sensing mode according to an embodiment of this application. Refer to FIG. 7C. In the multi-static sensing mode, a transmitter and a receiver are separated in space, that is, the transmitter and the receiver are deployed at different locations. The transmitter transmits a signal, the transmitted signal (that is, a signal transmitted by a transmit end) is received by a plurality of receivers (FIG. 7C shows only a receiver 1 and a receiver 2) after being reflected by a target (for example, a human body in FIG. 7C), and the receivers each may infer a length of a transmitter-target-receive path and a variation of the length of the path over time by analyzing a delay difference between a received signal (for example, a reflected signal 1 and a reflected signal 2) and the transmitted signal and a phase difference between received signals at different moments. Spatial coordinates of the target and a speed of the target can be effectively measured through measuring at a plurality of nodes. In this case, the transmitter may be considered as a transmit end on which a transmitter is deployed, and the receiver may be considered as a receive end on which a receiver is deployed.

The following first describes criteria that the pulse shape of the UWB signal provided in this application needs to meet, and a time domain mask designed based on these criteria.

The foregoing analyzes several key indicators focused on in sensing application, including the ranging resolution, the peak to sidelobe ratio, and the spectral efficiency. It is assumed that a transmitted baseband pulse shape is $p(t)$ and a window function is $w(t)$. In this case, a windowed pulse shape is:

$$p_w(t) = p(t)w(t) \quad (5).$$

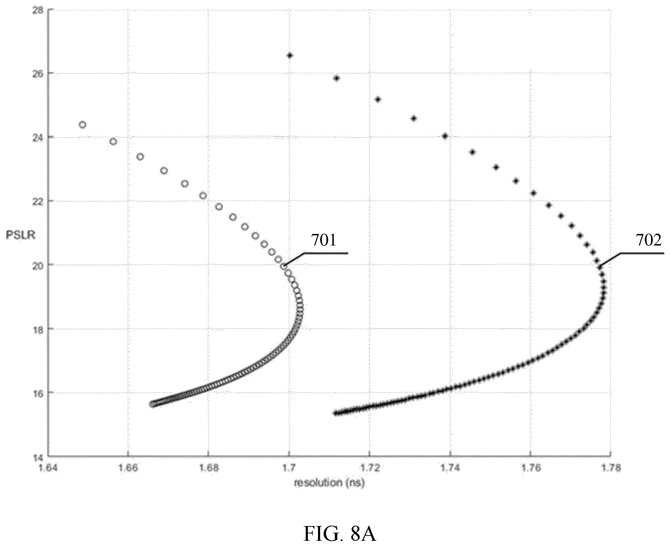

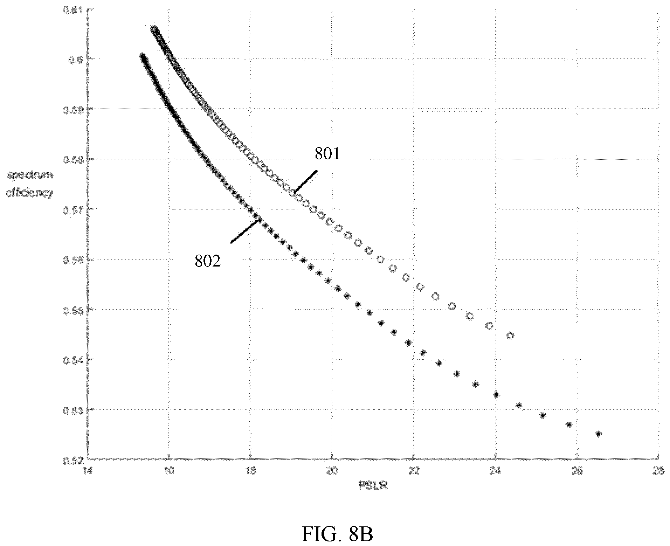

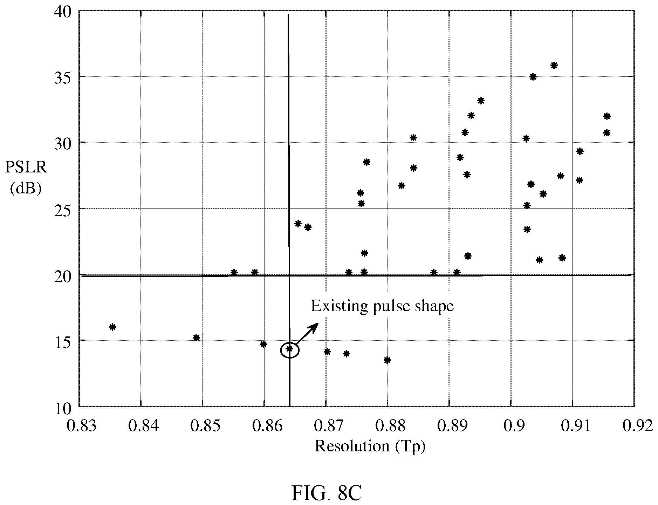

There are a plurality of windowing manners, including a Gaussian window, a Caesar window, a Blackman window, and the like. IEEE 802.15.4z recommends using an 8-order Butterworth pulse shape. Herein, 7-order and 8-order Butterworth pulse shapes are used as a reference. A Gaussian window is performed on the 7-order and 8-order Butterworth pulse shapes, to select a pulse shape that meets a time domain mask and a spectrum mask in the existing IEEE 802.15.4z standard, and a ranging resolution, a PSLR, and spectral efficiency that are of the pulse shape are analyzed. FIG. 8A is a diagram of a relationship between a ranging resolution and a PSLR according to an embodiment of this application. Refer to FIG. 8B. A horizontal axis represents a ranging resolution in a unit of ns, a vertical axis represents a PSLR, 701 (corresponding to a circle) indicates a relationship between a ranging resolution and a PSLR that are obtained by performing a Gaussian window on a 7-order Butterworth pulse shape, and 702 (corresponding to a star) indicates a relationship between a ranging resolution and a PSLR that are obtained by performing a Gaussian window on a 7-order Butterworth pulse shape. FIG. 8B is a diagram of a relationship between a PSLR and a peak to sidelobe ratio according to an embodiment of this application. Refer to FIG. 8B. A horizontal axis represents a PSLR, a vertical axis represents a peak to sidelobe ratio, 801 (corresponding to a circle) indicates a relationship between a PSLR and a peak to sidelobe ratio that are obtained by performing a Gaussian window on a 7-order Butterworth pulse shape, and 802 (corresponding to a star) indicates a relationship between a PSLR and a peak to sidelobe ratio that are obtained by performing a Gaussian window on an 8-order Butterworth pulse shape. It can be learned from FIG. 8A and FIG. 8B that the three indicators affect each other, and the three indicators cannot be optimal together. In other words, the ranging resolution, the peak to sidelobe ratio, and the spectral efficiency cannot be optimal at the same time. It is assumed that the ranging resolution and the peak to sidelobe ratio of the UWB signal need to be preferentially ensured. A pulse shape with both an optimal ranging resolution and an optimal peak to sidelobe ratio may be selected from FIG. 8A. A pulse shape corresponding to a point in an upper left corner in FIG. 8A has both an optimal ranging resolution and an optimal PSLR. It should be understood that different window functions may be performed on any pulse shape in a similar manner, and an optimal pulse shape, that is, a pulse shape with both an optimal ranging resolution and an optimal PSLR, is selected from a windowed result. FIG. 8C is a comparison diagram of optimal pulse shapes according to an embodiment of this application. Different window functions are performed on Butterworth pulse shapes of different orders, and an optimal pulse shape is selected from windowed results, to form a result shown in FIG. 8C. In a case of a 499.2 MHz bandwidth, a ranging resolution and a PSLR that are of an 8-order Butterworth pulse shape are 1.65 ns and 14.37 dB, respectively. It can be seen from FIG. 8C that a large quantity of pulse shapes can be more optimal than an existing pulse shape in terms of both a ranging resolution and a PSLR, that is, these pulse shapes are 8-order Butterworth pulse shapes that meet the foregoing constraints.

To balance ranging performance and sensing performance of the UWB signal, this application proposes that the pulse shape of the UWB signal needs to meet the following several criteria (referred to as Criterion 1 below).

(1) A ranging resolution is not lower than that of an 8-order Butterworth pulse shape.
(2) A value range of a PSLR (in a unit of dB) is greater than 20 dB.
(3) Spectral efficiency needs to be higher than a first threshold.
(4) A power spectrum mask specified in IEEE 802.15.4z is met.

The value range of the PSLR may be set based on an actual requirement. For example, the PSLR (in a unit of dB) needs to be greater than a PSLR of an existing pulse shape by more than 39% (19.97 dB). The first threshold may be set based on an actual requirement. For example, the first threshold may be 35%, 36%, 38%, 40%, 42%, 44%, 45%, or the like. In this application, the existing pulse shape is the 8-order Butterworth pulse shape.

It should be noted that different UWB channels have different bandwidths, including 499.2 MHz, 1331.2 MHz, 1081.6 MHz, and 1354.97 MHz. For different channels, resolutions of the 8-order Butterworth pulse shape are different, and PSLRs remain unchanged. In this application, that the ranging resolution is not lower than that of the 8-order Butterworth pulse shape is for channels with a same bandwidth. In other words, when transmission is performed through channels with a same bandwidth, a ranging resolution of the pulse shape of the UWB signal provided in this application (referred to as a new pulse shape below) is not lower than that of the 8-order Butterworth pulse shape. It may be understood that, for channels with different bandwidths, the foregoing four criteria still remain unchanged.

In some sensing scenarios, an interference suppression capability of the UWB signal needs to be improved. In this case, the UWB signal needs to have a high PSLR, and a resolution of the UWB signal may not be high. To improve the interference suppression capability of the UWB signal, this application proposes that the pulse shape of the UWB signal needs to meet the following several criteria (referred to as Criterion 2 below).

(1) A value range of a ranging resolution ranges from 0.875 Tp to 1 Tp.
(2) A value range of a PSLR (in a unit of dB) is greater than 30 dB.

(3) Spectral efficiency is higher than a second threshold.
(4) A power spectrum mask specified in IEEE 802.15.4z is met.

Tp=1/B, where B represents a bandwidth of a channel occupied by the UWB signal. The value range of the ranging resolution may be set based on an actual requirement. For example, the ranging resolution of the pulse shape of the UWB signal provided in this application is not lower than 10% of a ranging resolution of the 8-order Butterworth pulse shape, that is, a ranging resolution of the new pulse shape is at least 90% of the ranging resolution of the 8-order Butterworth pulse shape. The value range of the PSLR may be set based on an actual requirement. For example, the PSLR (in a unit of dB) needs to be greater than a PSLR of an existing pulse shape by more than 100% (28.74 dB). The second threshold may be set based on an actual requirement. For example, the second threshold may be 35%, 36%, 38%, 40%, 42%, 44%, 45%, or the like.

It should be noted that different UWB channels have different bandwidths, including 499.2 MHz, 1331.2 MHz, 1081.6 MHz, and 1354.97 MHz. For different channels, resolutions of a same pulse shape are different, and PSLRs remain unchanged. Therefore, for different channels, different ranging resolutions may be set for the new pulse shape. For channels with different bandwidths, the foregoing four criteria still remain unchanged.

To balance ranging performance and sensing performance of the UWB signal, this application proposes that the pulse shape of the UWB signal needs to meet Criterion 1 or Criterion 2. It should be understood that Criterion 1 and Criterion 2 are merely examples, and should not be understood as that the time domain mask or the pulse shape of the UWB signal can be designed only based on the two criteria. In other words, a pulse shape that is of a UWB signal and that is designed by a person skilled in the art based on another similar criterion (both ranging performance and sensing performance of the pulse shape are considered) also falls within the protection scope of this application.

In a possible implementation, a new time domain mask is determined based on Criterion 1 or Criterion 2, so that a UWB signal whose ranging performance and sensing performance are both considered is generated by using the new time domain mask. In actual application, a transmit end may generate a transmit signal based on the new time domain mask, to ensure ranging performance and sensing performance of the transmit signal.

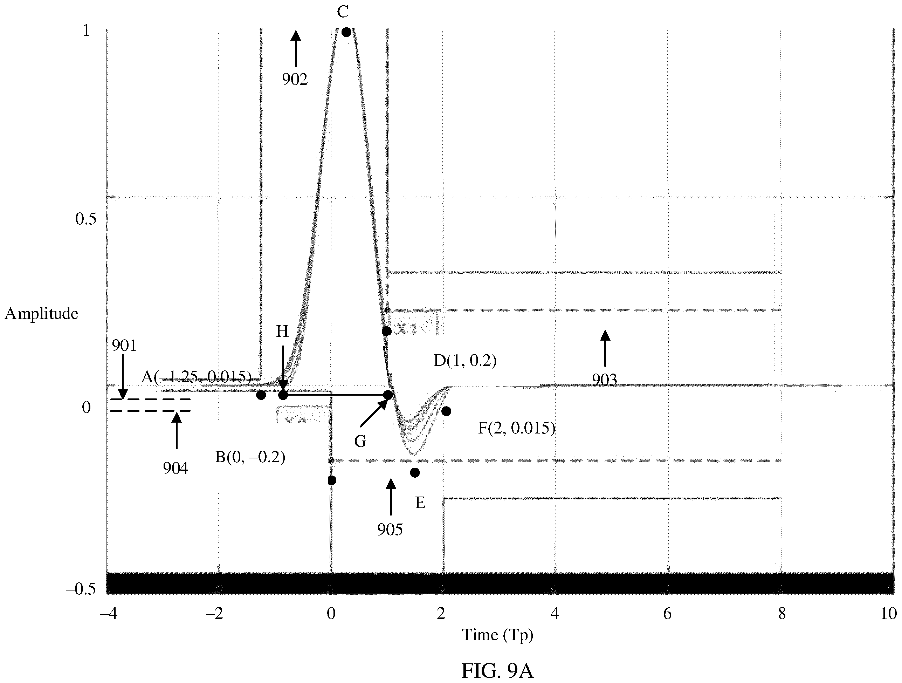

FIG. 9A is an example of a time domain mask according to an embodiment of this application. The time domain mask shown in FIG. 9A may be considered as a possible time domain mask determined based on Criterion 1 or Criterion 2. A pulse shape that meets constraints of the time domain mask provided in this application (referred to as a time domain mask 1 below) has good ranging resolution performance and good PSLR performance. In this application, that a pulse shape meets constraints of a time domain mask means that an amplitude of a highest peak of the pulse shape is scaled to 1, and then the pulse shape is included in an area limited by a boundary of the time domain mask; and that the amplitude of the highest peak of the pulse shape is scaled to 1 means that the pulse shape is scaled as a whole, and the amplitude of the highest peak of the pulse shape is scaled to 1.

Refer to FIG. 9A. A horizontal axis represents a time in a unit of Tp, Tp=1/B, and a vertical axis represents an amplitude. An upper boundary of the time domain mask provided in this embodiment of this application (referred to as the time domain mask 1 below) includes a line segment indicated by 901, a line segment indicated by 902, and a line segment indicated by 903, and a lower boundary of the time domain mask 1 includes a line segment indicated by 904 and a line segment indicated by 905. Coordinates of a horizontal axis corresponding to the line segment indicated by 901 are less than -1.25, a range of a horizontal axis corresponding to the line segment indicated by 902 is [-1.25, 1], coordinates of a horizontal axis corresponding to the line segment indicated by 903 are greater than 1, coordinates of a horizontal axis corresponding to the line segment indicated by 904 are less than 0, and coordinates of a horizontal axis corresponding to the line segment indicated by 905 are greater than or equal to 0. Coordinates of a point A are (-1.25, 0.015), coordinates of a point B are (0, -0.2), coordinates of a point D are (1, 0.2), coordinates of a point F are (2, 0.015), a point C represents a peak point of a main lobe, the point D represents a trough point of a first sidelobe, values of vertical coordinates of a point H and a point G are both reference values, and a difference between horizontal coordinates corresponding to the point H and the point G is a width corresponding to the first sidelobe. A range of coordinates of a horizontal axis corresponding to a first time unit are [-1.25, 1], and the first time unit corresponds to the line segment indicated by 902, that is, a time between the point A and the point D. Coordinates of a horizontal axis corresponding to a second time unit are greater than 1.25, and the second time unit corresponds to the line segment indicated by 903, that is, a time after the point D. Coordinates of a horizontal axis corresponding to a third time unit are greater than 0, and the third time unit corresponds to the line segment indicated by 905, that is, a time after the point B. Coordinates of a horizontal axis corresponding to a fifth time unit are less than -1.25, and the fifth time unit corresponds to the line segment indicated by 901, that is, a time before the point A. Coordinates of a horizontal axis corresponding to a sixth time unit are less than 0, and the sixth time unit corresponds to the line segment indicated by 904, that is, a time before the point B. An upper boundary of the time domain mask 1 in the fifth time unit is a line segment whose vertical coordinate is 0.015, that is, values corresponding to the upper boundary are 0.015. An upper boundary of the time domain mask 1 in the first time unit is a line segment whose vertical coordinate is 1, that is, values corresponding to the upper boundary are all 1. An upper boundary of the time domain mask 1 in the second time unit is a first value (for example, 0.2), that is, the upper boundary of the time domain mask 1 in the second time unit is a line segment whose vertical coordinate is the first value, and the first value is less than 0.3. A value corresponding to a lower boundary of the time domain mask 1 in the third time unit is a second value, that is, the lower boundary of the time domain mask 1 in the third time unit is a line segment whose vertical coordinate is the second value, and the second value (for example, -0.2) is greater than -0.5. A reference value may be 0, 0.01, 0.015, 0.02, or the like. In a possible implementation, the lower boundary in the third time unit includes a boundary 1 and a boundary 2, the boundary 1 is a line segment whose vertical coordinate is the second value, and the boundary 2 is a line segment whose vertical coordinate is a third value. For example, the third time unit includes a fourth time unit and a seventh time unit, a range of coordinates of a horizontal axis corresponding to the fourth time unit are [0, 2], coordinates of a horizontal axis corresponding to the seventh time unit are greater than 2, a lower boundary in the fourth time unit is a line segment whose vertical coordinate is the second value, and a lower boundary in the seventh time unit is a line segment whose vertical coordinate is the third value. The second value is less than the third value. A value range of the second value may be (-0.3, -0.15]. A value range of the third value may be (-0.3, -0.05]. For example, the second value is -0.2, and the third value is -0.1. For another example, the second value is -0.15, and the third value is -0.10. For another example, the second value is -0.2, and the third value is -0.05.

The foregoing describes a boundary of the time domain mask 1 with reference to FIG. 9A. Refer to FIG. 9A. Some possible pulse shapes that meet constraints of the time domain mask 1 meet the following conditions: When a peak value of a main lobe of a pulse shape is scaled to 1, a peak value of a first sidelobe (adjacent to the main lobe and located on a right side of the main lobe) of the pulse shape falls within a first peak value range, and a peak value of a second sidelobe of the pulse shape falls within a second peak value range. The second sidelobe may be a sidelobe with a highest peak value on a right side of the first sidelobe in the pulse shape. If the main lobe is a peak, a peak value of the main lobe is a peak value of the peak corresponding to the main lobe; or if the main lobe is a trough, a peak value of the main lobe is an absolute value of a trough value of the trough corresponding to the main lobe. If a sidelobe is a peak, a peak value of the sidelobe is a peak value of the peak corresponding to the sidelobe; or if the sidelobe is a trough, a peak value of the sidelobe is an absolute value of a trough value of the trough corresponding to the sidelobe. It should be understood that both the peak value of the main lobe and the peak value of the sidelobe are positive numbers. The pulse shape shown in FIG. 9A is an example of a pulse shape that meets the constraints of the time domain mask 1. Refer to FIG. 9A. The lower boundary in the third time unit corresponds to the first peak value range, and an upper boundary and the lower boundary in the fourth time unit correspond to the second peak value range. That the peak value of the second sidelobe of the pulse shape falls within the second peak value range may be understood as that a peak value of any sidelobe on the right side of the first sidelobe falls within the second peak value range. That the peak value of the second sidelobe of the pulse shape falls within the second peak value range may be replaced with: A peak value of any peak on the right side of the first sidelobe is less than the first value, and a trough value of any trough on the right side of the first sidelobe is greater than the second value.

The time domain mask shown in FIG. 9A is merely an example of a time domain mask provided in this application, and another similar time domain mask (a time domain mask that can balance ranging performance and sensing performance of a pulse shape) also falls within the protection scope of this application.

In actual application, based on the foregoing two criteria, namely, Criterion 1 and Criterion 2, this application provides two corresponding pulse shape sets, a pulse shape in the first pulse shape set is used for a ranging resolution, and a pulse shape in the second pulse shape set is used for a PSLR.

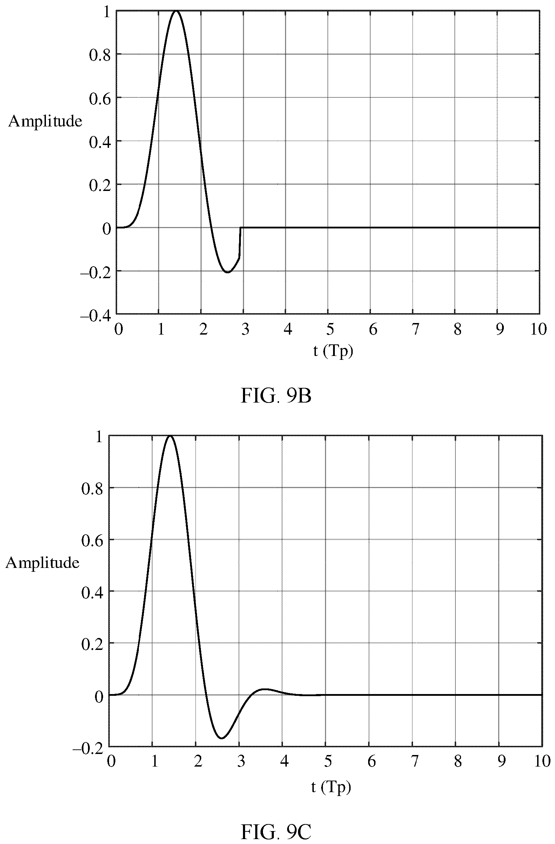

The first pulse shape set includes the following pulse shapes: a pulse shape shown in FIG. 9B and a pulse shape shown in FIG. 9C. A basic pulse shape of the pulse shape shown in FIG. 9B is 6-order Butterworth pulse shape, a window function type is a Caesar window, and a window parameter is 1.35. A basic pulse shape of the pulse shape shown in FIG. 9C is 6-order Butterworth pulse shape, a window function type is a Gaussian window, and a window parameter is 1.25*Tp.

| Basic pulse shape | Window function type | Window parameter | Specific pulse shape |
|---|---|---|---|
| 6-order Butterworth pulse shape | Caesar window | 1.35 | Refer to FIG. 9B |
| 6-order Butterworth pulse shape | Gaussian window | 1.25*Tp | Refer to FIG. 9C |

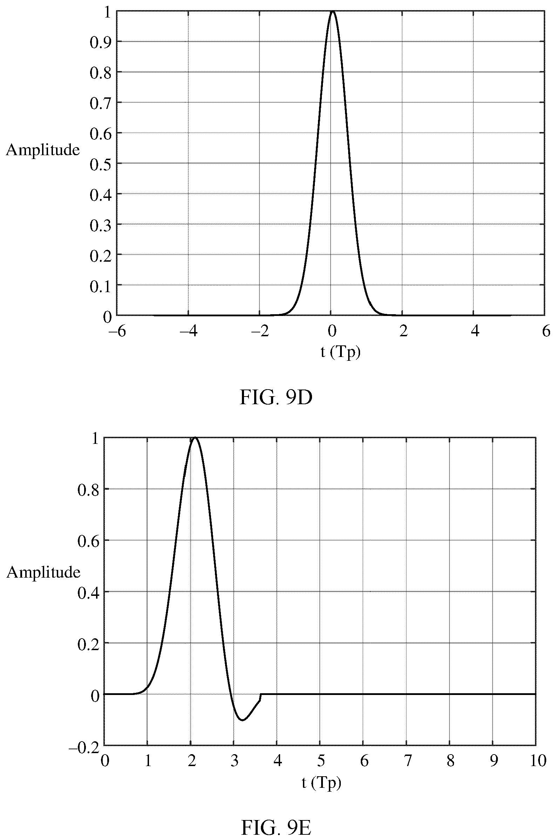

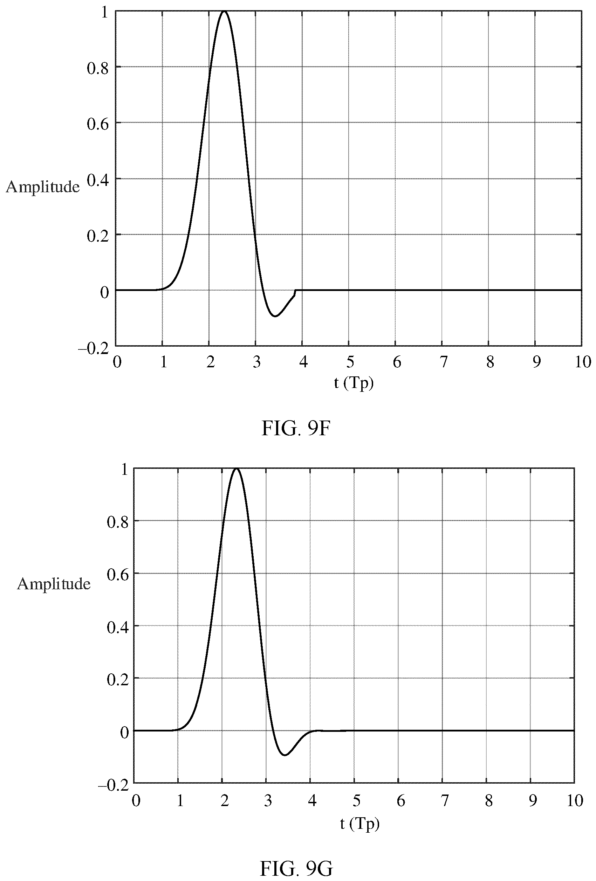

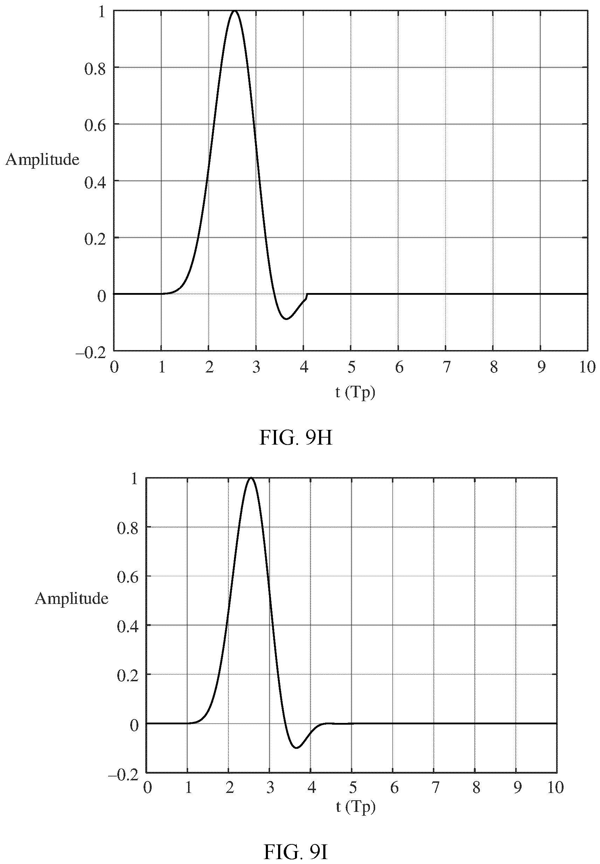

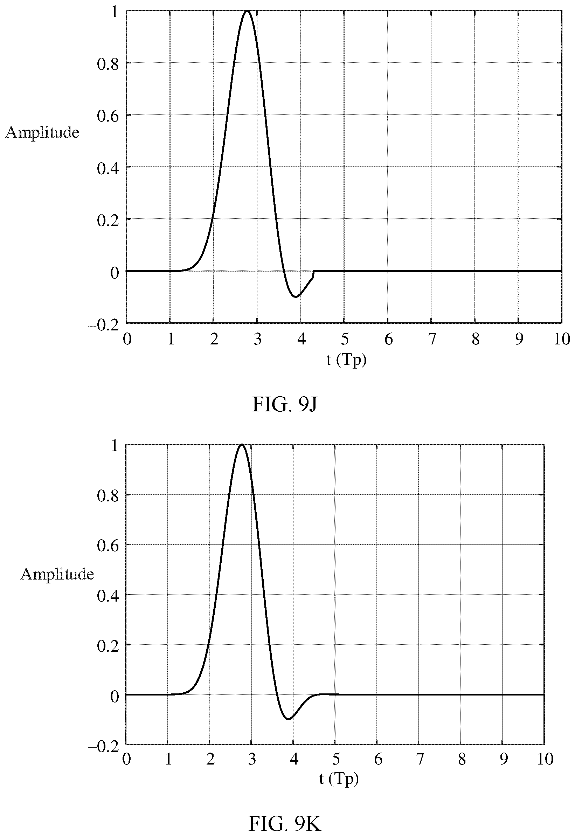

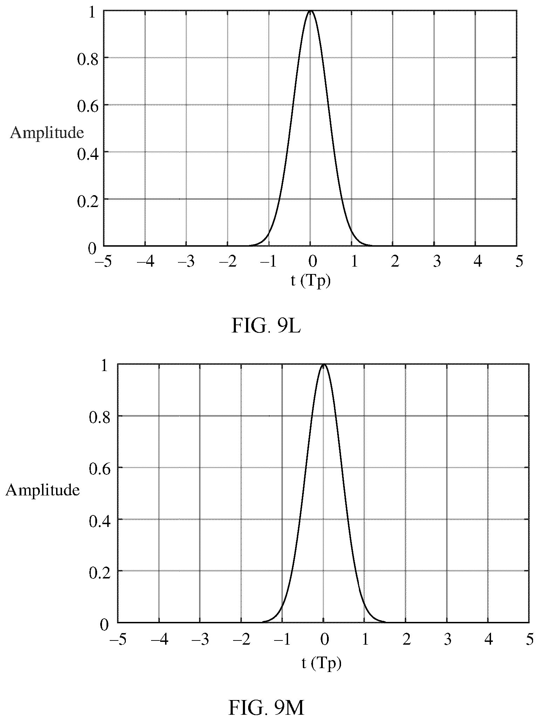

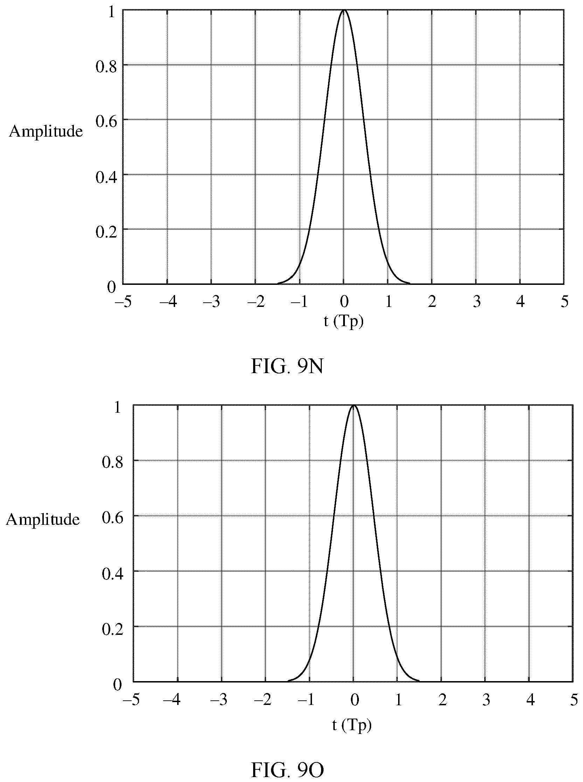

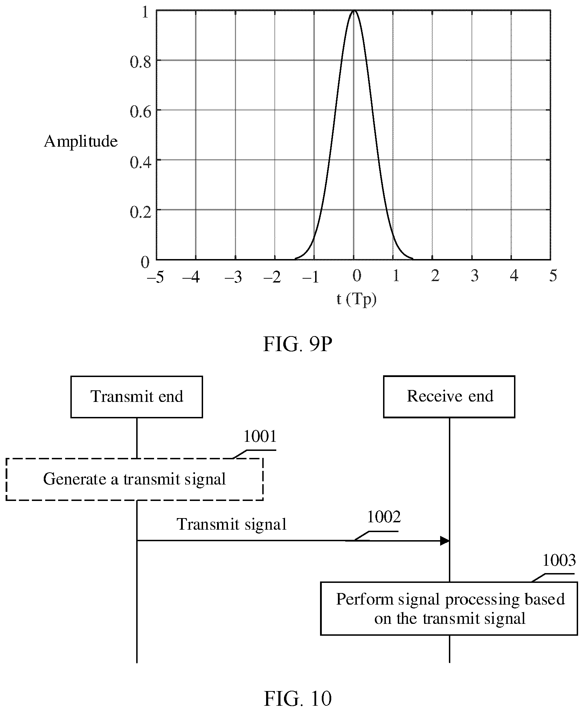

The second pulse shape set includes the following pulse shapes: pulse shapes shown in FIG. 9D to FIG. 9P. A basic pulse shape of the pulse shape shown in FIG. 9D is a Gaussian pulse shape ($\sigma = 0.41Tp$), a window function type is no windowing, and a window parameter is NA. A basic pulse shape of the pulse shape shown in FIG. 9E is 9-order Butterworth pulse shape, a window function type is a Caesar window, and a window parameter is 4.05. A basic pulse shape of the pulse shape shown in FIG. 9F is 10-order Butterworth pulse shape, a window function type is a Caesar window, and a window parameter is 4.4. A basic pulse shape of the pulse shape shown in FIG. 9G is 10-order Butterworth pulse shape, a window function type is a Blackman window, and a window parameter is 0.301. A basic pulse shape of the pulse shape shown in FIG. 9H is 11-order Butterworth pulse shape, a window function type is a Caesar window, and a window parameter is 4.75. A basic pulse shape of the pulse shape shown in FIG. 9I is 11-order Butterworth pulse shape, a window function type is a Blackman window, and a window parameter is 0.301. A basic pulse shape of the pulse shape shown in FIG. 9J is 12-order Butterworth pulse shape, a window function type is a Caesar window, and a window parameter is 4.35. A basic pulse shape of the pulse shape shown in FIG. 9K is 12-order Butterworth pulse shape, a window function type is a Blackman window, and a window parameter is 0.301. A basic pulse shape of the pulse shape shown in FIG. 9L is a Gaussian pulse shape ($\sigma = 0.42$Tp), a window function type is no windowing, and a window parameter is NA. A basic pulse shape of the pulse shape shown in FIG. 9M is a Gaussian pulse shape ($\sigma = 0.43$Tp), a window function type is no windowing, and a window parameter is NA. A basic pulse shape of the pulse shape shown in FIG. 9N is a Gaussian pulse shape ($\sigma = 0.44$Tp), a window function type is no windowing, and a window parameter is NA. A basic pulse shape of the pulse shape shown in FIG. 9O is a Gaussian pulse shape ($\sigma = 0.45$Tp), a window function type is no windowing, and a window parameter is NA. A basic pulse shape of the pulse shape shown in FIG. 9P is a Gaussian pulse shape ($\sigma = 0.46$Tp), a window function type is no windowing, and a window parameter is NA.

| Basic pulse shape | Window function type | Window parameter | Specific pulse shape |
|---|---|---|---|
| Gaussian pulse shape ($\sigma = 0.41$Tp) | No windowing | NA | Refer to FIG. 9D |
| Gaussian pulse shape ($\sigma = 0.42$Tp) | No windowing | NA | Refer to FIG. 9L |
| Gaussian pulse shape ($\sigma = 0.43$Tp) | No windowing | NA | Refer to FIG. 9M |
| Gaussian pulse shape ($\sigma = 0.44$Tp) | No windowing | NA | Refer to FIG. 9N |
| Gaussian pulse shape ($\sigma = 0.45$Tp) | No windowing | NA | Refer to FIG. 9O |
| Gaussian pulse shape ($\sigma = 0.46$Tp) | No windowing | NA | Refer to FIG. 9P |
| 9-order Butterworth pulse shape | Caesar window | 4.05 | Refer to FIG. 9E |
| 10-order Butterworth pulse shape | Caesar window | 4.4 | Refer to FIG. 9F |
| 10-order Butterworth pulse shape | Blackman window | 0.301 | Refer to FIG. 9G |
| 11-order Butterworth pulse shape | Caesar window | 4.75 | Refer to FIG. 9H |
| 11-order Butterworth pulse shape | Blackman window | 0.301 | Refer to FIG. 9I |
| 12-order Butterworth pulse shape | Caesar window | 4.35 | Refer to FIG. 9J |
| 12-order Butterworth pulse shape | Blackman window | 0.301 | Refer to FIG. 9K |

It should be understood that pulse shapes in the first pulse shape set and the second pulse shape set are merely some examples, but not all examples.

The foregoing describes the new time domain mask provided in this application and the pulse shape that is of the UWB signal and that can balance ranging performance and sensing performance. The following describes communication solutions provided in this application. The communication solutions provided in this application are applicable to a ranging scenario and a sensing scenario.

It should be noted that the communication solutions provided in this application are mainly applicable to a wireless communication system, and the wireless communication system may comply with a wireless communication standard of the Third Generation Partnership Project (third generation partnership project, 3GPP), or may comply with another wireless communication standard, for example, a wireless communication standard in the 802 series (for example, 802.11, 802.15, or 802.20) of the Institute of Electrical and Electronics Engineers (institute of electrical and electronics engineers, IEEE). For example, the communication solutions provided in this application are applied to a wireless local area network system supporting 802.11 series protocols such as a next-generation Wi-Fi protocol of IEEE 802.11ax like 802.11be, Wi-Fi 7, or EHT, and a next generation of 802.11be like Wi-Fi 8.

FIG. 10 is an interaction flowchart of a communication method according to an embodiment of this application. As shown in FIG. 10, the method includes the following steps.

1001: A transmit end generates a transmit signal.

In this embodiment of this application, the transmit end is a communication apparatus that can perform ranging, angle measurement, or Doppler measurement by transmitting a UWB signal, for example, a vehicle-mounted device, a vehicle key, a terminal device (including a mobile phone, a computer, a tablet, a watch, a refrigerator, an air conditioner, and the like), or a UWB tag (tag) (installed on an item like a suitcase, a schoolbag, or a key chain) that can transmit the UWB signal. In this embodiment of this application, a receive end is a communication apparatus that can receive the UWB signal, for example, a vehicle-mounted device, a vehicle key, a terminal device (including a mobile phone, a computer, a tablet, a watch, a refrigerator, an air conditioner, and the like), or a UWB tag (tag) (installed on an item like a suitcase, a schoolbag, or a key chain) that can receive the UWB signal.

A peak value of a first sidelobe of the transmit signal falls within a first peak value range, and the first peak value range may be [0.15, 0.3). For example, the first peak value range is any one of [0.15, 0.2], [0.15, 0.25], [0.18, 0.2], [0.20, 0.25], and the like. The first sidelobe of the transmit signal is a sidelobe that is located on a right side of a main lobe of the transmit signal and that is adjacent to the main lobe. In this application, a main lobe of a pulse shape is a peak or a trough with a largest amplitude in the pulse shape, and a sidelobe of the pulse shape is a peak or a trough with a non-largest amplitude in the pulse shape. The main lobe may be a peak or a trough. The sidelobe may be a peak or a trough. A pulse shape of the transmit signal may be any pulse shape in the first pulse shape set or the second pulse shape set. For example, the main lobe of the transmit signal is a peak, and the first sidelobe is a trough. Refer to the pulse shape in FIG. 9A. That the peak value of the first sidelobe falls within the first peak value range means that an absolute value of a trough value of the trough corresponding to the first sidelobe falls within the first peak value range. For another example, the main lobe of the transmit signal is a trough, and the first sidelobe is a peak. That the peak value of the first sidelobe falls within the first peak value range means that a peak value of the peak corresponding to the first sidelobe falls within the first peak value range.

In a possible implementation, a peak value of a second sidelobe of the transmit signal falls within a second peak value range, and the second peak value range may be [0.15, 0.3). For example, the second peak value range is any one of [0.15, 0.2], [0.15, 0.25], [0.18, 0.2], [0.20, 0.25], and the like. The second sidelobe may be a sidelobe with a highest peak value on a right side of the first sidelobe of the transmit signal. The second sidelobe may be a peak or a trough. If the second sidelobe is a peak, that the peak value of the second sidelobe falls within the second peak value range means that a peak value of the peak corresponding to the second sidelobe falls within the second peak value range. If the second sidelobe is a trough, that the peak value of the second sidelobe falls within the second peak value range means that an absolute value of a trough value of the trough corresponding to the second sidelobe falls within the second peak value range. If the second sidelobe is a peak, that the peak value of the second sidelobe falls within the second peak value range means that a peak value of the peak corresponding to the second sidelobe falls within the second peak value range. In this implementation, the peak value of the second sidelobe falls within the second peak value range, so that impact of a line of sight path of the transmit signal on a non-line of sight path of the transmit signal can be reduced.

In a possible implementation, a peak value of any peak on the right side of the first sidelobe is less than a first value, and a trough value of any trough on the right side of the first sidelobe is greater than a second value. The first value is a positive number, and the second value is a negative number. For example, the first value is 0.2, and the second value is -0.2 or -0.1. In this implementation, a peak value of any peak on the right side of the first sidelobe is less than the first value, and a trough value of any trough on the right side of the first sidelobe is greater than the second value, so that impact of a line of sight path of the transmit signal on a non-line of sight path of the transmit signal can be reduced.

In a possible implementation, a width corresponding to the main lobe of the transmit signal is less than $2.25*Tp$, where $Tp=1/B$, and B represents a bandwidth of a channel occupied by the transmit signal. In a possible implementation, if the main lobe of the pulse shape is a peak, a width (namely, a duration) corresponding to the main lobe is a distance between two points whose amplitudes are value a on the main lobe, where the value a may be 0, 0.1, 0.2, 0.3, 0.5, or the like. This is not limited in this application. Alternatively, if the main lobe of the pulse shape is a trough, a width corresponding to the main lobe is a distance between two points whose amplitudes are value b on the main lobe, where the value b may be 0, -0.1, -0.2, -0.3, -0.5, or the like. This is not limited in this application. Optionally, if the main lobe of the pulse shape is a peak, a width (namely, a duration) corresponding to the main lobe is a duration between a point 1 whose amplitude is value c on the main lobe and a point 2 whose amplitude is value d on the main lobe, that is, a difference between horizontal coordinates respectively corresponding to the two points, where the point 1 is located on a left side of a peak point (namely, a point with a largest amplitude), and the point 2 is located on a right side of the peak point. Alternatively, if the main lobe of the pulse shape is a trough, a width (namely, a duration) corresponding to the main lobe is a duration between a point 3 whose amplitude is value e on the main lobe and a point 4 whose amplitude is value f on the main lobe, that is, a difference between horizontal coordinates respectively corresponding to the two points, where the point 3 is located on a left side of a trough point (namely, a point with a largest amplitude on a peak), and the point 4 is located on a right side of the trough point. The value c is different from the value d. The value c may be 0.015, 0.0, 0.02, or the like. The value d may be 0.0, -0.015, 0.015, or the like. The value e is different from the value f. The value e may be -0.015, 0.0, -0.02, or the like. The value f may be 0.0, -0.015, 0.015, or the like. For example, the pulse shape of the transmit signal is the pulse shape in FIG. 9A, and the width corresponding to the main lobe is the first time unit indicated by 901. For another example, the width corresponding to the main lobe is a distance between two points whose amplitudes are 0 on a peak corresponding to the main lobe. The pulse shapes in the two examples are normalized pulse shapes.

In a possible implementation, an absolute value of a difference between a width corresponding to the first sidelobe and the width corresponding to the main lobe is less than a width threshold. The width threshold may be 5%, 8%, 10%, 15%, 20%, or the like of the width corresponding to the main lobe. This is not limited in this embodiment of this application. The width corresponding to the first sidelobe may be greater than the width corresponding to the main lobe, or may be less than the width corresponding to the main lobe. Optionally, if any sidelobe on the pulse shape is a peak, a width corresponding to the any sidelobe is a distance between two points whose amplitudes are value a on the peak corresponding to the any sidelobe; or if any sidelobe on the pulse shape is a trough, a width corresponding to the any sidelobe is a distance between two points whose amplitudes are value b on the trough corresponding to the any sidelobe. Optionally, if any sidelobe of the pulse shape is a peak, a width (namely, a duration) corresponding to the sidelobe is a duration between a point 7 whose amplitude is value c on the peak corresponding to the sidelobe and a point 8 whose amplitude is value d on the peak corresponding to the sidelobe, that is, a difference between horizontal coordinates respectively corresponding to the two points, where the point 7 is located on a left side of a peak point (namely, a point with a largest amplitude), and the point 8 is located on a right side of the peak point. Alternatively, if any sidelobe of the pulse shape is a trough, a width (namely, a duration) corresponding to the sidelobe is a duration between a point 9 whose amplitude is value e on the trough corresponding to the sidelobe and a point 10 whose amplitude is value f on the trough corresponding to the sidelobe, that is, a difference between horizontal coordinates respectively corresponding to the two points, where the point 9 is located on a left side of a trough point (namely, a point with a largest amplitude on a trough), and the point 10 is located on a right side of the trough point. It should be noted that, in this application, the width corresponding to the first sidelobe (adjacent to the main lobe) on the right side of the main lobe of the pulse shape may be a duration between two points whose amplitudes are value a on a trough corresponding to the first sidelobe, may be a duration between a time corresponding to a peak point of a peak corresponding to the main lobe and a time corresponding to a point whose amplitude is value a on a trough corresponding to the first sidelobe, or may have another meaning. This is not limited in this application. **In** a possible implementation, the transmit signal has no sidelobe, that is, has only the main lobe. **In** this case, the sidelobe does not need to be considered.

A possible implementation of step 1002 is as follows: generating the transmit signal based on a time domain mask. The time domain mask is used to limit the peak value of the first sidelobe of the transmit signal. The time domain mask is further used to limit the peak value of the second sidelobe of the transmit signal. The pulse shape of the transmit signal meets a constraint of the time domain mask. A value corresponding to an upper boundary of the time domain mask in a first time unit is 1. An upper boundary of the time domain mask in a second time unit corresponds to a first value, where the first value is greater than or equal to 0.15 and less than 0.3, and the second time unit is later than the first time unit. That the second time unit is later than the first time unit means that a start time of the second time unit is later than an end time of the first time unit, or a start time of the second time unit is an end time of the first time unit. The first time unit corresponds to the width corresponding to the main lobe of the transmit signal, and the second time unit is a time corresponding to each of sidelobes on a right side of the main lobe of the transmit signal. The upper boundary of the time domain mask in the second time unit corresponds to the peak value of the second sidelobe of the transmit signal. A lower boundary of the time domain mask in a third time unit corresponds to a second value. A part of the third time unit belongs to the first time unit, and the other part of the third time unit belongs to the second time unit. The second value is less than or equal to -0.15 and greater than -0.3. The lower boundary of the time domain mask in the third time unit corresponds to the peak value of the first sidelobe of the transmit signal. A lower boundary of the time domain mask in a fourth time unit corresponds to a third value, where the fourth time unit is later than the third time unit, and the third value is less than or equal to -0.05 and greater than -0.3. It may be understood that the pulse shape of the transmit signal is located in an area defined by a boundary of the time domain mask. FIG. 9A is an example of a time domain mask according to an embodiment of this application.

1002: The transmit end sends the transmit signal.

The transmit signal is used for ranging, angle measurement, or Doppler measurement. The transmit signal may be further used for existence detection, that is, used to detect whether a target (for example, a human body) exists, and may be used for measurement of information such as an angle and a speed of the target. Doppler measurement, existence detection, and measurement of the information such as the angle and the speed of the target may be considered as specific sensing manners. In other words, sensing includes measurement of the information such as the angle and the speed of the target, Doppler measurement, existence detection, and the like. The transmit signal may also be used for another sensing manner.

Correspondingly, the receive end receives the transmit signal. That the receive end receives the transmit signal may be: receiving a signal that is of the transmit signal and that is transmitted through a target (for example, a human body), that is, a reflected signal corresponding to the transmit signal.

1003: The receive end performs signal processing based on the transmit signal.

That the receive end performs signal processing based on the transmit signal may be: performing ranging, existence detection, measurement of an angle, a speed, and the like of a target, Doppler measurement, and the like based on the transmit signal. It may be understood that Doppler measurement may be replaced with another specific sensing manner, for example, existence detection.

In a possible implementation, the transmit end and the receive end are a same communication apparatus. In other words, the transmit end and the receive end are deployed on a same node, namely, a communication apparatus. The transmit end may be a transmitter on the communication apparatus, and the receive end may be a receiver on the communication apparatus. That the transmit end sends the transmit signal may be as follows: The transmit end sends the transmit signal via the transmitter. That the receive end receives the transmit signal may be as follows: The receive end receives the transmit signal via the receiver. FIG. 7A is a scenario to which the communication method in FIG. 10 is applicable. The communication apparatus in FIG. 7A is an entity corresponding to a transmit end and a receive end. In other words, in the scenario shown in FIG. 7A, the communication apparatus is both a transmit end and a receive end.

In a possible implementation, the transmit end and the receive end are different communication apparatuses. In other words, the transmit end and the receive end are deployed on different nodes. In other words, the transmit end is an entity, and the receive end is another entity. The communication method in FIG. 10 is applicable to a bi-static sensing mode. In this case, the transmit end is a transmitter in the mode, and the receive end is a receiver in the mode. FIG. 7B is an example of a bi-static sensing mode to which the communication method in FIG. 10 is applicable. In this case, the transmit end is the transmitter in FIG. 7B, and the receive end is the receiver in FIG. 7B. The communication method in FIG. 10 is applicable to a mono-static sensing mode. In this case, the transmit end is a transmitter in the mode, and the receive end is a receiver in the mode. FIG. 7C is an example of a multi-static sensing mode to which the communication method in FIG. 10 is applicable. In this case, the transmit end is the transmitter in FIG. 7C, and the receive end is the receiver 1 in FIG. 7C.

In this embodiment of this application, the peak value of the first sidelobe of the transmit signal falls within the first peak value range, so that impact of a line of sight path of the transmit signal on a non-line of sight path of the transmit signal can be reduced, and both ranging performance and Doppler measurement performance can be ensured.

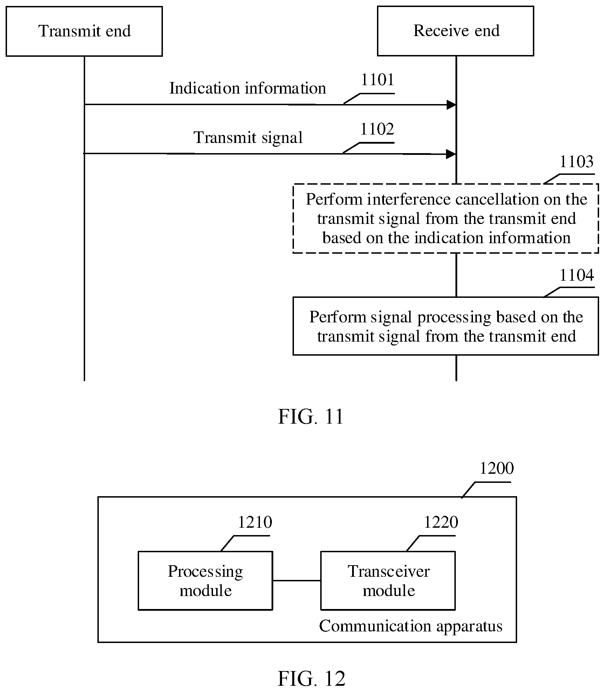

In sensing application, energy of a reflected signal of a target (for example, a human body) is weaker than energy of a reflected signal on a LOS path, and is also weaker than energy of another object (a wall, a ground, or a roof) in an environment. Therefore, if information (for example, an angle and a speed) of the target needs to be obtained, interference cancellation needs to be performed. To eliminate interference, an accurate pulse shape of the transmit signal needs to be learned of. Otherwise, interference cancellation performance is poor, and even negative impact is caused. To ensure sensing performance, the transmit end and the receive end need to exchange a specific pulse shape of a transmitted UWB signal. Embodiments of this application provide a solution in which the transmit end and the receive end exchange the specific pulse shape of the transmitted UWB signal. FIG. 11 is an interaction flowchart of another communication method according to an embodiment of this application. As shown in FIG. 11, the method includes the following steps.

1101: A transmit end sends indication information to a receive end.

The indication information indicates a pulse shape of a UWB signal transmitted by the transmit end. Correspondingly, a receive end receives the indication information. The indication information may be included in downlink control information (downlink control information, DCI), medium access control (medium access control, MAC) layer signaling, or other signaling. The transmit end may send the indication information to the receive end in a sensing service establishment phase, or may send the indication information before sending, to the receive end, the transmit signal used for ranging, angle measurement, or Doppler measurement.

In a possible implementation, the indication information includes a first field, where the first field indicates a pulse shape set to which a pulse shape of the transmit signal belongs. In a possible implementation, the indication information includes a second field, where the second field indicates the pulse shape of the transmit signal.

In actual application, pulse shapes of the UWB signal may be classified into two or more pulse shape sets based on an actual application requirement. In other words, the transmit end may preconfigure two or more pulse shape sets, and pulse shapes in different pulse shape sets are applicable to different scenarios. In different scenarios or different channel conditions, the transmit end may transmit the UWB signal by using pulse shapes in different pulse shape sets. A correspondence between the first field and the pulse shape set and a correspondence between the second field and a parameter of the pulse shape of the UWB signal may be configured at both the transmit end and the receive end. In this way, the receive end can accurately determine, based on the first field and the second field, the pulse shape of the transmit signal sent by the transmit end. For example, based on an actual application requirement, the pulse shapes of the UWB signal may be classified into two pulse shape sets. A resolution is preferentially considered for a pulse shape in a first pulse shape set, and the pulse shape in the first pulse shape set is mainly used in an environment with low interference. A sidelobe suppression capability is preferentially considered for a pulse shape in a second pulse shape set, and the pulse shape in the second pulse shape set is mainly used in an environment with high interference.

A value of one or more bits (bit) included in the first field may indicate the pulse shape set to which the pulse shape of the UWB signal transmitted by the transmit end belongs. For example, the first field includes 1 bit. If a value of the 1 bit is 0, the first field indicates that the pulse shape of the UWB signal transmitted by the transmit end belongs to the first pulse shape set; or if a value of the 1 bit is 1, the first field indicates that the pulse shape of the UWB signal transmitted by the transmit end belongs to the second pulse shape set. Table 2 shows an example of correspondences between values of the first field and pulse shape sets. For example, the first field includes 2 bits. If a value of the 2 bits is 00, the first field indicates that the pulse shape of the UWB signal transmitted by the transmit end belongs to the first pulse shape set; or if a value of the 2 bits is 11, the first field indicates that the pulse shape of the UWB signal transmitted by the transmit end belongs to the second pulse shape set.

Table 2

| First field | Pulse shape set |
|---|---|
| 0 | First pulse shape set, preferentially ensuring a resolution |
| 1 | Second pulse shape set, preferentially ensuring an interference suppression capability |

The value of the one or more bits included in the first field may be considered as an index of the pulse shape set of the UWB signal. For example, the UWB signal sent by the transmit end belongs to the first pulse shape set or the second pulse shape set. If the first field indicates that the pulse shape of the UWB signal transmitted by the transmit end belongs to the first pulse shape set, the second field indicates any pulse shape in the first pulse shape set, that is, a value of one or more bits included in the second field is an index of any pulse shape in the second pulse shape set. If the first field indicates that the pulse shape of the UWB signal transmitted by the transmit end belongs to the second pulse shape set, the second field indicates any pulse shape in the second pulse shape set, that is, a value of one or more bits included in the second field is an index of any pulse shape in the second pulse shape set. Table 3 shows correspondences between values of a bit included in the second field and pulse shapes in the first pulse shape set. Refer to Table 3. When the second field is 000, the second field indicates a specific pulse shape 1. When the second field is 001, the second field indicates a specific pulse shape 2. The rest may be deduced by analogy. It may be understood that, if the second field is 000, the second field indicates that the pulse shape of the UWB signal sent by the transmit end is the specific pulse shape 1 in the first pulse shape set. Optionally, Table 3 is configured at the receive end, and the receive end determines the pulse shape of the UWB signal sent by the transmit end based on the second field and Table 3. Specific pulse shapes in Table 3 are some pulse shapes in the first pulse shape set.

Table 3

| Second field | Specific pulse shape |
|---|---|
| 000 | Specific pulse shape 1: 6-order Butterworth pulse shape with a Caesar window |
| 001 | Specific pulse shape 2: 6-order Butterworth pulse shape with a Gaussian window |
| 010 | Reserved |
| 011 | Reserved |
| 100 | Reserved |
| 101 | Reserved |
| 110 | Reserved |
| 111 | Reserved |

Table 4 shows correspondences between values of a bit included in the second field and pulse shapes in the second pulse shape set. Refer to Table 4. When the second field is 000, the second field indicates a specific pulse shape 1. When the second field is 001, the second field indicates a specific pulse shape 2. The rest may be deduced by analogy. It may be understood that, if the second field is 000, the second field indicates that the pulse shape of the UWB signal sent by the transmit end is the specific pulse shape 1 in the second pulse shape set. Optionally, Table 4 is configured at the receive end, and the receive end determines the pulse shape of the UWB signal sent by the transmit end based on the second field and Table 4. Specific pulse shapes in Table 4 are some pulse shapes in the second pulse shape set.

Table 4

| 000 | Pulse shape 1: Gaussian pulse shape ($\sigma = 0.41Tp$) |
|---|---|
| 001 | Specific pulse shape 2: 9-order Butterworth pulse shape with a Caesar window |
| 010 | Specific pulse shape 3: 10-order Butterworth pulse shape with a Caesar window |
| 011 | Specific pulse shape 4: 10-order Butterworth pulse shape with a Blackman window |
| 100 | Specific pulse shape 5: 11-order Butterworth pulse shape with a Caesar window |
| 101 | Specific pulse shape 6: 11-order Butterworth pulse shape with a Blackman window |
| 110 | Specific pulse shape 7: 12-order Butterworth pulse shape with a Caesar window |

(continued)

| 111 | Specific pulse shape 8: 12-order Butterworth pulse shape with a Blackman window |
|---|---|

Table 3 is an example of correspondences between the second field and the pulse shapes in the first pulse shape set, and Table 4 is an example of correspondences between the second field and the pulse shapes in the second pulse shape set. It should be understood that the correspondences between values of the bit included in the second field and the pulse shapes in the first pulse shape set and the correspondences between values of the bit included in the second field and the pulse shapes in the second pulse shape set may be configured based on an actual requirement. This is not limited in this application.

In this implementation, the indication information includes the first field and the second field. The pulse shape set to which the UWB signal transmitted by the transmit end belongs and the parameter of the pulse shape of the UWB signal may be accurately indicated by the first field and the second field.

In a possible implementation, the indication information further includes a third field, where the third field indicates that the transmit end generates the UWB signal in a digital manner or generates the UWB signal in an analog manner. Alternatively, the third field indicates that the transmit end has a digital-to-analog conversion function (or capability) or does not have the digital-to-analog conversion function.

A value of one or more bits (bit) included in the third field indicates that the transmit end generates the UWB signal in the digital manner or generates the UWB signal in the analog manner. For example, the third field includes 1 bit. If a value of the 1 bit is 1, the third field indicates that the transmit end generates the UWB signal in the analog manner, that is, the transmit end has the DAC function. If a value of the 1 bit is 0, the third field indicates that the transmit end generates the UWB signal in the analog manner, that is, the transmit end does not have the DAC function. Table 5 shows an example of correspondences between values of the third field and whether the transmit end has the DAC function. Refer to Table 5. If a value of the 1 bit included in the third field is 0, the third field indicates that the transmit end does not have the DAC function. If a value of the 1 bit included in the third field is 1, the third field indicates that the transmit end has the DAC function.

**Table 5**

| 0 | The transmit end does not have the DAC function |
|---|---|
| 1 | The transmit end has the DAC function |

Optionally, the indication information includes the first field, the second field, and the third field; and after the receive end receives the indication information, when the third field indicates that the transmit end has the DAC function (for example, a value of the 1 bit included in the third field is 1), the receive end first determines the pulse shape set to which the pulse shape of the UWB signal sent by the transmit end belongs based on the first field, and then determines a specific pulse shape of the pulse shape based on the second field. Optionally, the indication information includes the first field, the second field, and the third field; and after the receive end receives the indication information, when the third field indicates that the transmit end does not have the DAC function (for example, a value of the 1 bit included in the third field is 1), the first field and the second field are ignored. In other words, when the transmit end does not have the DAC function, values of the first field and the second field in the sent indication information may be any value. For example, both the first field and the second field are set to all 0s or all 1s by default. This is not limited in this application. Optionally, the indication information includes the first field, but does not include the second field or the third field; and when the transmit end does not have the DAC function, the sent indication information may include the third field, but does not include the first field or the second field.

In this implementation, the third field indicates that the transmit end generates the UWB signal in the digital manner or generates the UWB signal in the analog manner, so that the receive end further determines the pulse shape of the transmit signal, and performs interference cancellation based on the pulse shape of the transmit signal.

In this application, a new field, namely, a pulse shape indication (indicator for pulse shape) field, is defined to indicate a specific parameter of the pulse shape of the UWB signal. A name of the indicator for pulse shape field is not limited. The indicator for pulse shape field may include the first field, the second field, and the third field, or may include only the third field. Table 6 is an example of the pulse shape indication field defined in this application. Refer to Table 6. The pulse shape field indication field defined in this application includes 5 bits, that is, a bit 0 to a bit 4. The bit 0 indicates the generation manner of the UWB signal by the transmit end, a bit 1 indicates the pulse shape set (pulse shape set) to which the pulse shape of the UWB signal transmitted by the transmit end belongs, and a bit 2 to the bit 4 indicate the parameter of the pulse shape of the UWB signal transmitted by the transmit end. In other words, the bit 2 to the bit 4 indicate a specific pulse shape (indication of specific pulse shape).

**Table 6**

| Bits: 0 | Bits: 1 | Bits: 2 to 4 |
|---|---|---|
| DAC mode | Pulse shape set | Indication of specific pulse shape |

1102: The transmit end sends a transmit signal to the receive end.

In a possible implementation, the transmit end selects a specific pulse shape from one or more pulse shape sets to send the transmit signal, namely, the UWB signal. Optionally, the transmit end selects any pulse shape in the first pulse shape set and the second pulse shape set to transmit the UWB signal. For example, the transmit end selects a specific pulse shape 1 in the first pulse shape set to send the transmit signal, and the pulse shape of the transmit signal is the same as or basically the same as the specific pulse shape 1 in the first pulse shape set. Correspondingly, the receive end receives the transmit signal sent by the transmit end. The transmit end may select the specific pulse shape in the following manner: If the transmit end has the DAC function, the transmit end may select a corresponding pulse shape set based on a current requirement (focusing on a resolution or focusing on an interference suppression capability), and select the specific pulse shape from the pulse shape set. If the transmit end does not have the DAC function, the transmit end sends a pulse shape that can be generated in the analog manner, for example, a Butterworth pulse shape or a Gaussian pulse shape.

In a possible implementation, the transmit end receives configuration information sent by an access network device, for example, a base station; and determines, based on the configuration information, to send the UWB signal by using a first pulse shape. For example, the transmit end determines, based on the configuration information sent by the access network device, to send the transmit signal by using the specific pulse shape 1 in the first pulse shape set.

1103: The receive end performs interference cancellation on the transmit signal from the transmit end based on the indication information.

The receive end may determine, based on the indication information, the specific pulse shape of the transmit signal sent by the transmit end, and further perform interference cancellation on the transmit signal from the transmit end based on the specific pulse shape. It should be understood that the receive end may perform interference cancellation on any UWB signal, that is, the transmit signal, from the transmit end based on the indication information. A peak value of a first sidelobe of the transmit signal sent by the receive end falls within a first peak value range.

Step 1103 is optional rather than mandatory. It should be understood that, if the third field in the indication information indicates that the transmit end generates the UWB signal in the analog manner, that is, does not indicate the pulse shape of the UWB signal sent by the transmit end, the receive end does not need to perform interference cancellation on the transmit signal from the transmit end based on the indication information.

1104: The receive end performs signal processing based on the transmit signal from the transmit end.

That the receive end performs signal processing based on the transmit signal from the transmit end may be performing ranging, angle measurement, Doppler measurement, or the like based on the transmit signal.

In this embodiment of this application, the indication information is received, so that the receive end can better perform interference cancellation based on the pulse shape of the UWB signal transmitted by the transmit end.

It should be noted that a method procedure in FIG. 10 and a method procedure in FIG. 11 may be two independent method procedures, or may be used together. In other words, the receive end and the transmit end may separately perform the method procedure in FIG. 10 or the method procedure in FIG. 11, or may first perform the method procedure in FIG. 11 before performing the method procedure in FIG. 10.

The following describes, with reference to the accompanying drawings, structures of communication apparatuses that can implement the communication methods provided in embodiments of this application.

FIG. 12 is a diagram of a structure of a communication apparatus 1200 according to an embodiment of this application. The communication apparatus 1200 may correspondingly implement functions or steps implemented by the transmit end in the foregoing method embodiments, or may correspondingly implement functions or steps implemented by the receive end in the foregoing method embodiments. The communication apparatus may include a processing module 1210 and a transceiver module 1220. Optionally, the communication apparatus may further include a storage unit, and the storage unit may be configured to store instructions (code or a program) and/or data. The processing module 1210 and the transceiver module 1220 may be coupled to the storage unit. For example, the processing module 1210 may read the instructions (the code or the program) and/or the data in the storage unit, to implement a corresponding method. The foregoing units may be disposed independently, or may be partially or completely integrated. For example, the transceiver module 1220 may include a sending module and a receiving module. The sending module may be a transmitter, and the receiving module may be a receiver. An entity corresponding to the transceiver module 1220 may be a transceiver, or may be a communication interface.

In some possible implementations, the communication apparatus 1200 can correspondingly implement behavior and functions of the transmit end in the foregoing method embodiments. For example, the communication apparatus 1200 may be a transmit end, or may be a component (for example, a chip or a circuit) used in a transmit end. The transceiver module 1220 may be configured to perform, for example, all receiving or sending operations performed by the transmit end in embodiments in FIG. 10 and FIG. 11, for example, step 1002 in the embodiment shown in FIG. 10, and step 1101 and step 1102 in the embodiment shown in FIG. 11, and/or is configured to support another process of the technology described in this specification. The processing module 1210 is configured to perform all operations other than sending and receiving operations performed by the transmit end in embodiments in FIG. 10 and FIG. 11, for example, step 1001 in the embodiment shown in FIG. 10, and a step of generating indication information and a step of generating a transmit signal in the embodiment shown in FIG. 11.

In some possible implementations, the communication apparatus 1200 can correspondingly implement behavior and functions of the receive end in the foregoing method embodiments. For example, the communication apparatus 1200 may be a receive end, or may be a component (for example, a chip or a circuit) used in a receive end. The transceiver module 1220 may be configured to perform, for example, all receiving or sending operations performed by the receive end in embodiments in FIG. 10 and FIG. 11, for example, step 1002 in the embodiment shown in FIG. 10, and step 1101 and step 1102 in the embodiment shown in FIG. 11, and/or is configured to support another process of the technology described in this specification. The processing module 1210 is configured to perform all operations other than sending and receiving operations performed by the receive end, for example, step 1003 in the embodiment shown in FIG. 10, and step 1103 and step 1104 in the embodiment shown in FIG. 11.

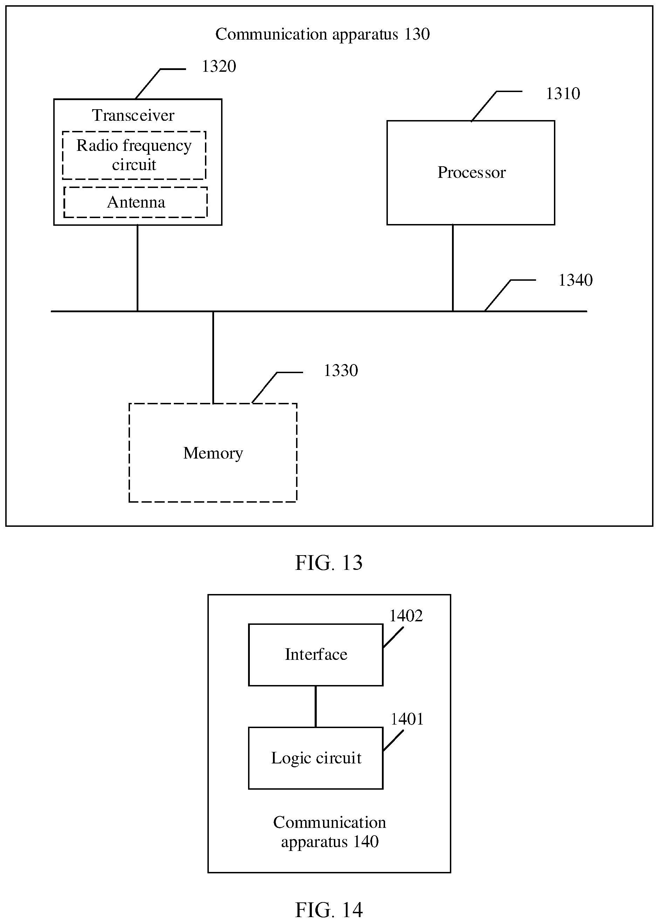

FIG. 13 is a diagram of a structure of another communication apparatus 130 according to an embodiment of this application. The communication apparatus in FIG. 13 may be the foregoing transmit end, or may be the foregoing receive end.

As shown in FIG. 13, the communication apparatus 130 includes at least one processor 1310 and a transceiver 1320.

**In** some embodiments of this application, the processor 1310 and the transceiver 1320 may be configured to perform functions, operations, or the like performed by the transmit end. The transceiver 1320 performs, for example, all receiving or sending operations performed by the transmit end in embodiments in FIG. 10 and FIG. 11. The processor 1310 is configured to perform, for example, all operations other than receiving and sending operations performed by the transmit end in embodiments in FIG. 10 and FIG. 11.

**In** some embodiments of this application, the processor 1310 and the transceiver 1320 may be configured to perform functions, operations, or the like performed by the receive end. The transceiver 1320 performs, for example, all receiving or sending operations performed by the receive end in embodiments in FIG. 10 and FIG. 11. The processor 1310 is configured to perform all operations other than receiving and sending operations performed by the receive end.

The transceiver 1320 is configured to communicate with another device/apparatus via a transmission medium. The processor 1310 receives/sends data and/or signaling via the transceiver 1320, and is configured to implement the methods in the foregoing method embodiments. The processor 1310 may implement functions of the processing module 1210, and the transceiver 1320 may implement functions of the transceiver module 1220.

Optionally, the transceiver 1320 may include a radio frequency circuit and an antenna. The radio frequency circuit is mainly configured to: convert a baseband signal and a radio frequency signal, and process a radio frequency signal. The antenna is mainly configured to receive/send a radio frequency signal in a form of an electromagnetic wave. An input/output apparatus, such as a touchscreen, a display, or a keyboard, is mainly configured to: receive data input by a user, and output data to the user.

Optionally, the communication apparatus 130 may further include at least one memory 1330, configured to store program instructions and/or data. The memory 1330 is coupled to the processor 1310. Coupling in this embodiment of this application may be indirect coupling or a communication connection between apparatuses, units, or modules in an electrical form, a mechanical form, or another form, and is used for information exchange between the apparatuses, the units, or the modules. The processor 1310 may cooperate with the memory 1330. The processor 1310 may execute the program instructions stored in the memory 1330. At least one of the at least one memory may be included in the processor.

After the communication apparatus 130 is powered on, the processor 1310 may read a software program in the memory 1330, interpret and execute instructions of the software program, and process data of the software program. When data needs to be sent wirelessly, the processor 1310 performs baseband processing on the to-be-sent data, and then outputs a baseband signal to the radio frequency circuit; and the radio frequency circuit performs radio frequency processing on the baseband signal, and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1310; and the processor 1310 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 1320, the processor 1310, and the memory 1330 is not limited in this embodiment of this application. In this embodiment of this application, the memory 1330, the processor 1310, and the transceiver 1320 are connected through a bus 1340 in FIG. 13. The bus is represented by using a bold line in FIG. 13. A connection manner between other components is merely an example for description, and is not limited thereto. The bus may be classified into an address bus, a data bus, a control bus, and the like. For ease of representation, only one bold line is used to represent the bus in FIG. 13, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware and a software module in the processor.

FIG. 14 is a diagram of a structure of another communication apparatus 140 according to an embodiment of this application. As shown in FIG. 14, the communication apparatus shown in FIG. 14 includes a logic circuit 1401 and an interface 1402. The processing module 1210 in FIG. 12 may be implemented by the logic circuit 1401, and the transceiver module 1220 in FIG. 12 may be implemented by the interface 1402. The logic circuit 1401 may be a chip, a processing circuit, an integrated circuit, a system-on-chip (system on chip, SoC), or the like, and the interface 1402 may be a communication interface, an input/output interface, or the like. In this embodiment of this application, the logic circuit and the interface may be coupled to each other. A specific connection manner between the logic circuit and the interface is not limited in this embodiment of this application.

In some embodiments of this application, the logic circuit and the interface may be configured to perform functions, operations, or the like performed by the transmit end. In some embodiments of this application, the logic circuit and the interface may be configured to perform functions, operations, or the like performed by the receive end.

This application further provides a computer-readable storage medium. The computer-readable storage medium stores a computer program or instructions. When the computer program or the instructions are run on a computer, the computer is enabled to perform the methods in the foregoing embodiments.

This application further provides a computer program product. The computer program product includes instructions or a computer program. When the instructions or the computer program is run on a computer, the methods in the foregoing embodiments are performed.

This application further provides a communication system, including the transmit end and the receive end.

The following describes two other possible time domain masks provided in embodiments of this application.

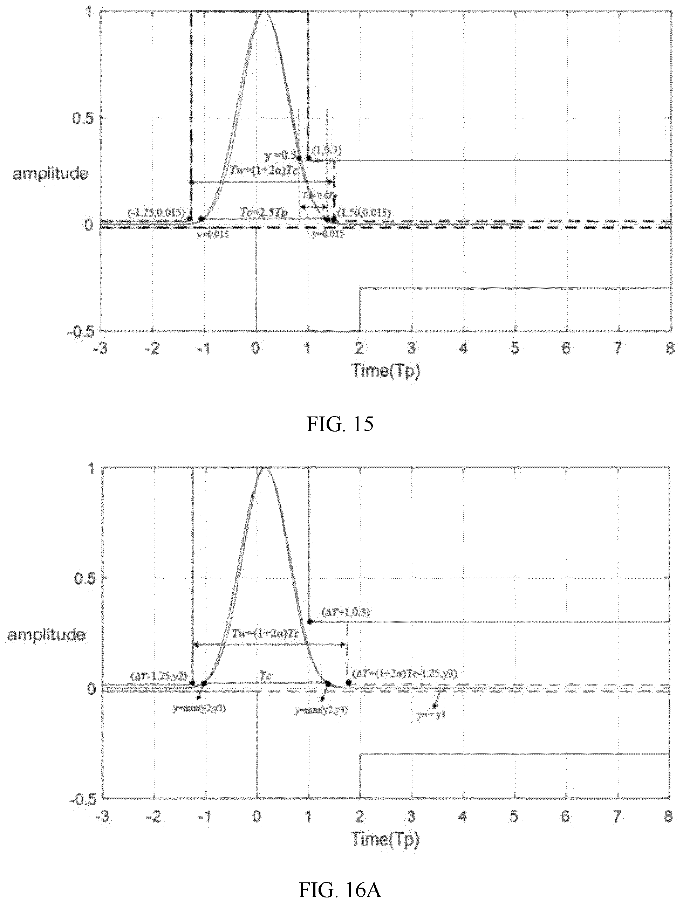

FIG. 15 is an example of a time domain mask according to an embodiment of this application. Refer to FIG. 15. An area enclosed by dashed lines is the time domain mask, a value corresponding to a lower boundary of the time domain mask is -0.015, and (-1.25, 0.015), (1, 0.3), and (1.50, 0.015) are three inflection points (namely, intersection points of two boundary lines) on an upper boundary of the time domain mask. An inflection point is a junction point on a boundary of the time domain mask. In FIG. 15, a value corresponding to an upper boundary of the time domain mask in a time domain less than -1.25 is 0.015; a value corresponding to an upper boundary of the time domain mask in a time domain [-1.25, 1] is 1; a value corresponding to an upper boundary of the time domain mask in a time domain [1, 1.50] is 0.3; and a value corresponding to an upper boundary of the time domain mask in a time domain greater than 1.5 is 0.015.

FIG. 15 shows two pulse shapes. One is a Gaussian pulse shape, and the other is a Caesar pulse shape. The Gaussian pulse shape may be represented as:

$$p(t) = \begin{cases} Ae^{-\frac{t^2}{2\sigma^2}}, & |t| \le L/2 \\ 0, & |t| > L/2 \end{cases} \quad (6).$$

A represents an amplitude, $\sigma$ may be used to adjust a width of the pulse shape, $\sigma=8.8e^{-10}$ is used herein, L represents a length of a non-zero element, the amplitude of the pulse shape is normalized, and a length of L is 3*Tp.

The Caesar pulse shape may be represented as:

$$p(t) = \begin{cases} \frac{1}{L} \frac{I_0\left[\pi\beta\sqrt{1-\left(\frac{2t}{L}\right)^2}\right]}{I_0[\pi\beta]}, & |t| \le L/2 \\ 0, & |t| > L/2 \end{cases} \quad (7).$$

$I_0$ is a 0-order first-kind modified Bessel function, $\pi\beta$ = 10 is used herein, L represents a length of a non-zero element, and a length of L is 3*Tp. It can be seen from the figure that the two pulse shapes are very close. $T_C$ in the figure is an interval between two points at which y=C, and two C values can be obtained from the two pulse shapes. In this case, one C is obtained by using an average value of the two C values. For example, in the following analysis, C=0.015 may be set. $T_d$ in the figure is an interval between a point at which y=0.3 on the pulse shape and a point at which y=C on the pulse shape, and two $T_d$ values may be obtained from the two pulse shapes. In this case, one $T_d$ is obtained by using an average value of the two $T_d$ values. It should be noted that the two pulse shapes are slightly translated in time domain during drawing, and a translation operation does not affect values of $T_C$ and $T_d$.

Time domain mask 1: A lower boundary of the time domain mask corresponds to a first value (that is, a straight line), and a value range of the first value is [-0.2, -0.001]; and a value corresponding to an upper boundary of the time domain mask in a time domain [-1.25, 1] is 1, a value corresponding to an upper boundary of the time domain mask in a time domain (1, third value] is 0.3, a value corresponding to an upper boundary of the time domain mask in a time domain (third value, ∞) is a second value (that is, a straight line), a value range of the second value is [0.001, 0.2], and a value range of the third value is (1.0, 2.0]. [-1.25, third value] is a first time domain, the time domain [-1.25, 1] is a first sub-domain, and the time domain (1, third value] is a second sub-domain. The time domain (third value, ∞) is a second time domain. It should be noted that boundary values of time domains are not limited in this application. For example, the time domain [-1.25, 1) is the first sub-domain, and the time domain [1, third value] is the second sub-domain. For another example, [-1.25, third value) is the first time domain, and the time domain [third value, ∞) is the second time domain. A new time domain mask of a pulse shape is defined, where Tc=2.5Tp, and Tw=(1+2α)Tc. Refer to FIG. 16A. There is a line y=-y1 at the bottom of a time domain mask, that is, a lower boundary; and coordinates of a first inflection point of the time domain mask are (ΔT-1.25, y2), coordinates of a second inflection point are (ΔT+1, 0.3), and coordinates of a third inflection point are (ΔT+(1+2α)Tc-1.25, y3). The three inflection points are all points on an upper boundary of the time domain mask, that is, junction points of parts that are on the upper boundary and that correspond to different values. ΔT is any constant, that is, the time domain mask may be randomly offset in time domain. y1 (namely, a first value) is an adjustable parameter, and a value range of y1 is [0.001, 0.2]. y2 is also an adjustable parameter, and a value of y2 is less than or equal to 0.015. y3 (namely, a second value) is also an adjustable parameter, and a value range of y3 is [0.001, 0.2]. α is also an adjustable parameter, and a value of α may range from 0 to 100. The following describes some typical masks by using examples.

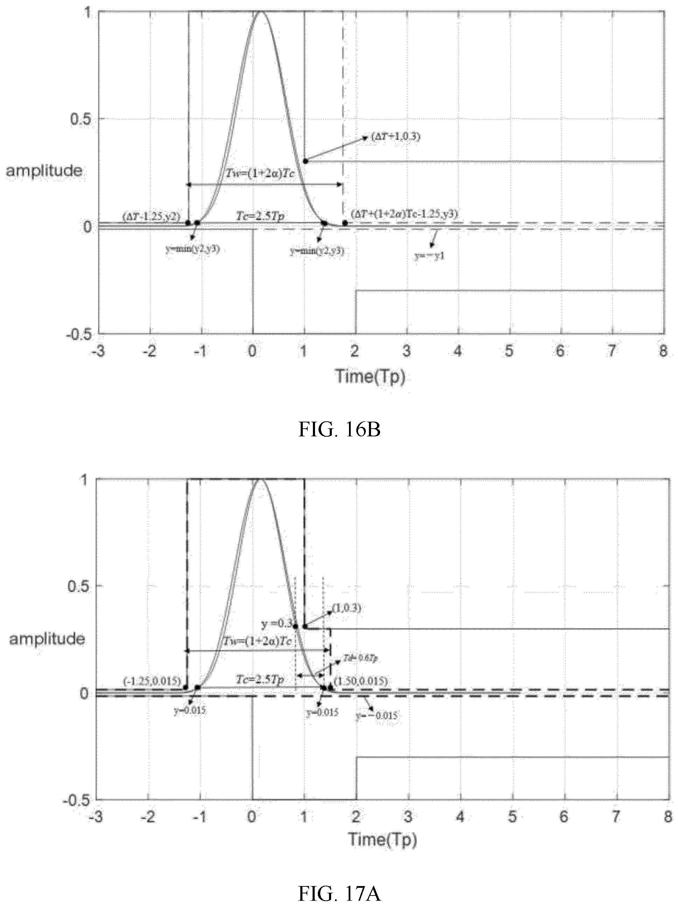

Time domain mask 2: A lower boundary of the time domain mask corresponds to a first value (that is, a straight line), and a value range of the first value is [-0.2, -0.001]; and a value corresponding to an upper boundary of the time domain mask in a time domain [-1.25, third value] is 1, a value corresponding to an upper boundary of the time domain mask in a time domain (third value, ∞) is a second value (that is, a straight line), a value range of the second value is [0.001, 0.2], and a value range of the third value is (1.0, 2.0]. [-1.25, third value] is a first time domain. The time domain (third value, ∞) is a second time domain. It should be noted that boundary values of time domains are not limited in this application. A new time domain mask of a pulse shape is defined, where Tc=2.5Tp, and Tw=(1+2α)Tc. Refer to FIG. 16B. There is a line y=-y1 at the bottom of a time domain mask, that is, a lower boundary; and coordinates of a first inflection point of the time domain mask are (ΔT-1.25, y2), and coordinates of a second inflection point are (ΔT+(1+2α)Tc-1.25, y2). ΔT is any constant, that is, the time domain mask may be randomly offset in time domain. y1 (namely, a first value) is an adjustable parameter, and a value range of y1 is [0.001, 0.2]. y2 is also an adjustable parameter, and a value range of y2 is less than or equal to 0.2. α is a parameter, and a value of α may range from 0 to 100. The following describes some typical masks by using examples.

Example 1: α = 0.05.

Refer to FIG. 17A. Tc=2.5Tp, and Tw=(1+2α)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are ((1+2α)Tc-1.25, 0.015), where a value of α is 0.05, and the coordinates of the third inflection point are (1.5, 0.015).

Example 2: α = 0.05.

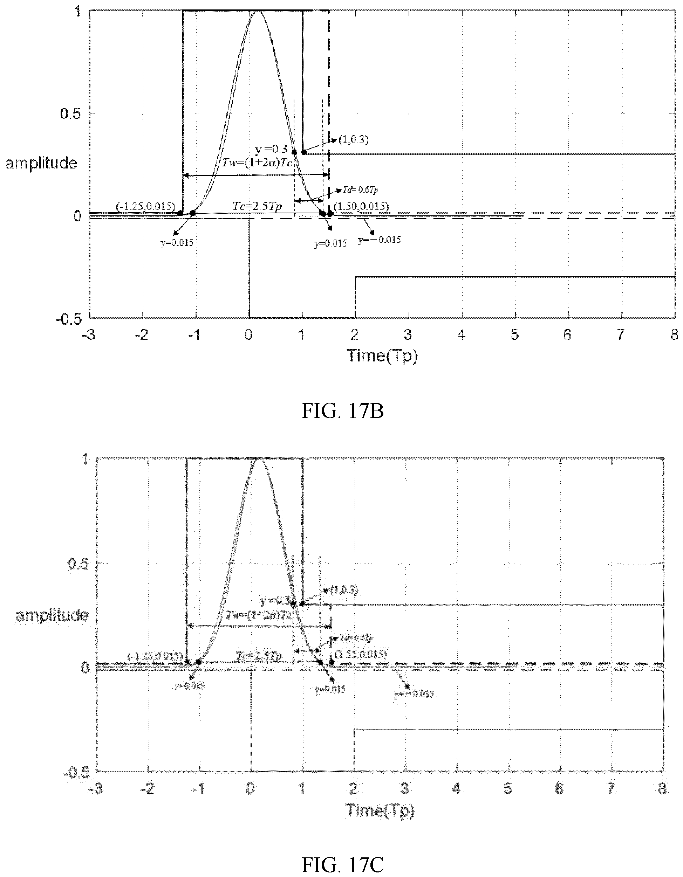

Refer to FIG. 17B. Tc=2.5Tp, and Tw=(1+2α)Tc. There is a line y=-0.015 at the bottom of a time domain mask, that is, a lower boundary. Coordinates of a first inflection point are (-1.25, 0.015), and coordinates of a second inflection point are ((1+2α)Tc-1.25, 0.015), where a value of α is 0.05, and specific coordinates of the second inflection point are (1.50, 0.015).

Example 3: α = 0.06.

Refer to FIG. 17C. Tc=2.5Tp, and Tw=(1+2α)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are (($1+2\alpha$)Tc-1.25, 0.015), where a value of $\alpha$ is 0.06, and specific coordinates of the third inflection point are (1.55, 0.015).

Example 4: $\alpha$ = 0.06.

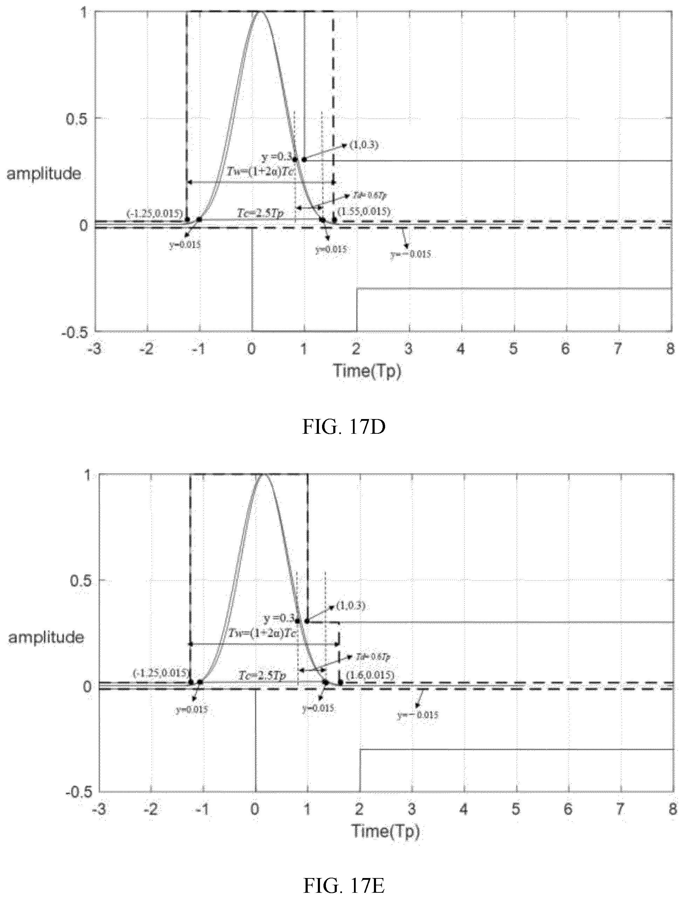

Refer to FIG. 17D. Tc=2.5Tp, and Tw=($1+2\alpha$)Tc. There is a line y=-0.015 at the bottom of a time domain mask, that is, a lower boundary. Coordinates of a first inflection point are (-1.25, 0.015), and coordinates of a second inflection point are (($1+2\alpha$)Tc-1.25, 0.015), where a value of $\alpha$ is 0.06, and specific coordinates of the second inflection point are (1.55, 0.015).

Example 5: $\alpha$ = 0.07.

Refer to FIG. 17E. Tc=2.5Tp, and Tw=($1+2\alpha$)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are (($1+2\alpha$)Tc-1.25, 0.015), where a value of $\alpha$ is 0.07, and specific coordinates of the third inflection point are (1.6, 0.015).

Example 6: $\alpha$ = 0.07.

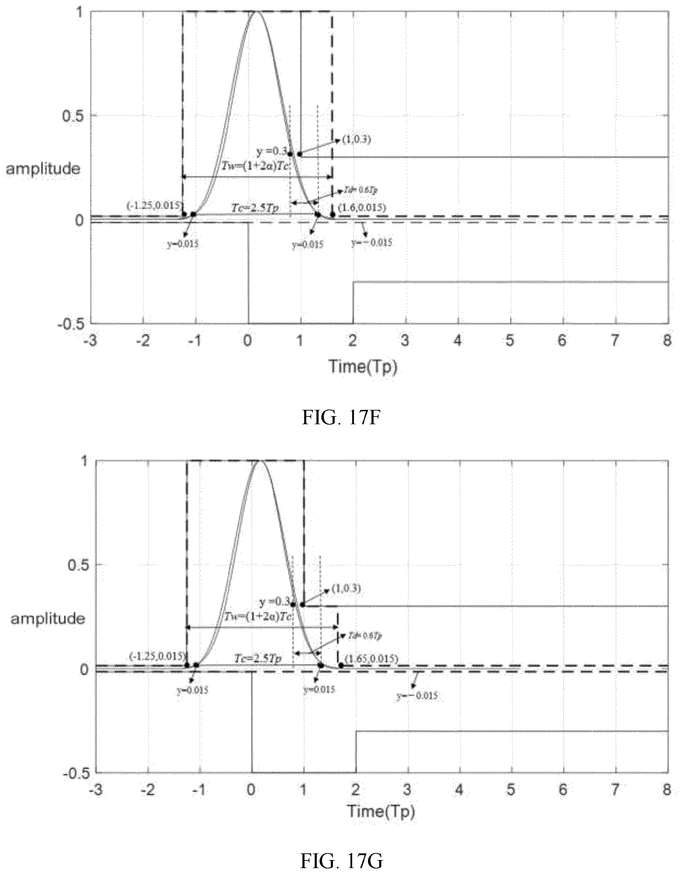

Refer to FIG. 17F. Tc=2.5Tp, and Tw=($1+2\alpha$)Tc. There is a line y=-0.015 at the bottom of a time domain mask, that is, a lower boundary. Coordinates of a first inflection point are (-1.25, 0.015), and coordinates of a second inflection point are (($1+2\alpha$)Tc-1.25, 0.015), where a value of $\alpha$ is 0.07, and specific coordinates of the second inflection point are (1.6, 0.015).

Example 7: $\alpha$ = 0.08.

Refer to FIG. 17G. Tc=2.5Tp, and Tw=($1+2\alpha$)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are (($1+2\alpha$)Tc-1.25, 0.015), where a value of $\alpha$ is 0.08, and specific coordinates of the third inflection point are (1.65, 0.015).

Example 8: $\alpha$ = 0.08.

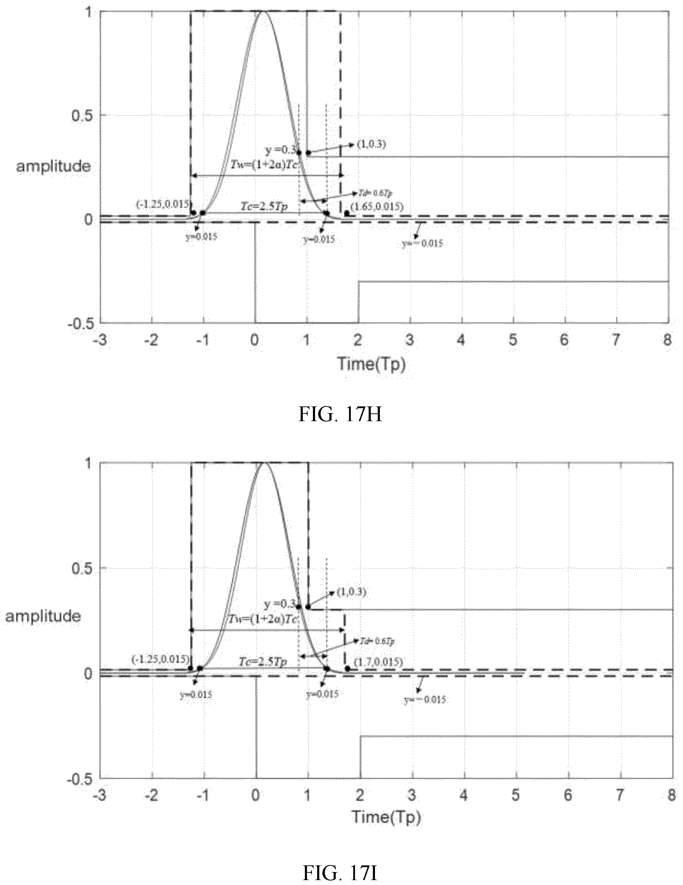

Refer to FIG. 17H. Tc=2.5Tp, and Tw=($1+2\alpha$)Tc. There is a line y=-0.015 at the bottom of a time domain mask, that is, a lower boundary. Coordinates of a first inflection point are (-1.25, 0.015), and coordinates of a second inflection point are (($1+2\alpha$)Tc-1.25, 0.015), where a value of $\alpha$ is 0.08, and specific coordinates of the second inflection point are (1.65, 0.015).

Example 9: $\alpha$ = 0.09.

Refer to FIG. 17I. Tc=2.5Tp, and Tw=($1+2\alpha$)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are (($1+2\alpha$)Tc-1.25, 0.015), where a value of $\alpha$ is 0.09, and specific coordinates of the third inflection point are (1.7, 0.015).

Example 10: $\alpha$ = 0.09.

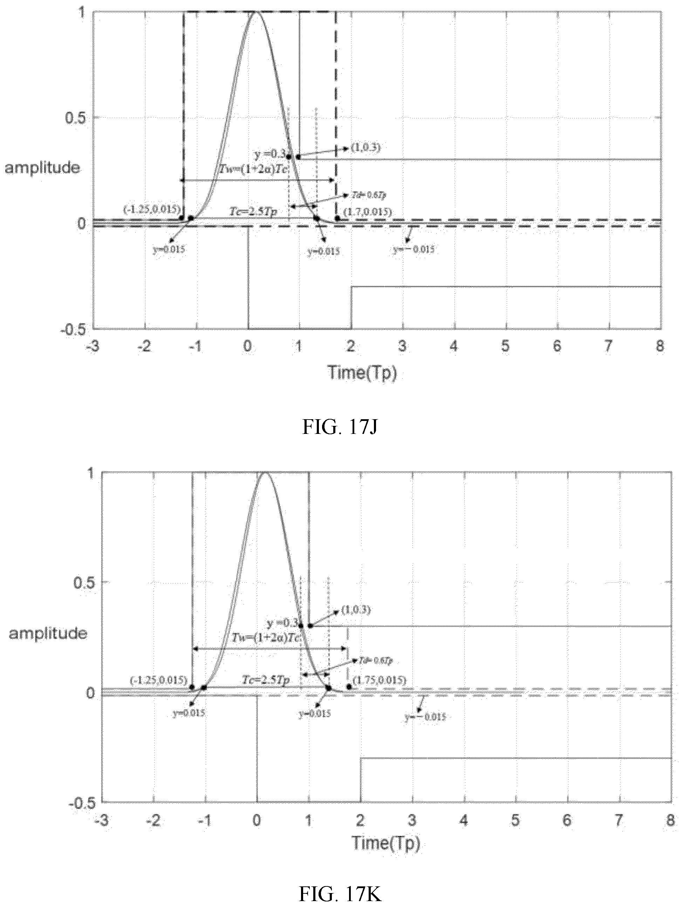

Refer to FIG. 17J. Tc=2.5Tp, and Tw=($1+2\alpha$)Tc. There is a line y=-0.015 at the bottom of a time domain mask, that is, a lower boundary. Coordinates of a first inflection point are (-1.25, 0.015), and coordinates of a second inflection point are (($1+2\alpha$)Tc-1.25, 0.015), where a value of $\alpha$ is 0.09, and specific coordinates of the second inflection point are (1.7, 0.015).

Example 11: $\alpha$ = 0.1.

Refer to FIG. 17K. Tc=2.5Tp, and Tw=($1+2\alpha$)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are (($1+2\alpha$)Tc-1.25, 0.015), where a value of $\alpha$ is 0.1, and specific coordinates of the third inflection point are (1.75, 0.015).

Example 12: $\alpha$ = 0.1.

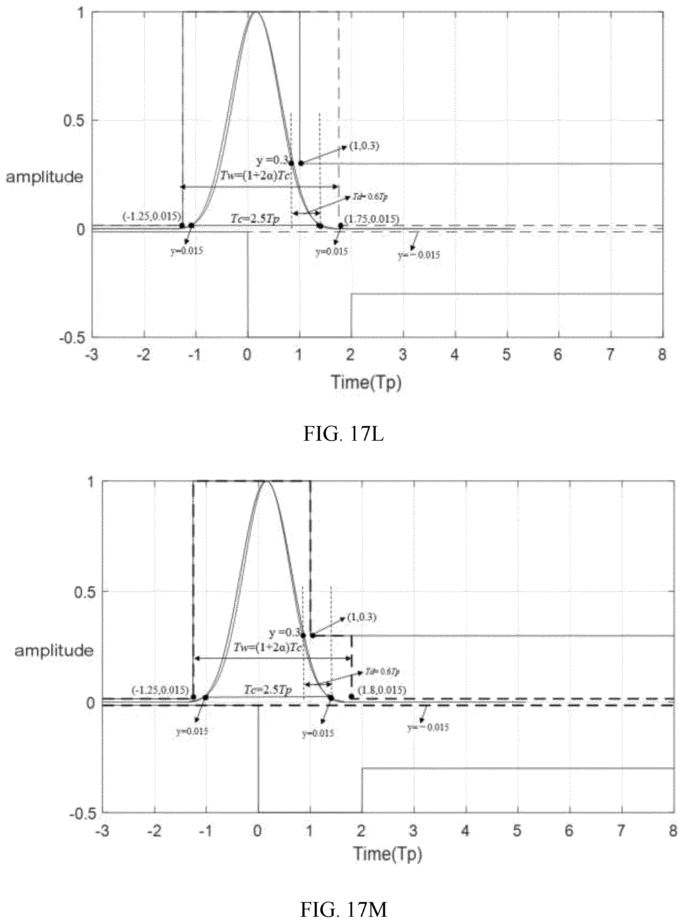

Refer to FIG. 17L. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), and coordinates of a second inflection point are ((1+2$\alpha$)Tc-1.25, 0.015), where a value of $\alpha$ is 0.1, and specific coordinates of the second inflection point are (1.75, 0.015).

Example 13: $\alpha$ = 0.11.

Refer to FIG. 17M. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are ((1+2$\alpha$)Tc-1.25, 0.015), where a value of $\alpha$ is 0.11, and specific coordinates of the third inflection point are (1.80, 0.015).

Example 14: $\alpha$ = 0.11.

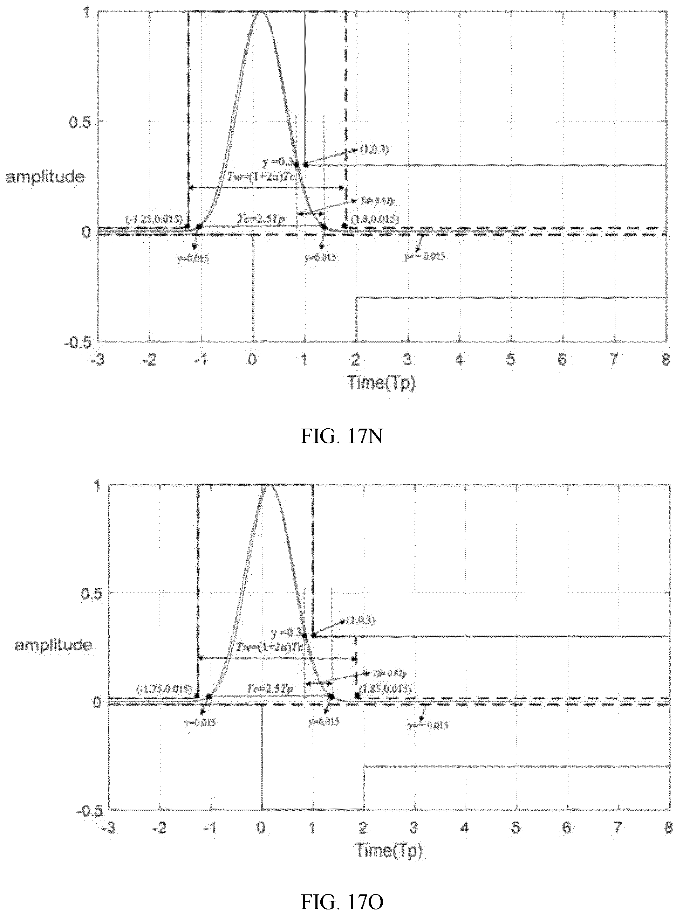

Refer to FIG. 17N. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), and coordinates of a second inflection point are ((1+2$\alpha$)Tc-1.25, 0.015), where a value of $\alpha$ is 0.11, and specific coordinates of the second inflection point are (1.80, 0.015).

Example 15: $\alpha$ = 0.12.

Refer to FIG. 17O. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are ((1+2$\alpha$)Tc-1.25, 0.015), where a value of $\alpha$ is 0.12, and specific coordinates of the third inflection point are (1.85, 0.015).

Example 16: $\alpha$ = 0.12.

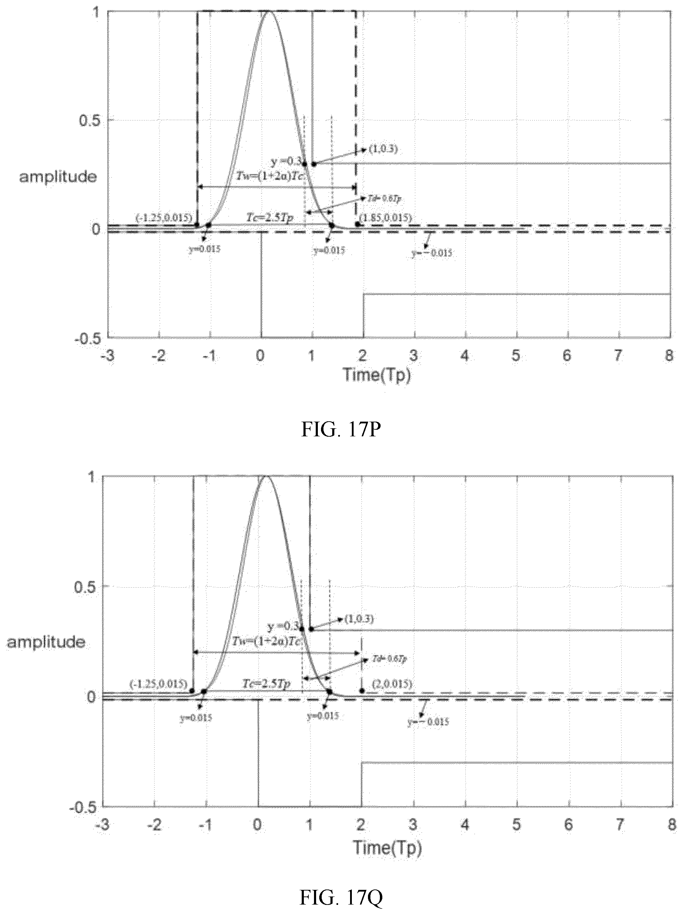

Refer to FIG. 17P. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), and coordinates of a second inflection point are ((1+2$\alpha$)Tc-1.25, 0.015), where a value of $\alpha$ is 0.12, and specific coordinates of the second inflection point are (1.85, 0.015).

Example 17: $\alpha$ = 0.15.

Refer to FIG. 17Q. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are ((1+2$\alpha$)Tc-1.25, 0.015), where a value of $\alpha$ is 0.15, and specific coordinates of the third inflection point are (2, 0.015).

Example 18: $\alpha$ = 0.15.

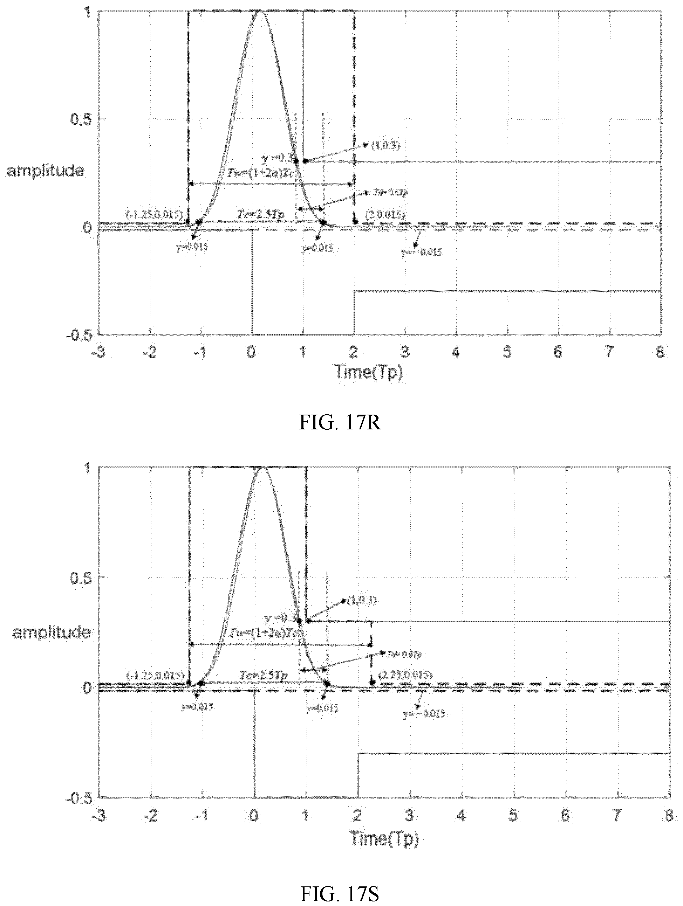

Refer to FIG. 17R. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), and coordinates of a second inflection point are ((1+2$\alpha$)Tc-1.25, 0.015), where a value of $\alpha$ is 0.12, and specific coordinates of the second inflection point are (2, 0.015).

Example 19: $\alpha$ = 0.20.

Refer to FIG. 17S. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are ((1+2$\alpha$)Tc-1.25, 0.015), where a value of $\alpha$ is 0.2, and specific coordinates of the third inflection point are (2.25, 0.015).

Example 20: α = 0.20.

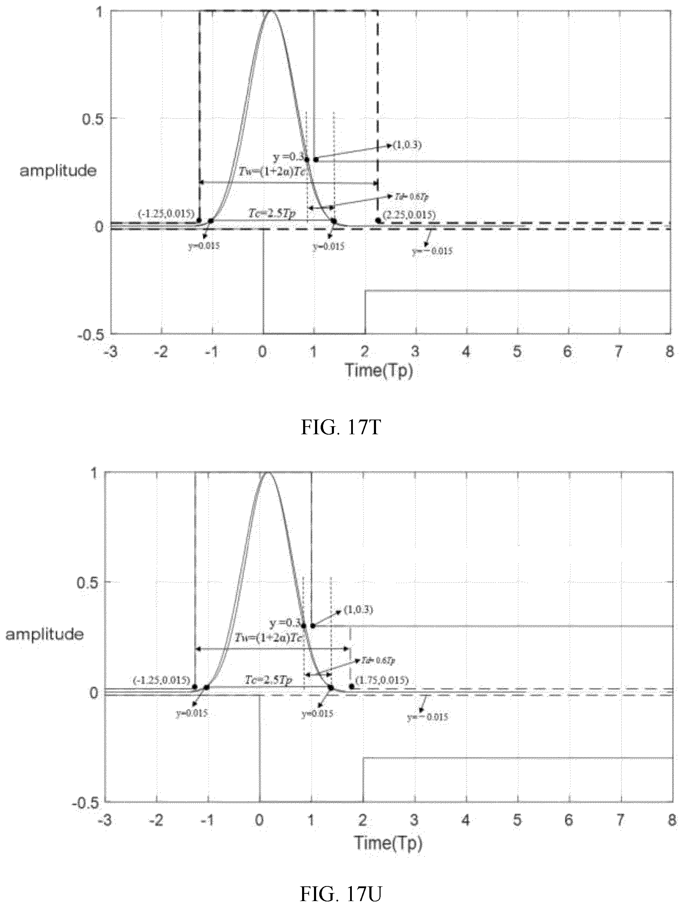

Refer to FIG. 17T. Tc=2.5Tp, and Tw=(1+2α)Tc. There is a line y=-0.015 at the bottom of a time domain mask, that is, a lower boundary. Coordinates of a first inflection point are (-1.25, 0.015), and coordinates of a second inflection point are ((1+2α)Tc-1.25, 0.015), where a value of α is 0.2, and specific coordinates of the second inflection point are (2.25, 015).

Example 21: α = 0.1, and y1=y2=y3=0.015.

Refer to FIG. 17U. Tc=2.5Tp, and Tw=(1+2α)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are ((1+2α)Tc-1.25, 0.015), where a value of α is 0.1, and specific coordinates of the third inflection point are (1.75, 0.015).

Example 22: α = 0.1, and y1=y2=y3=0.015.

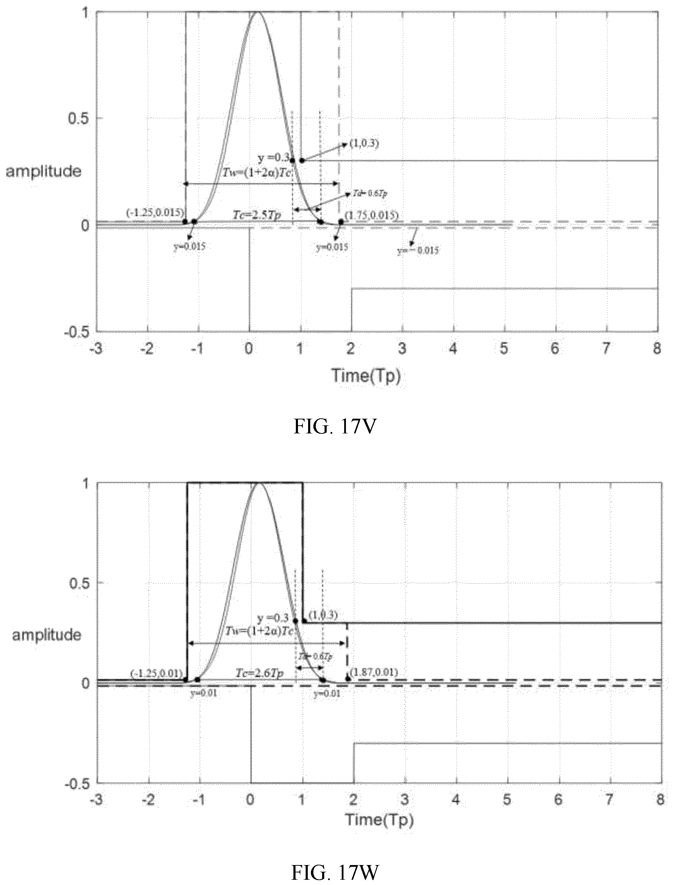

Refer to FIG. 17V. Tc=2.5Tp, and Tw=(1+2α)Tc. There is a line y=-0.015 at the bottom of a time domain mask, that is, a lower boundary. Coordinates of a first inflection point are (-1.25, 0.015), and coordinates of a second inflection point are ((1+2α)Tc-1.25, 0.015), where a value of α is 0.1, and specific coordinates of the second inflection point are (1.75, 0.015).

Example 23: α = 0.1, and y1=y2=y3=0.01.

Refer to FIG. 17W. Tc=2.6Tp, and Tw=(1+2α)Tc. There is a line y=-0.01 at the bottom of a time domain mask, that is, a lower boundary. Coordinates of a first inflection point are (-1.25, 0.01), coordinates of a second inflection point are (1, 0.3), and coordinates of a third inflection point are ((1+2α)Tc-1.25, 0.01), where a value of α is 0.1, and specific coordinates of the third inflection point are (1.87, 0.01).

Example 24: α = 0.1, and y1=y2=y3=0.01.

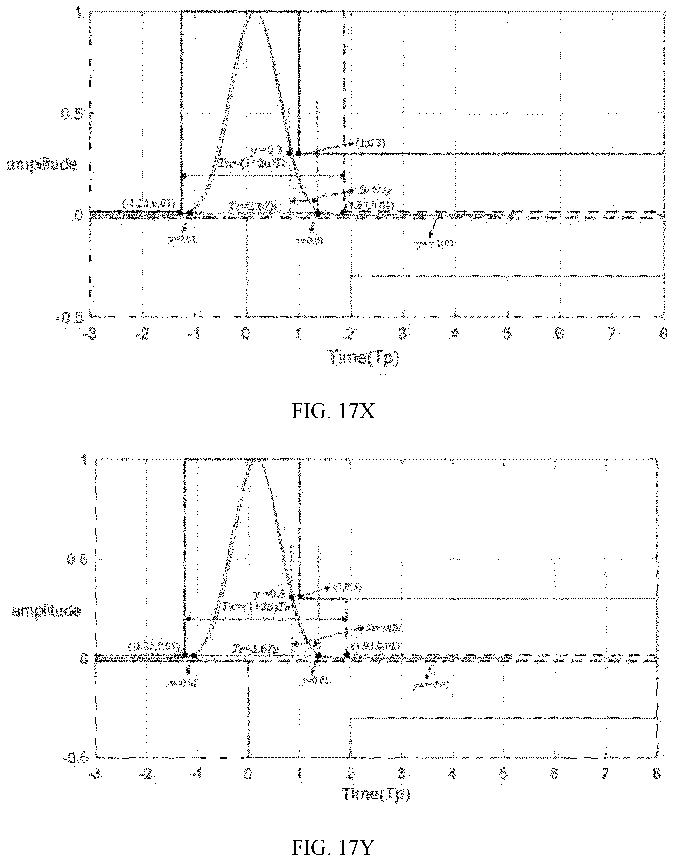

Refer to FIG. 17X. Tc=2.6Tp, and Tw=(1+2α)Tc. There is a line y=-0.01 at the bottom of a time domain mask, that is, a lower boundary. Coordinates of a first inflection point are (-1.25, 0.01), and coordinates of a second inflection point are ((1+2α)Tc-1.25, 0.01), where a value of α is 0.1, and specific coordinates of the second inflection point are (1.87, 0.01).

Example 25: α = 0.11, and y1=y2=y3=0.001.

Refer to FIG. 17Y. Tc=2.6Tp, and Tw=(1+2α)Tc. There is a line y=-0.01 at the bottom of a time domain mask, that is, a lower boundary. Coordinates of a first inflection point are (-1.25, 0.01), coordinates of a second inflection point are (1, 0.3), and coordinates of a third inflection point are ((1+2α)Tc-1.25, 0.01), where a value of α is 0.11, and specific coordinates of the third inflection point are (1.92, 0.01).

Example 26: α = 0.11, and y1=y2=y3=0.001.

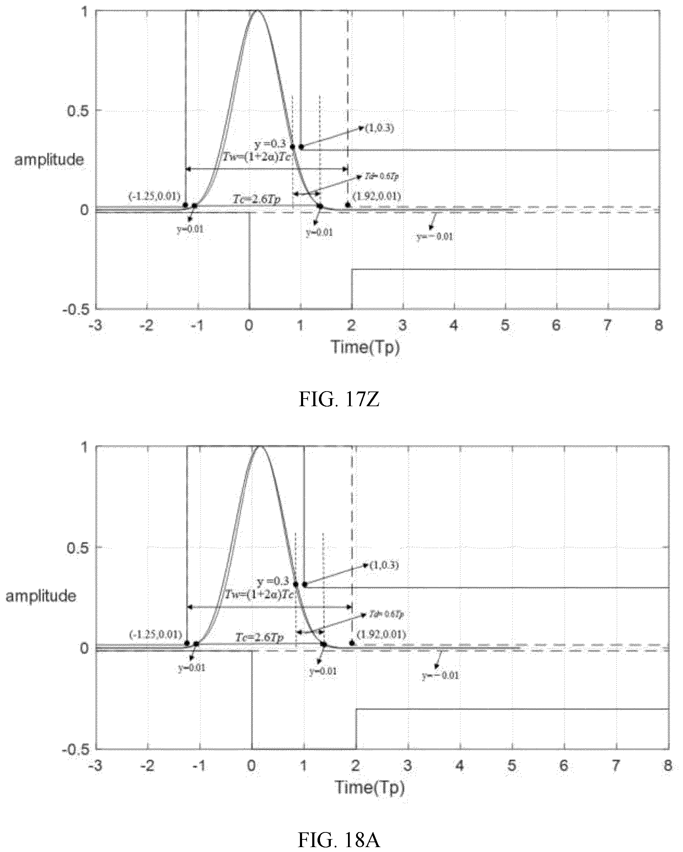

Refer to FIG. 17Z. Tc=2.6Tp, and Tw=(1+2α)Tc. There is a line y=-0.01 at the bottom of a time domain mask, that is, a lower boundary. Coordinates of a first inflection point are (-1.25, 0.01), and coordinates of a second inflection point are ((1+2α)Tc-1.25, 0.01), where a value of α is 0.11, and specific coordinates of the second inflection point are (1.92, 0.01).

Example 27: α = 0.3, and y1=y2=y3=0.2.

Refer to FIG. 18A. Tc=1.625Tp, and Tw=(1+2α)Tc. There is a line y=-0.2 at the bottom of a time domain mask, that is, a lower boundary. Coordinates of a first inflection point are (-1.25, 0.2), coordinates of a second inflection point are (1, 0.3), and coordinates of a third inflection point are ((1+2α)Tc-1.25, 0.2), where a value of α is 0.3, and specific coordinates of the third inflection point are (1.35, 0.2).

Example 28: α = 0.3, and y1=y2=y3=0.2.

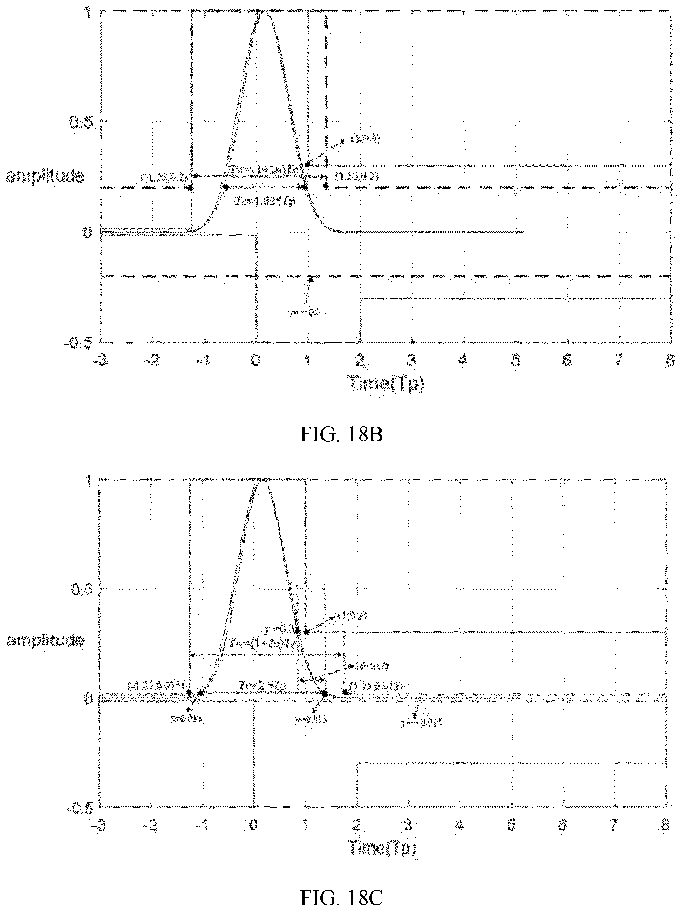

Refer to FIG. 18B. Tc=1.625Tp, and Tw=(1+2α)Tc. There is a line y=-0.2 at the bottom of a time domain mask, that is, a lower boundary. Coordinates of a first inflection point are (-1.25, 0.2), and coordinates of a second inflection point are ((1+2α)Tc-1.25, 0.2), where a value of α is 0.3, and specific coordinates of the second inflection point are (1.35, 0.2).

Example 29: $\alpha$ = 0.1, y1=0.015, y2=0.015, and y3=0.015.

Refer to FIG. 18C. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are ((1+2$\alpha$)Tc-1.25, 0.015), where a value of $\alpha$ is 0.1, and specific coordinates of the third inflection point are (1.75, 0.015).

Example 30: $\alpha$ = 0.1, y1=0.015, y2=0.015, and y3=0.015.

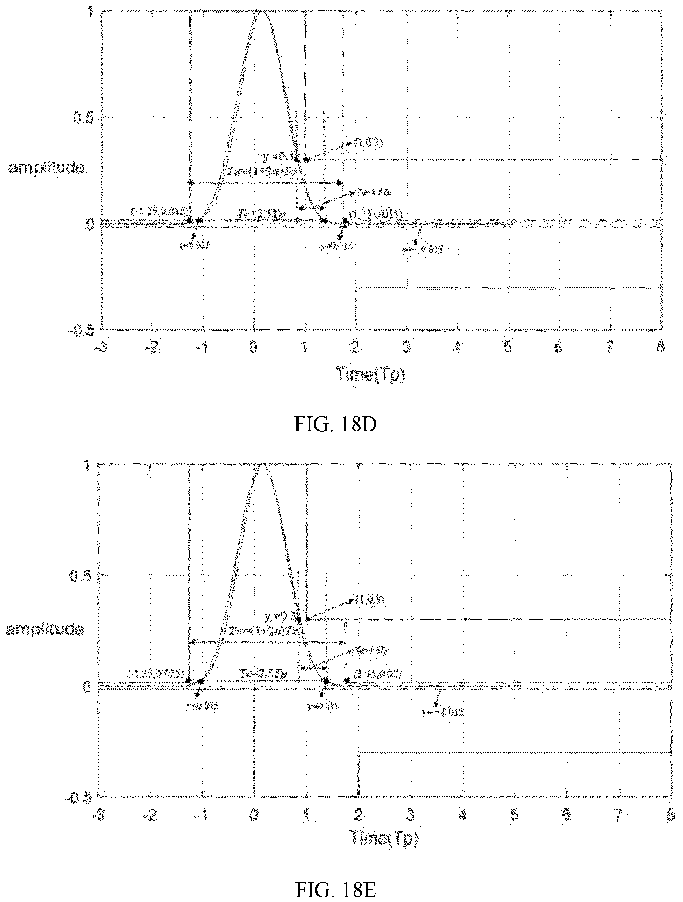

Refer to FIG. 18D. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), and coordinates of a second inflection point are ((1+2$\alpha$)Tc-1.25, 0.015), where a value of $\alpha$ is 0.1, and specific coordinates of the second inflection point are (1.75, 0.015).

Example 31: $\alpha$ = 0.1, y1=0.015, y2=0.015, and y3=0.02.

Refer to FIG. 18E. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), coordinates of a second inflection point are (1, 0.3), and coordinates of a third inflection point are ((1+2$\alpha$)Tc-1.25, 0.02), where a value of $\alpha$ is 0.1, and specific coordinates of the third inflection point are (1.75, 0.02).

Example 32: $\alpha$ = 0.1, y1=0.015, y2=0.015, and y3=0.02.

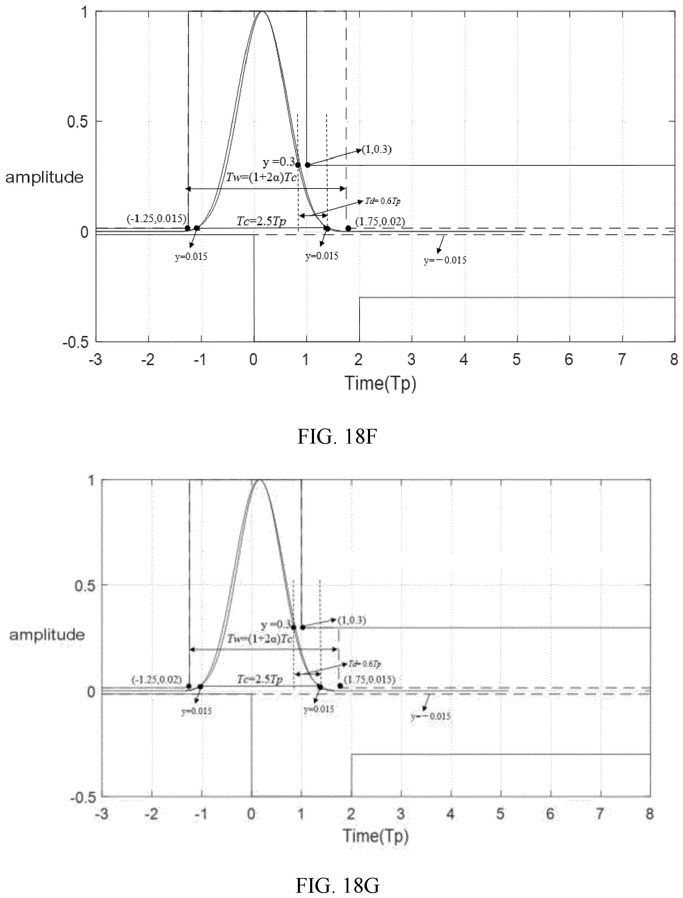

Refer to FIG. 18F. Tc=2.5Tp, and Tw=(1+2$\alpha$)Tc. There is a line y=-0.015 at the bottom of a time domain mask, that is, a lower boundary. Coordinates of a first inflection point are (-1.25, 0.015), and coordinates of a second inflection point are ((1+2$\alpha$)Tc-1.25, 0.02), where a value of $\alpha$ is 0.1, and specific coordinates of the second inflection point are (1.75, 0.02).

Example 33: $\alpha$ = 0.1, y1=0.015, y2=0.02, and y3=0.015.

Refer to FIG. 18G. Tc=2.5Tp, and Tw=(1+2$\alpha$)Tc. There is a line y=-0.015 at the bottom of a time domain mask, that is, a lower boundary. Coordinates of a first inflection point are (-1.25, 0.02), coordinates of a second inflection point are (1, 0.3), and coordinates of a third inflection point are ((1+2$\alpha$)Tc-1.25, 0.15), where a value of $\alpha$ is 0.1, and specific coordinates of the third inflection point are (1.75, 0.015).

Example 34: $\alpha$ = 0.1, y1=0.015, y2=0.02, and y3=0.015.

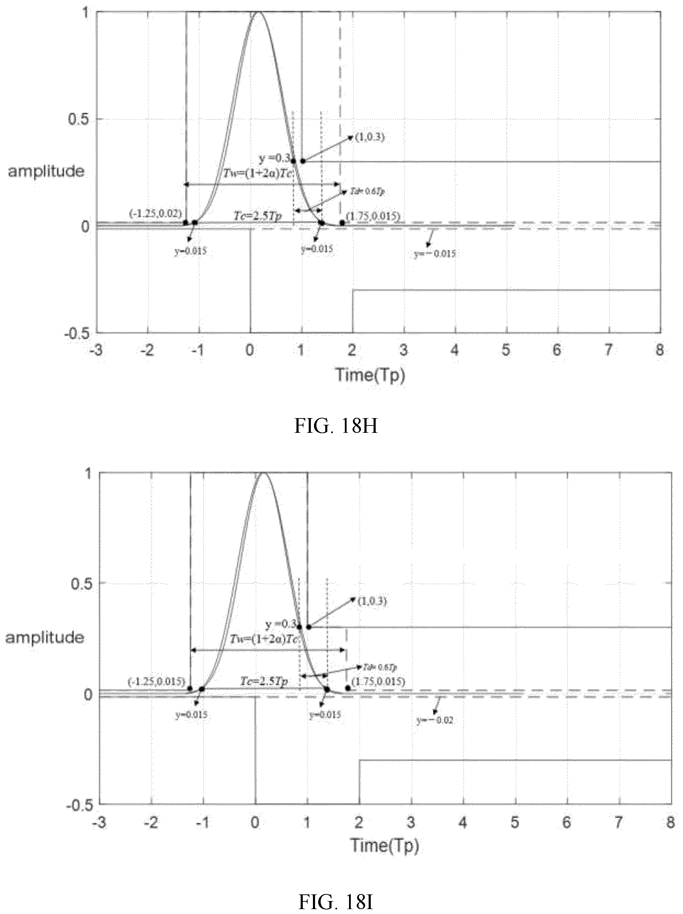

Refer to FIG. 18H. Tc=2.5Tp, and Tw=(1+2$\alpha$)Tc. There is a line y=-0.015 at the bottom of a time domain mask, that is, a lower boundary. Coordinates of a first inflection point are (-1.25, 0.02), and coordinates of a second inflection point are ((1+2$\alpha$)Tc-1.25, 0.015), where a value of $\alpha$ is 0.1, and specific coordinates of the second inflection point are (1.75, 0.015).

Example 35: $\alpha$ = 0.1, y1=0.02, y2=0.015, and y3=0.015.

Refer to FIG. 18I. Tc=2.5Tp, and Tw=(1+2$\alpha$)Tc. There is a line y=-0.02 at the bottom of a time domain mask, that is, a lower boundary. Coordinates of a first inflection point are (-1.25, 0.015), coordinates of a second inflection point are (1, 0.3), and coordinates of a third inflection point are ((1+2$\alpha$)Tc-1.25, 0.015), where a value of $\alpha$ is 0.1, and specific coordinates of the third inflection point are (1.75, 0.015).

Example 36: $\alpha$ = 0.1, y1=0.02, y2=0.015, and y3=0.015.

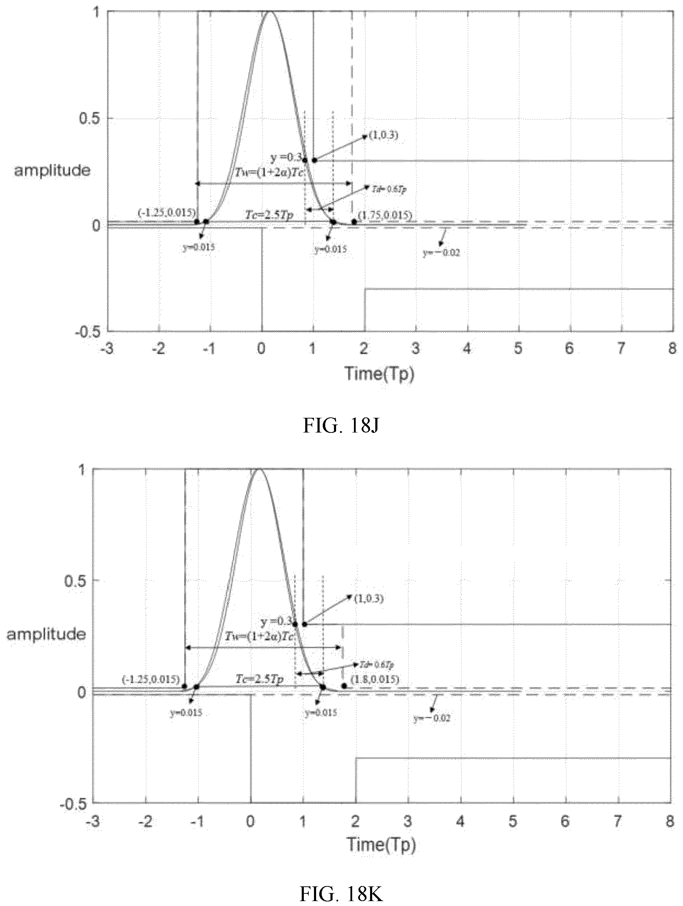

Refer to FIG. 18J. Tc=2.5Tp, and Tw=(1+2$\alpha$)Tc. There is a line y=-0.02 at the bottom of a time domain mask, that is, a lower boundary. Coordinates of a first inflection point are (-1.25, 0.015), and coordinates of a second inflection point are ((1+2$\alpha$)Tc-1.25, 0.015), where a value of $\alpha$ is 0.1, and specific coordinates of the second inflection point are (1.75, 0.015).

Example 37: $\alpha$ = 0.11, y1=0.02, y2=0.015, and y3=0.015.

Refer to FIG. 18K. Tc=2.5Tp, and Tw=(1+2$\alpha$)Tc. There is a line y=-0.02 at the bottom of a time domain mask, that is, a lower boundary. Coordinates of a first inflection point are (-1.25, 0.015), coordinates of a second inflection point are (1, 0.3), and coordinates of a third inflection point are ((1+2$\alpha$)Tc-1.25, 0.015), where a value of $\alpha$ is 0.11, and specific coordinates of the third inflection point are (1.80, 0.015).

Example 38: $\alpha$ = 0.11, y1=0.02, y2=0.015, and y3=0.015.

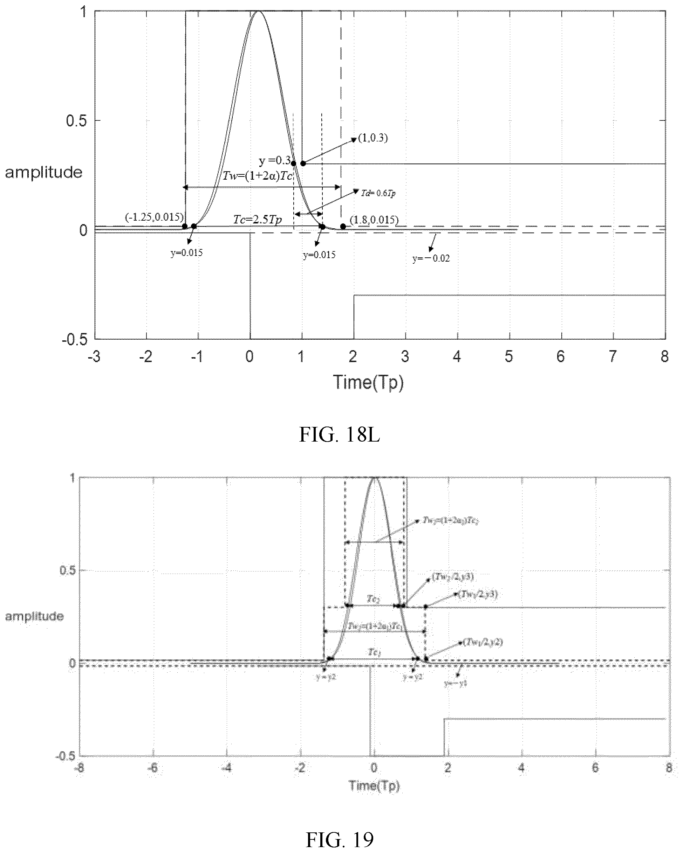

Refer to FIG. 18L. Tc=2.5Tp, and Tw=(1+2$\alpha$)Tc. There is a line y=-0.02 at the bottom of a time domain mask, that is, a lower boundary. Coordinates of a first inflection point are (-1.25, 0.015), and coordinates of a second inflection point are ((1+2$\alpha$)Tc-1.25, 0.015), where a value of $\alpha$ is 0.11, and specific coordinates of the second inflection point are (1.80, 0.015).

The following describes another possible time domain mask provided in embodiments of this application.

Time domain mask 3: A lower boundary of the time domain mask corresponds to a first value, the time domain mask is an axisymmetric pattern in a first time domain, an upper boundary of the time domain mask in a second time domain outside the first time domain corresponds to a second value, the first time domain sequentially includes a third time domain, a fourth time domain, and a fifth time domain in a time sequence, an upper boundary of the time domain mask in the third time domain corresponds to a third value, a value corresponding to an upper boundary of the time domain mask in the fourth time domain is 1, an upper boundary of the time domain mask in the fifth time domain corresponds to the third value, a value range of the first value is [-0.2, -0.001], and a value range of the second value is [0.001, 0.2]. A value range of the third value may be [0.1, 0.9].

The following describes possible manners of determining a length of the first time domain and a length of the fourth time domain with reference to the accompanying drawings.

FIG. 19 is an example of a time domain mask 3 according to an embodiment of this application. The time domain mask 3 is an axisymmetric pattern in the first time domain (a time domain indicated by $Tw_1$ in FIG. 19). Optionally, the time domain mask 3 is left-right symmetric, that is, is an axisymmetric pattern on an entire time axis. Refer to FIG. 19. An area enclosed by dashed lines is the time domain mask 3, the time domain indicated by $Tw_1$ is the first time domain, a time domain indicated by $Tw_2$ is the fourth time domain, $Tc_1$ is a spacing between two points at which y=y2 on a pulse shape (the pulse shape may be a Gaussian pulse shape, a Caesar pulse shape, or an average of results obtained by using two pulse shapes), $Tw_1$=(1+2$\alpha_1$)$Tc_1$, $Tc_2$ is a spacing between two points at which y=y3 on the pulse shape (the pulse shape may be the Gaussian pulse shape, the Caesar pulse shape, or the average of results obtained by using the two pulse shapes), and $Tw_2$=(1+2$\alpha_2$)$Tc_2$. A lower boundary of the time domain mask 3 is a line y=-y1. Coordinates of three inflection points (located on a right side of a symmetry axis of the time domain mask 3) on the time domain mask 3 are respectively ($Tw_2$/2, y3), ($Tw_1$/2, y3), and ($Tw_1$/2, y2). y1 is an adjustable parameter, and a value range of y1 may be [0.001, 0.2]. y2 is also an adjustable parameter, and a value range of y2 may be [0.001, 0.2]. y3 is also an adjustable parameter, a value range of y3 is [0.1, 0.9], and y3 needs to be greater than y2. $\alpha$1 is a parameter, and a value of $\alpha$1 may range from 0 to 100. $\alpha$2 is a parameter, and a value of $\alpha$2 may range from 0 to 100, but the value of $\alpha$1 and the value of $\alpha$2 need to ensure that $Tw_2$<$Tw_1$, that is, (1+2$\alpha_2$)$Tc_2$<(1+2$\alpha_1$)$Tc_1$. For example, y1=y2. The following uses some typical masks as examples. It should be noted that a location of the symmetry axis of the time mask 3 is at a location of t=0, but arbitrary translation of the mask in time domain still falls within the protection scope of this mask.

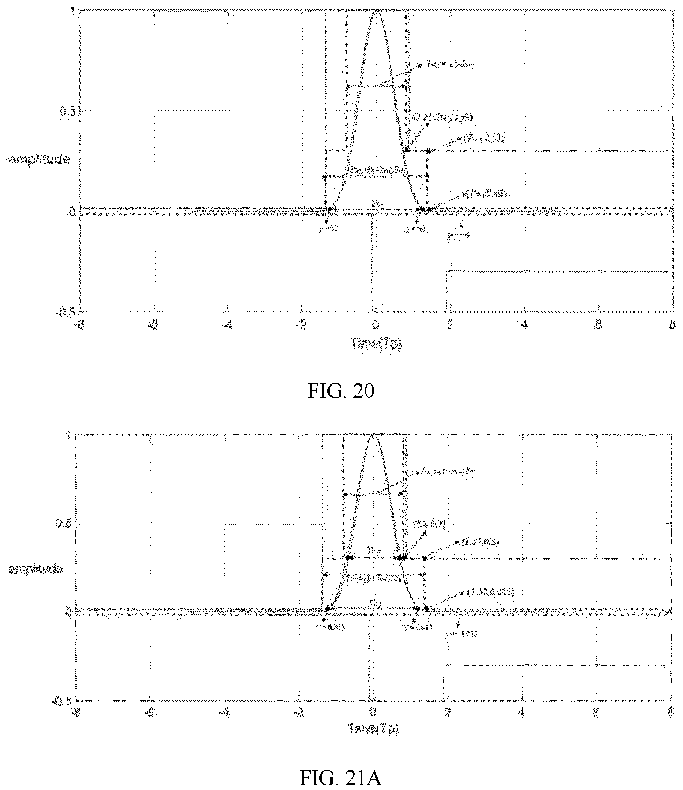

FIG. 20 is another example of a time domain mask 3 according to an embodiment of this application. The time domain mask 3 is an axisymmetric pattern in the first time domain (a time domain indicated by $Tw_1$ in FIG. 19). Refer to FIG. 20. An area enclosed by dashed lines is the time domain mask 3, the time domain indicated by $Tw_1$ is the first time domain, a time domain indicated by $Tw_2$ is the fourth time domain, $Tc_1$ is a spacing between two points at which y=y2 on a pulse shape (the pulse shape may be a Gaussian pulse shape, a Caesar pulse shape, or an average of results obtained by using two pulse shapes), and $Tw_1$=(1+2$\alpha_1$)$Tc_1$. Once $Tw_1$ is determined, a length of $Tw_2$ is correspondingly determined based on a symmetry requirement of the time domain mask 3, for example, $Tw_2$=4.5-$Tw_1$. Coordinates of three inflection points (located on a right side of a symmetry axis of the time domain mask 3) on the time domain mask 3 are respectively (2.25-$Tw_2$/2, y3), ($Tw_1$/2, y3), and ($Tw_1$/2, y2). y1 is an adjustable parameter, and a value range of y1 may be [0.001, 0.2]. y2 is also an adjustable parameter, and a value range of y2 may be [0.001, 0.2]. A value of y3 needs to be less than or equal to 0.3, for example, a value range of y3 may be [0.1, 0.3], and y3 also needs to be greater than y2. Further, it may be required that y1=y2.

The following describes some possible manners of obtaining the time domain mask 3.

Manner 1: $Tc_1$ and $Tc_2$ are respectively determined based on y2 and y3, and Tw1 and Tw2 are obtained after $\alpha_1$ and $\alpha$2 are determined.

Example 001: y1=0.015, y2=0.015, y3=0.3, $\alpha_1$ = 0.05, and $\alpha_2$ = 0.05.

Refer to FIG. 21A. y1=0.015, y2=0.015, and y3=0.3. There is a line y=-0.015 at the bottom of a time domain mask, that is, a lower boundary. Three inflection points on the time domain mask are respectively (0.8, 0.3), (1.37, 0.3), and (1.37, 0.015).

Example 002: y1=0.015, y2=0.015, y3=0.5, $\alpha_1$ = 0.05, and $\alpha2$ = 0.05.

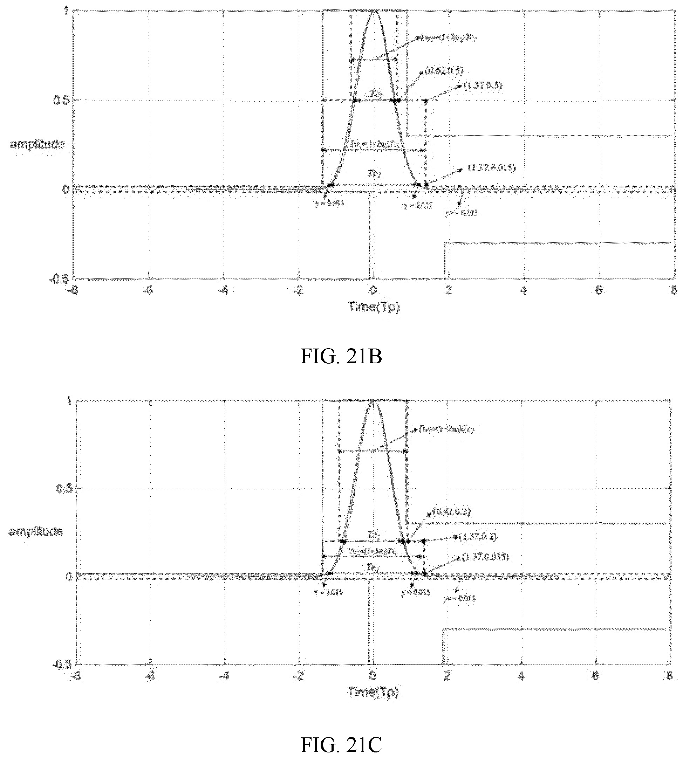

Refer to FIG. 21B. y1=0.015, y2=0.015, and y3=0.5. There is a line y=-0.015 at the bottom of a time domain mask, that is, a lower boundary. Three inflection points on the time domain mask are respectively (0.62, 0.5), (1.37, 0.5), and (1.37, 0.015).

Example 003: y1=0.015, y2=0.015, y3=0.2, $\alpha_1$ = 0.05, and $\alpha2$ = 0.05.

Refer to FIG. 21C. y1=0.015, y2=0.015, and y3=0.2. There is a line y=-0.015 at the bottom of a time domain mask, that is, a lower boundary. Three inflection points on the time domain mask are respectively (0.92, 0.2), (1.37, 0.2), and (1.37, 0.015).

Example 004: y1=0.015, y2=0.01, y3=0.3, $\alpha_1$ = 0.05, and $\alpha2$ = 0.05.

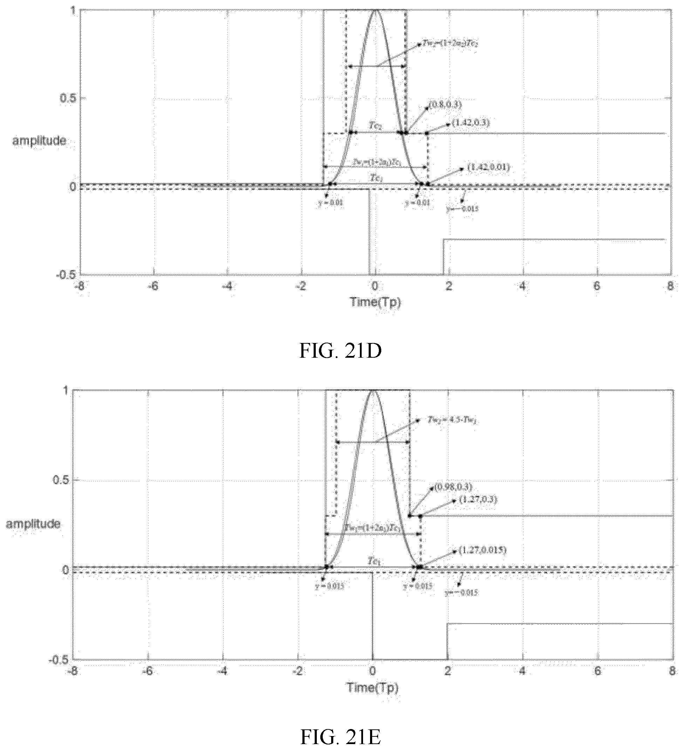

Refer to FIG. 21D. y1=0.015, y2=0.01, and y3=0.3. There is a line y=-0.015 at the bottom of a time domain mask, that is, a lower boundary. Three inflection points on the time domain mask are respectively (0.8, 0.3), (1.42, 0.3), and (1.42, 0.01).

Manner 2: $Tc_1$ is determined based on y2, $Tw_1$ is obtained after $\alpha_1$ is determined, $Tw_2$ is associated with $Tw_1$, and $Tw_2$ may be directly determined after $Tw_1$ is obtained.

Example 005: y1=0.015, y2=0.015, y3=0.3, $\alpha_1$ = 0.01, and $Tw_2$=4.5-$Tw_1$.

Refer to FIG. 21E. y1=0.015, y2=0.015, and y3=0.3. There is a line y=-0.015 at the bottom of a time domain mask, that is, a lower boundary. Three inflection points on the time domain mask are respectively (0.98, 0.3), (1.27, 0.3), and (1.27, 0.015).

Example 006: y1=0.015, y2=0.015, y3=0.3, $\alpha_1$ = 0.05, and $Tw_2$=4.5- $Tw_1$.

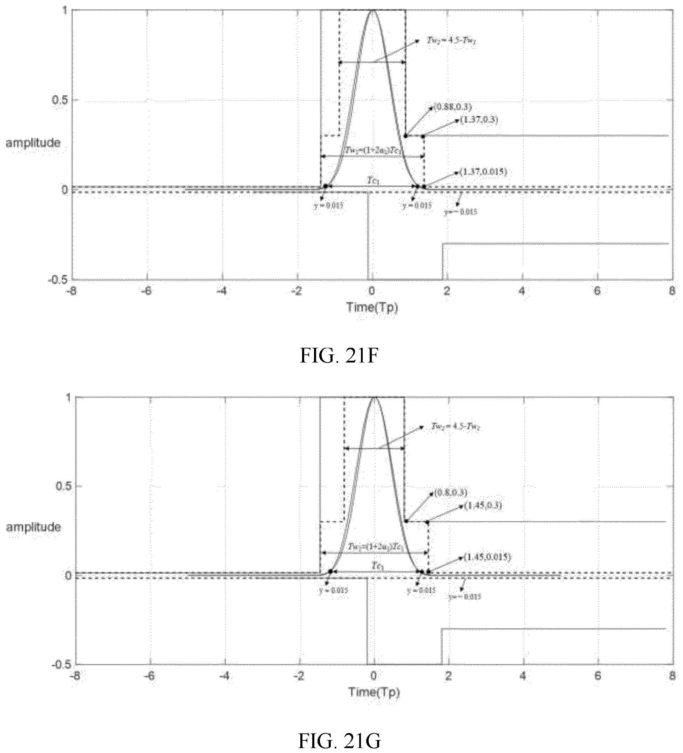

Refer to FIG. 21F. y1=0.015, y2=0.015, and y3=0.3. There is a line y=-0.015 at the bottom of a time domain mask, that is, a lower boundary. Three inflection points on the time domain mask are respectively (0.88, 0.3), (1.37, 0.3), and (1.37, 0.015).

Example 007: y1=0.015, y2=0.015, y3=0.3, $\alpha_1$ = 0.08, and $Tw_2$=4.5-$Tw_1$.

Refer to FIG. 21G. y1=0.015, y2=0.015, and y3=0.3. There is a line y=-0.015 at the bottom of a time domain mask, that is, a lower boundary. Three inflection points on the time domain mask are respectively (0.8, 0.3), (1.45, 0.3), and (1.45, 0.015).

Example 008: y1=0.015, y2=0.015, y3=0.3, $\alpha_1$ = 0.12, and $Tw_2$=4.5-$Tw_1$.

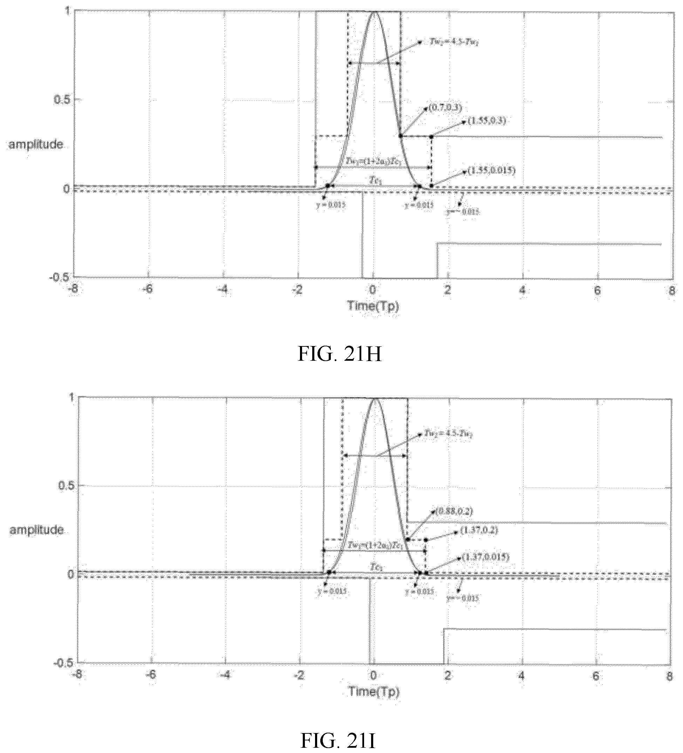

Refer to FIG. 21H. y1=0.015, y2=0.015, and y3=0.3. There is a line y=-0.015 at the bottom of a time domain mask, that is, a lower boundary. Three inflection points on the time domain mask are respectively (0.7, 0.3), (1.55, 0.3), and (1.55, 0.015).

Example 009: y1=0.015, y2=0.015, y3=0.2, $\alpha_1$ = 0.05, and $Tw_2$=4.5-$Tw_1$.

Refer to FIG. 21I. y1=0.015, y2=0.015, and y3=0.2. There is a line y=-0.015 at the bottom of a time domain mask, that is, a lower boundary. Three inflection points on the time domain mask are respectively (0.88, 0.2), (1.37, 0.2), and (1.37, 0.015).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** A communication method, comprising:

generating a transmit signal based on a time domain mask, wherein the time domain mask is used to limit a pulse shape of the transmit signal, a lower boundary of the time domain mask corresponds to a first value, a value corresponding to at least a part of an upper boundary of the time domain mask in a first time domain is 1, an upper boundary of the time domain mask in a second time domain corresponds to a second value, a value range of the first value is [-0.2, -0.001], a value range of the second value is [0.001, 0.2], and the second time domain is outside the first time domain; and

sending the transmit signal.

2. The method according to claim 1, wherein a value corresponding to an upper boundary of the time domain mask in a first sub-domain in the first time domain is 1, a value corresponding to an upper boundary of the time domain mask in a second sub-domain in the first time domain is 0.3, the first sub-domain is [-1.25, 1], the second sub-domain is (1, third value], and a value range of the third value is (1.0, 2.0].

3. The method according to claim 1, wherein a value corresponding to the upper boundary of the time domain mask in the first time domain is 1, the first time domain is [-1.25, third value], and a value range of the third value is (1.0, 2.0].

4. The method according to any one of claims 1 to 3, wherein coordinates of a junction point between the first time domain and the second time domain on the time domain mask are any one of the following: (1.50, 0.015), (1.55, 0.015), (1.60, 0.015), (1.65, 0.015), (1.70, 0.015), (1.75, 0.015), (1.80, 0.015), (1.85, 0.015), (2.0, 0.015), (1.87, 0.01), (1.92, 0.01), and (1.75, 0.02).

5. The method according to any one of claims 1 to 4, wherein the first value is -0.015, and the second value is 0.015.

6. The method according to any one of claims 1 to 5, wherein the pulse shape of the transmit signal is a Gaussian pulse shape or a Caesar pulse shape.

7. A communication method, comprising:

receiving a transmit signal, wherein the transmit signal is compliant with a time domain mask, a lower boundary of the time domain mask corresponds to a first value, a value corresponding to at least a part of an upper boundary of the time domain mask in a first time domain is 1, an upper boundary of the time domain mask in a second time domain corresponds to a second value, a value range of the first value is [-0.2, -0.001], a value range of the second value is [0.001, 0.2], and the second time domain is outside the first time domain; and

performing signal processing based on the transmit signal.

8. **The method** according to claim 7, wherein a value corresponding to an upper boundary of the time domain mask in a first sub-domain in the first time domain is 1, a value corresponding to an upper boundary of the time domain mask in a second sub-domain in the first time domain is 0.3, the first sub-domain is [-1.25, 1], the second sub-domain is (1, third value], and a value range of the third value is (1.0, 2.0].

9. The method according to claim 7, wherein a value corresponding to the upper boundary of the time domain mask in the first time domain is 1, the first time domain is [-1.25, third value], and a value range of the third value is (1.0, 2.0].

10. The method according to any one of claims 7 to 9, wherein coordinates of a junction point between the first time domain and the second time domain on the time domain mask are any one of the following: (1.50, 0.015), (1.55, 0.015), (1.60, 0.015), (1.65, 0.015), (1.70, 0.015), (1.75, 0.015), (1.80, 0.015), (1.85, 0.015), (2.0, 0.015), (1.87, 0.01), (1.92, 0.01), and (1.75, 0.02).

11. The method according to any one of claims 7 to 10, wherein the first value is -0.015, and the second value is 0.015.

12. The method according to any one of claims 7 to 11, wherein a pulse shape of the transmit signal is a Gaussian pulse shape or a Caesar pulse shape.

13. A communication apparatus, comprising a module or a unit configured to implement the method according to any one of claims 1 to 6.

14. A communication apparatus, comprising a module or a unit configured to implement the method according to any one of claims 7 to 12.

15. A computer-readable storage medium, wherein the computer-readable storage medium stores a computer program, the computer program comprises program instructions, and when the program instructions are executed, a computer is enabled to perform the method according to any one of claims 1 to 6, or when the program instructions are executed, a computer is enabled to perform the method according to any one of claims 7 to 12.

16. A communication method, comprising:

generating a transmit signal based on a time domain mask, wherein the time domain mask is used to limit a pulse shape of the transmit signal, a lower boundary of the time domain mask corresponds to a first value, the time domain mask is an axisymmetric pattern in a first time domain, an upper boundary of the time domain mask in a second time domain outside the first time domain corresponds to a second value, the first time domain sequentially comprises a third time domain, a fourth time domain, and a fifth time domain in a time sequence, an upper boundary of the time domain mask in the third time domain corresponds to a third value, a value corresponding to an upper boundary of the time domain mask in the fourth time domain is 1, an upper boundary of the time domain mask in the fifth time domain corresponds to the third value, a value range of the first value is [-0.2, -0.001], a value range of the second value is [0.001, 0.2], and the third value is less than 1; and
sending the transmit signal.

17. The method according to claim 16, wherein a value range of a length of the first time domain is [1.25, 1.75].

18. The method according to claim 16 or 17, wherein a value range of a length of the fourth time domain is [0.45, 1.2].

19. The method according to any one of claims 16 to 18, wherein a value range of the third value is [0.1, 0.9], and the third value is greater than the second value.

20. The method according to any one of claims 16 to 19, wherein coordinates of a junction point between the first time domain and the second time domain on the time domain mask are any one of the following: (1.37, 0.3), (1.4, 0.3), (1.42, 0.3), (1.45, 0.3), and (1.47, 0.3).

21. The method according to any one of claims 16 to 20, wherein coordinates of a junction point between the fourth time domain and the fifth time domain on the time domain mask are any one of the following: (0.88, 0.3), (0.85, 0.3), (0.83, 0.3), (0.8, 0.3), and (0.78, 0.3).

22. The method according to any one of claims 16 to 21, wherein the first value and the second value are opposite numbers of each other.

23. The method according to any one of claims 16 to 22, wherein the pulse shape of the transmit signal is a Gaussian pulse shape or a Caesar pulse shape.

24. A communication method, comprising:

receiving a transmit signal, wherein the transmit signal is compliant with a time domain mask, a lower boundary of the time domain mask corresponds to a first value, the time domain mask is an axisymmetric pattern in a first time domain, an upper boundary of the time domain mask in a second time domain outside the first time domain corresponds to a second value, the first time domain sequentially comprises a third time domain, a fourth time domain, and a fifth time domain in a time sequence, an upper boundary of the time domain mask in the third time domain corresponds to a third value, a value corresponding to an upper boundary of the time domain mask in the fourth time domain is 1, an upper boundary of the time domain mask in the fifth time domain corresponds to the third value, a value range of the first value is [-0.2, -0.001], a value range of the second value is [0.001, 0.2], and the third value is less than 1; and
performing signal processing based on the transmit signal.

25. The method according to claim 24, wherein a value range of a length of the first time domain is [1.25, 1.75].

26. The method according to claim 24 or 25, wherein a value range of a length of the fourth time domain is [0.45, 1.2].

27. The method according to any one of claims 24 to 26, wherein a value range of the third value is [0.1, 0.9], and the third value is greater than the second value.

28. The method according to any one of claims 24 to 27, wherein coordinates of a junction point between the first time domain and the second time domain on the time domain mask are any one of the following: (1.37, 0.3), (1.4, 0.3), (1.42, 0.3), (1.45, 0.3), and (1.47, 0.3).

29. The method according to any one of claims 24 to 28, wherein coordinates of a junction point between the fourth time domain and the fifth time domain on the time domain mask are any one of the following: (0.88, 0.3), (0.85, 0.3), (0.83, 0.3), (0.8, 0.3), and (0.78, 0.3).

30. The method according to any one of claims 24 to 29, wherein the first value and the second value are opposite numbers of each other.

31. The method according to any one of claims 24 to 30, wherein a pulse shape of the transmit signal is a Gaussian pulse shape or a Caesar pulse shape.

32. A communication apparatus, comprising a module or a unit configured to implement the method according to any one of claims 16 to 23.

33. A communication apparatus, comprising a module or a unit configured to implement the method according to any one of claims 24 to 31.

34. A computer-readable storage medium, wherein the computer-readable storage medium stores a computer program, the computer program comprises program instructions, and when the program instructions are executed, a computer is enabled to perform the method according to any one of claims 16 to 23, or when the program instructions are executed, a computer is enabled to perform the method according to any one of claims 24 to 31.

35. A communication apparatus, comprising a processor, wherein the processor is configured to: when executing instructions, enable the communication apparatus to perform the method according to any one of claims 16 to 23, or enable the communication apparatus to perform the method according to any one of claims 24 to 31.

36. A chip, comprising:

   a communication interface, configured to receive/send a signal of the chip; and
   a processor, configured to execute computer program instructions, to enable a communication apparatus that comprises the chip to perform the method according to any one of claims 16 to 31.

Time (ns)          Time (ns)          $\tau$ (ns)

FIG. 1

Power spectral density (dB)

FIG. 2

FIG. 3

FIG. 4A

FIG. 4B

FIG. 4C

FIG. 4D

FIG. 4E

FIG. 5

FIG. 6A

FIG. 6B

FIG. 7A

Transmitter

Receiver

*Transmitted signal*

*Reflected signal*

Target

FIG. 7B

Receiver 1

*Reflected signal 1*

Transmitter

Transmitted
signal

*Reflected signal 2*

Receiver 2

FIG. 7C

FIG. 8A

FIG. 8B

FIG. 8C

FIG. 9A

FIG. 9B

FIG. 9C

FIG. 9D

FIG. 9E

FIG. 9F

FIG. 9G

FIG. 9H

FIG. 9I

FIG. 9J

FIG. 9K

FIG. 9L

FIG. 9M

FIG. 9N

FIG. 9O

FIG. 9P

FIG. 10

| Transmit end | | Receive end |
|---|---|---|

Indication information 1101

Transmit signal 1102

1103

Perform interference cancellation on the transmit signal from the transmit end based on the indication information

1104

Perform signal processing based on the transmit signal from the transmit end

FIG. 11

1200

1210

1220

| Processing module | Transceiver module |
|---|---|

Communication apparatus

FIG. 12

Communication apparatus 130

1320

Transceiver

Radio frequency
circuit

Antenna

1310

Processor

1340

1330

Memory

FIG. 13

1402

Interface

1401

Logic circuit

Communication
apparatus 140

FIG. 14

FIG. 15

FIG. 16A

FIG. 16B

FIG. 17A

FIG. 17B

FIG. 17C

FIG. 17D

FIG. 17E

FIG. 17F

FIG. 17G

FIG. 17H

FIG. 17I

FIG. 17J

FIG. 17K

EP 4 539 362 A1

FIG. 17L

FIG. 17M

71

FIG. 17N

FIG. 17O

FIG. 17P

FIG. 17Q

FIG. 17R

FIG. 17S

FIG. 17T

FIG. 17U

FIG. 17V

FIG. 17W

FIG. 17X

FIG. 17Y

FIG. 17Z

FIG. 18A

FIG. 18B

FIG. 18C

FIG. 18D

FIG. 18E

FIG. 18F

FIG. 18G

FIG. 18H

FIG. 18I

FIG. 18J

FIG. 18K

FIG. 18L

FIG. 19

FIG. 20

FIG. 21A

FIG. 21B

FIG. 21C

FIG. 21D

FIG. 21E

FIG. 21F

FIG. 21G

FIG. 21H

FIG. 21I

<div align="center">

**INTERNATIONAL SEARCH REPORT**

</div>

| International application No. |
| --- |
| **PCT/CN2023/105859** |

**A.    CLASSIFICATION OF SUBJECT MATTER**

H04B 17/382(2015.01)i;  H04L25/49(2006.01)i

According to International Patent Classification (IPC) or to both national classification and IPC

**B.    FIELDS SEARCHED**

Minimum documentation searched (classification system followed by classification symbols)

IPC:H04B,H04L

Documentation searched other than minimum documentation to the extent that such documents are included in the fields searched

Electronic data base consulted during the international search (name of data base and, where practicable, search terms used)

CNABS; CNTXT; CNKI; ENTXTC; VEN; IEEE: 超宽带, 第一旁瓣, 范围, 上限, 边界, 峰值, 调整, 调节, 高斯波形, 凯撒波形, 模板, 取值范围, 生成, 时域, UWB, scope, adjust+, shape?, pulse signal, desired characteristic, target, bandwidth, model, Gaussian waveform

**C.    DOCUMENTS CONSIDERED TO BE RELEVANT**

| Category* | Citation of document, with indication, where appropriate, of the relevant passages | Relevant to claim No. |
| --- | --- | --- |
| X | CN 1754362 A (YOKOHAMA TLO COMPANY, LTD. et al.) 29 March 2006 (2006-03-29) description, pages 5-6 and 10-22 | 1-36 |
| A | CN 101388872 A (HUAWEI TECHNOLOGIES CO., LTD. et al.) 18 March 2009 (2009-03-18) entire document | 1-36 |
| A | US 2003053555 A1 (XTREME SPECTRUM, INC.) 20 March 2003 (2003-03-20) entire document | 1-36 |
| A | WO 2009066985 A2 (MIMOS BERHAD et al.) 28 May 2009 (2009-05-28) entire document | 1-36 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **08 October 2023** | **11 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="2" align="center"><b>INTERNATIONAL SEARCH REPORT</b><br>Information on patent family members</td><td colspan="2">International application No.<br><br><b>PCT/CN2023/105859</b></td></tr>
</table>

| Patent document cited in search report | | | Publication date (day/month/year) | Patent family member(s) | | | Publication date (day/month/year) |
|---|---|---|---|---|---|---|---|
| CN | 1754362 | A | 29 March 2006 | WO | 2004077775 | A1 | 10 September 2004 |
| | | | | CA | 2646794 | A1 | 10 September 2004 |
| | | | | AU | 2003289107 | A1 | 17 September 2004 |
| | | | | EP | 1599001 | A1 | 23 November 2005 |
| | | | | KR | 20050111602 | A | 25 November 2005 |
| | | | | JP | 3785542 | B2 | 14 June 2006 |
| | | | | US | 2006140249 | A1 | 29 June 2006 |
| | | | | CN | 102801443 | A | 28 November 2012 |
| | | | | CA | 2658961 | A1 | 10 September 2004 |
| CN | 101388872 | A | 18 March 2009 | | None | | |
| US | 2003053555 | A1 | 20 March 2003 | US | 2003053554 | A1 | 20 March 2003 |
| | | | | US | 2005259720 | A1 | 24 November 2005 |
| WO | 2009066985 | A2 | 28 May 2009 | MY | 164860 | A | 30 January 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210789946
- CN 202211415670

- CN 202211510585